(19) Europäisches Patentamt
European Patent Office
Office européen des brevets

(11) **EP 4 538 978 A1**

(12) **EUROPEAN PATENT APPLICATION**
published in accordance with Art. 153(4) EPC

(43) Date of publication:
**16.04.2025 Bulletin 2025/16**

(21) Application number: **23834527.6**

(22) Date of filing: **22.05.2023**

(51) International Patent Classification (IPC):
***G06T 9/00*** *(2006.01)*

(52) Cooperative Patent Classification (CPC):
**G06T 9/00**

(86) International application number:
**PCT/CN2023/095601**

(87) International publication number:
**WO 2024/007753 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.07.2022 CN 202210796212**

(71) Applicant: **Huawei Technologies Co., Ltd.
Shenzhen, Guangdong 518129 (CN)**

(72) Inventors:
• **MAO, Jue**
**Shenzhen, Guangdong 518129 (CN)**
• **YU, Dequan**
**Shenzhen, Guangdong 518129 (CN)**
• **QIAN, Sheng**
**Shenzhen, Guangdong 518129 (CN)**
• **ZHAO, Yin**
**Shenzhen, Guangdong 518129 (CN)**

(74) Representative: **Maiwald GmbH
Engineering
Elisenhof
Elisenstrasse 3
80335 München (DE)**

(54) **ENCODING METHOD, DECODING METHOD, AND ELECTRONIC DEVICE**

(57)      Embodiments of this application provide an encoding and decoding method and an electronic device. The encoding method includes: obtaining a to-be-encoded image; generating feature maps of C channels based on the to-be-encoded image, where the features map include feature values of a plurality of feature points; generating estimated information matrices of the C channels based on the feature maps of the C channels; grouping the C channels into N channel groups; for at least one target channel group in the N channel groups, determining, based on at least one feature value of at least one encoded feature point corresponding to the target channel group and an estimated information matrix corresponding to the target channel group, at least one probability distribution parameter corresponding to a to-be-encoded feature point corresponding to the target channel group; determining, based on the at least one probability distribution parameter corresponding to the to-be-encoded feature point, probability distribution corresponding to the to-be-encoded feature point; and encoding the to-be-encoded feature point based on the probability distribution corresponding to the to-be-encoded feature point. In this way, the at least one probability distribution parameter is determined based on information about a part of channels, so that encoding efficiency can be improved.

EP 4 538 978 A1

S201

To-be-encoded image

S202

Feature maps of C channels

Feature map of a channel 1

Feature map of a channel 2

...

Feature map of a channel k

Feature map of a channel c1

...

Feature map of a channel ck

...

Feature map of a channel C–1

Feature map of a channel C

S204

Channel group 1

Channel group 2

...

Channel group N

Estimated information matrix of the channel 1

Estimated information matrix of the channel 2

...

Estimated information matrix of the channel k

Estimated information matrix of the channel c1

...

Estimated information matrix of the channel ck

...

Estimated information matrix of the channel C–1

Estimated information matrix of the channel C

Estimated information matrices of the C channels

S203

S207

Encoding

S206

Probability distribution

S205

Probability distribution parameters

Probability distribution parameter corresponding to a to-be-encoded feature point corresponding to the channel group 1

Probability distribution parameter corresponding to a to-be-encoded feature point corresponding to the channel group 2

...

Probability distribution parameter corresponding to a to-be-encoded feature point corresponding to the channel group N

FIG. 2

## Description

This application claims priority to Chinese Patent Application No. 202210796212.X, filed with the China National Intellectual Property Administration on July 7, 2022 and entitled "ENCODING AND DECODING METHOD AND ELECTRONIC DEVICE", which is incorporated herein by reference in its entirety.

## TECHNICAL FIELD

Embodiments of this application relate to the field of encoding and decoding, and in particular, to an encoding and decoding method and an electronic device.

## BACKGROUND

An AI (Artificial Intelligence, artificial intelligence) image compression algorithm is implemented based on deep learning, and has better compression effect than conventional image compression technologies (for example, JPEG (Joint Photographic Experts Group, Joint Photographic Experts Group) and BPG (Better Portable Graphics, Better Portable Graphics)). A process of compressing an image according to the AI image compression algorithm is: predicting at least one probability distribution parameter corresponding to a to-be-encoded point/to-be-decoded point, then determining probability distribution based on the at least one probability distribution parameter, and next performing entropy encoding on the to-be-encoded point/to-be-decoded point based on the probability distribution, to obtain a bitstream.

In the conventional technology, generally, feature values of encoded points/decoded points of all channels are first fused, to calculate a context feature of a to-be-encoded point/to-be-decoded point of a channel, and then a multi-layer convolution is performed on the context feature and a hyperprior feature of the to-be-encoded point/to-be-decoded point, to determine at least one probability distribution parameter corresponding to the to-be-encoded point/to-be-decoded point. However, fusion of data of all the channels and multiple convolutions require a large calculation amount and takes a long time, affecting encoding and decoding efficiency.

## SUMMARY

This application provides an encoding and decoding method and an electronic device, to resolve the foregoing technical problem. The encoding and decoding method can improve encoding and decoding efficiency.

According to a first aspect, an embodiment of this application provides an encoding method. The method includes: first obtaining a to-be-encoded image; then generating feature maps of C channels based on the to-be-encoded image, where the feature maps include feature values of a plurality of feature points, and C is a positive integer; generating estimated information matrices of the C channels based on the feature maps of the C channels; then grouping the C channels into N channel groups, where N is an integer greater than 1, each channel group includes k channels, the numbers of channels, k, included in any two channel groups are the same or different, and k is a positive integer; then, for at least one target channel group in the N channel groups, determining, based on at least one feature value of at least one encoded feature point corresponding to the target channel group and an estimated information matrix corresponding to the target channel group, at least one probability distribution parameter corresponding to a to-be-encoded feature point corresponding to the target channel group; then determining, based on the at least one probability distribution parameter corresponding to the to-be-encoded feature point, probability distribution corresponding to the to-be-encoded feature point; and then encoding the to-be-encoded feature point based on the probability distribution corresponding to the to-be-encoded feature point.

Compared with the conventional technology in which at least one probability distribution parameter is determined based on feature values of encoded feature points of all channels and estimated information matrices of all the channels, in this application, the at least one probability distribution parameter corresponding to the to-be-encoded feature point needs to be determined only based on at least one feature value of at least one encoded feature point in a feature map of a part of channels and an estimated information matrix of the part of channels. This can reduce computing power for encoding, and improve encoding efficiency.

In addition, compared with the conventional technology in which a context feature needs to be generated based on the at least one feature value of the at least one encoded feature point, and then the at least one probability distribution parameter is determined based on the context feature and the estimated information matrix, in this application, no context feature needs to be generated. This further reduces computing power for encoding, and improves encoding efficiency.

In addition, a correlation between feature maps of channels is low, to store a larger amount of information during compression. Therefore, in this application, introduction of invalid information can be reduced, and encoding performance can be improved.

For example, a feature map of each channel $\in R^{H*W}$, where "H" represents a height of the feature map of each channel, and "W" represents a width of the feature map of each channel. The feature map of each channel may include feature values of H*W feature points.

For example, an estimated information matrix of each channel $\in R^{H*W}$, and may include estimated information of H*W feature points.

For example, the estimated information may be information used to estimate a probability distribution parameter, and may include a feature and/or the probability distribution parameter. This is not limited in this application.

For example, k=1.

According to the first aspect, the determining, based on at least one feature value of at least one encoded feature point corresponding to the target channel group and an estimated information matrix corresponding to the target channel group, at least one probability distribution parameter corresponding to a to-be-encoded feature point corresponding to the target channel group includes: performing linear weighting on the at least one feature value of the at least one encoded feature point corresponding to the target channel group and the estimated information matrix corresponding to the target channel group, to determine the at least one probability distribution parameter corresponding to the to-be-encoded feature point corresponding to the target channel group. Therefore, a calculation amount for determining the at least one probability distribution parameter may be reduced from original tens of thousands of multiply-accumulate calculations to at least several multiply-accumulate calculations and at most hundreds of multiply-accumulate calculations. This greatly reduces the calculation amount.

According to any one of the first aspect or the foregoing implementations of the first aspect, the estimated information matrix includes estimated information of a plurality of feature points. The performing linear weighting on the at least one feature value of the at least one encoded feature point corresponding to the target channel group and the estimated information matrix corresponding to the target channel group, to determine the at least one probability distribution parameter corresponding to the to-be-encoded feature point corresponding to the target channel group includes: determining, based on the to-be-encoded feature point, a first target region in a feature map corresponding to the target channel group and a second target region in the estimated information matrix corresponding to the target channel group; and performing linear weighting on at least one feature value of at least one encoded feature point in the first target region and estimated information of at least one feature point in the second target region, to obtain the at least one probability distribution parameter corresponding to the to-be-encoded feature point corresponding to the target channel group. Therefore, linear weighting is performed only based on a feature value of a part of encoded feature points in the feature map and estimated information of a feature point at a part of locations in the estimated information matrix. This can reduce computing power for determining the at least one probability distribution parameter, and improve encoding efficiency.

For example, the at least one probability distribution parameter may include at least one first probability distribution parameter and/or at least one second probability distribution parameter.

For example, the first probability distribution parameter is a mean (mean), and the second probability distribution parameter is a difference (scale).

According to any one of the first aspect or the foregoing implementations of the first aspect, when k is greater than 1, the determining, based on the to-be-encoded feature point, a first target region in a feature map corresponding to the target channel group and a second target region in the estimated information matrix corresponding to the target channel group includes: determining, as first target regions, a region of a preset size that is centered on the to-be-encoded feature point in a feature map of a first channel and a region of a preset size that is centered on a feature point corresponding to a location of the to-be-encoded feature point in a feature map of a second channel, where the first channel corresponds to the to-be-encoded feature point, and the second channel is a channel other than the first channel in the target channel group; and determining, as second target regions, a region of a preset size that is centered on a to-be-encoded location in an estimated information matrix of the first channel, and a region of a preset size that is centered on a location corresponding to the to-be-encoded location in an estimated information matrix of the second channel, where the to-be-encoded location is the location of the to-be-encoded feature point. Therefore, the probability distribution parameter is calculated based on the at least one feature value of the at least one encoded feature point around the to-be-encoded feature point and the estimated information of the surrounding feature point, so that the calculated probability distribution parameter can be more accurate, and encoding quality is further improved.

For example, a preset size may be a size of a linear weighting window, and may be ks1*ks2, where ks1 and ks2 are integers greater than 1, and ks1 and ks2 may be equal or unequal, and may be specifically set based on a requirement. This is not limited in this application.

According to any one of the first aspect or the foregoing implementations of the first aspect, the performing linear weighting on at least one feature value of at least one encoded feature point in the first target region and estimated information of at least one feature point in the second target region, to obtain the at least one probability distribution parameter corresponding to the to-be-encoded feature point corresponding to the target channel group includes: determining a first target location based on a location other than an encoded location in the second target region, where the encoded location is at least one location of the at least one encoded feature point; and performing linear weighting on the at least one feature value of the at least one encoded feature point in the first target region and estimated information of a feature point corresponding to the first target location, to obtain the at least one probability distribution parameter corresponding to the to-be-encoded feature point corresponding to the target channel group. Therefore, linear weighting is performed only based on estimated information of a feature point at a part of locations in the second target region, so that a number of feature points for linear weighting can be reduced. This can reduce computing power, and improve encoding efficiency.

According to any one of the first aspect or the foregoing implementations of the first aspect, when k is greater than 1, the determining a first target location based on a location other than an encoded location in the second target region includes: determining, as first target locations, the to-be-encoded location and at least one other unencoded location in the second target region in the estimated information matrix of the first channel, and the location corresponding to the to-be-encoded location and at least one other unencoded location in the second target region in the estimated information matrix of the second channel, where the first channel corresponds to the to-be-encoded feature point, and the second channel is the channel other than the first channel in the target channel group. When linear weighting is performed only based on a part of other unencoded locations, a number of feature points for linear weighting can be reduced. This can reduce computing power, and improve encoding efficiency.

According to any one of the first aspect or the foregoing implementations of the first aspect, when k is greater than 1, the determining a first target location based on a location other than an encoded location in the second target region includes: determining, as first target locations, the to-be-encoded location in the second target region in the estimated information matrix of the first channel and the location corresponding to the to-be-encoded location in the second target region in the estimated information matrix of the second channel, where the first channel corresponds to the to-be-encoded feature point, and the second channel is the channel other than the first channel in the target channel group. Therefore, a number of feature points for linear weighting can be reduced. This can further reduce the calculation amount for the probability distribution parameter, and improve encoding efficiency.

According to any one of the first aspect or the foregoing implementations of the first aspect, the performing linear weighting on the at least one feature value of the at least one encoded feature point in the first target region and a first feature of a feature point corresponding to the first target location, to obtain at least one first probability distribution parameter corresponding to the to-be-encoded feature point corresponding to the target channel group includes: obtaining a preset weight matrix corresponding to the first channel corresponding to the to-be-encoded feature point, where the preset weight matrix includes weight maps of the k channels, and a size of the weight map is the same as a size of the first target region; and performing, based on the weight maps of the k channels, linear weighting on the at least one feature value of the at least one encoded feature point in the first target region and the first feature of the feature point corresponding to the first target location, to obtain the at least one first probability distribution parameter corresponding to the to-be-encoded feature point corresponding to the target channel group. Different channels correspond to different preset weight matrices. Therefore, different probability distribution parameters may be obtained for to-be-encoded feature points of the different channels.

According to any one of the first aspect or the foregoing implementations of the first aspect, the estimated information matrices of the C channels include first feature matrices of the C channels and second feature matrices of the C channels, the first feature matrix includes first features of a plurality of feature points, the second feature matrix includes second features of a plurality of feature points, and the at least one probability distribution parameter includes at least one first probability distribution parameter and at least one second probability distribution parameter. The determining, based on at least one feature value of at least one encoded feature point corresponding to the target channel group and an estimated information matrix corresponding to the target channel group, at least one probability distribution parameter corresponding to a to-be-encoded feature point corresponding to the target channel group includes: determining, based on the at least one feature value of the at least one encoded feature point corresponding to the target channel group, and a first feature matrix corresponding to the target channel group, at least one first probability distribution parameter corresponding to the to-be-encoded feature point corresponding to the target channel group; and determining, based on the at least one feature value of the at least one encoded feature point corresponding to the target channel group and a second feature matrix corresponding to the target channel group, at least one second probability distribution parameter corresponding to the to-be-encoded feature point corresponding to the target channel group. The first feature matrices of the C channels may be used to determine first probability distribution parameters, and the second feature matrices of the C channels may be used to determine second probability distribution parameters. Therefore, both the first probability distribution parameter and the second probability distribution parameter can be corrected, so that an obtained probability distribution parameter is more accurate. This improves accuracy of the determined probability distribution.

According to any one of the first aspect or the foregoing implementations of the first aspect, the estimated information matrices of the C channels include first feature matrices of the C channels and second probability distribution parameter matrices of the C channels, the first feature matrix includes first features of a plurality of feature points, the second probability distribution parameter matrix includes second probability distribution parameters of a plurality of feature points, and the at least one probability distribution parameter includes at least one first probability distribution parameter. The determining, based on at least one feature value of at least one encoded feature point corresponding to the target channel group and an estimated information matrix corresponding to the target channel group, at least one probability distribution parameter corresponding to a to-be-encoded feature point corresponding to the target channel group includes: determining, based on the at least one feature value of the at least one encoded feature point corresponding to the target channel group, and a first feature matrix corresponding to the target channel group, at least one first probability distribution parameter corresponding to the to-be-encoded feature point corresponding to the target channel group. The determining, based on the at least one probability distribution parameter corresponding to the to-be-encoded feature point, probability distribution corresponding to the to-be-encoded feature point includes: determining, based on a second probability distribution parameter matrix corresponding to the target channel group, at least one second probability distribution parameter corresponding to the to-be-encoded feature point corresponding to the target channel group; and determining, based on the at least one first probability distribution parameter and the at least one second probability distribution parameter that correspond to the to-be-encoded feature point, the probability distribution corresponding to the to-be-encoded feature point. Therefore, the first probability distribution parameter can be corrected, so that an obtained first probability distribution parameter is more accurate. This improves accuracy of the determined probability distribution.

According to any one of the first aspect or the foregoing implementations of the first aspect, the estimated information matrices of the C channels include first probability distribution parameter matrices of the C channels and second feature matrices of the C channels, the first probability distribution parameter matrix includes first probability distribution parameters of a plurality of feature points, the second feature matrix includes second features of a plurality of feature points, and the at least one probability distribution parameter includes at least one second probability distribution parameter. The determining, based on at least one feature value of at least one encoded feature point corresponding to the target channel group and an estimated information matrix corresponding to the target channel group, at least one probability distribution parameter corresponding to a to-be-encoded feature point corresponding to the target channel group includes: determining, based on the at least one feature value of the at least one encoded feature point corresponding to the target channel group and a second feature matrix corresponding to the target channel group, at least one second probability distribution parameter corresponding to the to-be-encoded feature point corresponding to the target channel group. The determining, based on the at least one probability distribution parameter corresponding to the to-be-encoded feature point, probability distribution corresponding to the to-be-encoded feature point includes: determining, based on at least one first probability distribution parameter matrix corresponding to the target channel group, at least one first probability distribution parameter corresponding to the to-be-encoded feature point corresponding to the target channel group; and determining, based on the at least one first probability distribution parameter and the at least one second probability distribution parameter that correspond to the to-be-encoded feature point, the probability distribution corresponding to the to-be-encoded feature point. Therefore, the second probability distribution parameter can be corrected, so that an obtained second probability distribution parameter is more accurate. This improves accuracy of the determined probability distribution.

It should be understood that, other estimated information matrices of the C channels may be further generated based on the feature maps of the C channels, and then, the at least one probability distribution parameter corresponding to the to-be-encoded feature point corresponding to the target channel group is determined based on the at least one feature value of the at least one encoded feature point corresponding to the target channel group, the estimated information matrix corresponding to the target channel group, and another estimated information matrix corresponding to the target channel group.

According to any one of the first aspect or the foregoing implementations of the first aspect, the determining, based on the at least one feature value of the at least one encoded feature point corresponding to the target channel group and a second feature matrix corresponding to the target channel group, at least one second probability distribution parameter corresponding to the to-be-encoded feature point corresponding to the target channel group includes: determining, based on the to-be-encoded feature point, a first target region in a feature map corresponding to the target channel group, and a third target region in the second feature matrix corresponding to the target channel group; determining, based on at least one feature value of at least one encoded feature point in the first target region and at least one corresponding first probability distribution parameter, at least one difference corresponding to the at least one encoded feature point in the first target region; and performing linear weighting on a second feature of at least one feature point in the third target region and the at least one difference corresponding to the at least one encoded feature point in the first target region, to obtain the at least one second probability distribution parameter corresponding to the to-be-encoded feature point corresponding to the target channel group. Therefore, the second probability distribution parameter can be accurately calculated.

For example, the first probability distribution parameter is a mean (mean), and the second probability distribution parameter is a variance (scale).

For example, the at least one first probability distribution parameter corresponding to the at least one encoded feature point may be obtained by first performing linear weighting on the at least one feature value of the at least one encoded feature point in the first target region and the first feature of the feature point corresponding to the first target location.

For example, when the estimated information matrix includes the first probability distribution parameter matrix and the second feature matrix, the at least one second probability distribution parameter may also be determined in this manner. The at least one first probability distribution parameter corresponding to the encoded feature point may be determined based on the first probability distribution parameter matrix.

For example, a manner of determining, based on the at least one feature value of the at least one encoded feature point in the first target region and the at least one corresponding first probability distribution parameter, the at least one difference corresponding to the at least one encoded feature point in the first target region may be determining at least one difference between the at least one feature value of the at least one encoded feature point in the first target region and the at least one corresponding first probability distribution parameter as the at least one difference corresponding to the at least one encoded feature point in the first target region.

For example, a manner of determining, based on the at least one feature value of the at least one encoded feature point in the first target region and the at least one corresponding first probability distribution parameter, the at least one difference corresponding to the at least one encoded feature point in the first target region may be determining at least one absolute value of at least one difference between the at least one feature value of the at least one encoded feature point in the first target region and the at least one corresponding first probability distribution parameter as the at least one difference corresponding to the at least one encoded feature point in the first target region.

For example, a manner of determining, based on the at least one feature value of the at least one encoded feature point in the first target region and the at least one corresponding first probability distribution parameter, the at least one difference corresponding to the at least one encoded feature point in the first target region may be determining a square of a difference between the at least one feature value of the at least one encoded feature point in the first target region and the at least one corresponding first probability distribution parameter as the at least one difference corresponding to the at least one encoded feature point in the first target region.

According to a second aspect, an embodiment of this application provides a decoding method. The method includes: first receiving a bitstream; then decoding the bitstream to obtain estimated information matrices of C channels, where C is a positive integer; then decoding the bitstream to obtain feature values of feature points of the C channels based on the estimated information matrices of the C channels, to obtain feature maps of the C channels; for a to-be-decoded feature point, determining, from N channel groups obtained by grouping the C channels, a target channel group to which a channel corresponding to the to-be-decoded feature point belongs, where each channel group includes k channels, the numbers of channels, k, included in any two channel groups are the same or different, k is a positive integer, and N is an integer greater than 1; determining, based on at least one feature value of at least one decoded feature point corresponding to the target channel group and an estimated information matrix corresponding to the target channel group, a at least one probability distribution parameter corresponding to the to-be-decoded feature point; determining, based on the at least one probability distribution parameter corresponding to the to-be-decoded feature point, probability distribution corresponding to the to-be-decoded feature point; decoding the to-be-decoded feature point based on the probability distribution corresponding to the to-be-decoded feature point, to obtain a feature value; and performing reconstruction based on the feature maps of the C channels, to output a reconstructed image.

Compared with the conventional technology in which a probability distribution parameter is determined based on feature values of decoded feature points of all channels and estimated information matrices of all the channels, in this application, the at least one probability distribution parameter corresponding to the to-be-decoded feature point needs to be determined only based on at least one feature value of at least one decoded feature point in a feature map of a part of channels and an estimated information matrix of the part of channels. This can reduce computing power for decoding, and improve decoding efficiency.

In addition, compared with the conventional technology in which a context feature needs to be generated based on the at least one feature value of the at least one decoded feature point, and then the probability distribution parameter is determined based on the context feature and the estimated information matrix, in this application, no context feature needs to be generated. This further reduces computing power for decoding, and improves decoding efficiency.

According to the second aspect, the determining, based on at least one feature value of at least one decoded feature point corresponding to the target channel group and an estimated information matrix corresponding to the target channel group, at least one probability distribution parameter corresponding to the to-be-decoded feature point includes: performing linear weighting on the at least one feature value of the at least one decoded feature point corresponding to the target channel group and the estimated information matrix corresponding to the target channel group, to determine the at least one probability distribution parameter corresponding to the to-be-decoded feature point.

According to any one of the second aspect or the foregoing implementations of the second aspect, the estimated information matrix includes estimated information of a plurality of feature points. The performing linear weighting on the at least one feature value of the at least one decoded feature point corresponding to the target channel group and the estimated information matrix corresponding to the target channel group, to determine the at least one probability distribution parameter corresponding to the to-be-decoded feature point includes: determining, based on the to-be-decoded feature point, a first target region in a feature map corresponding to the target channel group and a second target region in the estimated information matrix corresponding to the target channel group; and performing linear weighting on at least one feature value of at least one decoded feature point in the first target region and estimated information of at least one feature point in the second target region, to obtain the at least one probability distribution parameter corresponding to the to-be-decoded feature point.

According to any one of the second aspect or the foregoing implementations of the second aspect, when k is greater than 1, the determining, based on the to-be-decoded feature point, a first target region in a feature map corresponding to the target channel group and a second target region in the estimated information matrix corresponding to the target channel group includes:

determining, as first target regions, a region of a preset size that is centered on the to-be-decoded feature point in a feature map of a first channel and a region of a preset size that is centered on a feature point corresponding to a location of the to-be-decoded feature point in a feature map of a second channel, where the first channel corresponds to the to-be-decoded feature point, and the second channel is a channel other than the first channel in the target channel group; and determining, as second target regions, a region of a preset size that is centered on a to-be-decoded location in an estimated information matrix of the first channel, and a region of a preset size that is centered on a location corresponding to the to-be-decoded location in an estimated information matrix of the second channel, where the to-be-decoded location is the location of the to-be-decoded feature point.

According to any one of the second aspect or the foregoing implementations of the second aspect, the performing linear weighting on at least one feature value of at least one decoded feature point in the first target region and estimated information of at least one feature point in the second target region, to obtain the at least one probability distribution parameter corresponding to the to-be-decoded feature point includes: determining a first target location based on a location other than a decoded location in the second target region, where the decoded location is at least one location of the at least one decoded feature point; and performing linear weighting on the at least one feature value of the at least one decoded feature point in the first target region and estimated information of a feature point corresponding to the first target location, to obtain the at least one probability distribution parameter corresponding to the to-be-decoded feature point.

According to any one of the second aspect or the foregoing implementations of the second aspect, when k is greater than 1, the determining a first target location based on a location other than a decoded location in the second target region includes: determining, as first target locations, the to-be-decoded location and at least one other undecoded location in the second target region in the estimated information matrix of the first channel, and the location corresponding to the to-be-decoded location and at least one other undecoded location in the second target region in the estimated information matrix of the second channel, where the first channel corresponds to the to-be-decoded feature point, and the second channel is the channel other than the first channel in the target channel group.

According to any one of the second aspect or the foregoing implementations of the second aspect, when k is greater than 1, the determining a first target location based on a location other than a decoded location in the second target region includes: determining, as first target locations, the to-be-decoded location in the second target region in the estimated information matrix of the first channel and the location corresponding to the to-be-decoded location in the second target region in the estimated information matrix of the second channel, where the first channel corresponds to the to-be-decoded feature point, and the second channel is the channel other than the first channel in the target channel group.

According to any one of the second aspect or the foregoing implementations of the second aspect, the performing linear weighting on the at least one feature value of the at least one decoded feature point in the first target region and estimated information of a feature point corresponding to the first target location, to obtain the at least one probability distribution parameter corresponding to the to-be-decoded feature point includes: obtaining a preset weight matrix corresponding to the first channel corresponding to the to-be-decoded feature point, where the preset weight matrix includes weight maps of the k channels; and performing, based on the weight maps of the k channels, linear weighting on the at least one feature value of the at least one decoded feature point in the first target region and the estimated information of the feature point corresponding to the first target location, to obtain the at least one probability distribution parameter corresponding to the to-be-decoded feature point.

According to any one of the second aspect or the foregoing implementations of the second aspect, the estimated information matrices of the C channels include first feature matrices of the C channels and second feature matrices of the C channels, the first feature matrix includes first features of a plurality of feature points, the second feature matrix includes second features of a plurality of feature points, and the at least one probability distribution parameter includes at least one first probability distribution parameter and at least one second probability distribution parameter. The determining, based on at least one feature value of at least one decoded feature point corresponding to the target channel group and an estimated information matrix corresponding to the target channel group, at least one probability distribution parameter corresponding to the to-be-decoded feature point includes: determining, based on the at least one feature value of the at least one decoded feature point corresponding to the target channel group, and a first feature matrix corresponding to the target channel group, at least one first probability distribution parameter corresponding to the to-be-decoded feature point;

and determining, based on the at least one feature value of the at least one decoded feature point corresponding to the target channel group and a second feature matrix corresponding to the target channel group, at least one second probability distribution parameter corresponding to the to-be-decoded feature point.

According to any one of the second aspect or the foregoing implementations of the second aspect, the estimated information matrices of the C channels include first feature matrices of the C channels and second probability distribution parameter matrices of the C channels, the first feature matrix includes first features of a plurality of feature points, the second probability distribution parameter matrix includes second probability distribution parameters of a plurality of feature points, and the at least one probability distribution parameter includes at least one first probability distribution parameter. The determining, based on at least one feature value of at least one decoded feature point corresponding to the target channel group and an estimated information matrix corresponding to the target channel group, at least one probability distribution parameter corresponding to the to-be-decoded feature point includes: determining, based on the at least one feature value of the at least one decoded feature point corresponding to the target channel group, and a first feature matrix corresponding to the target channel group, at least one first probability distribution parameter corresponding to the to-be-decoded feature point. The determining, based on the at least one probability distribution parameter corresponding to the to-be-decoded feature point, probability distribution corresponding to the to-be-decoded feature point includes: determining, based on at least one second probability distribution parameter matrix corresponding to the target channel group, at least one second probability distribution parameter of the to-be-decoded feature point; and determining, based on the at least one first probability distribution parameter and the at least one second probability distribution parameter that correspond to the to-be-decoded feature point, the probability distribution corresponding to the to-be-decoded feature point.

According to any one of the second aspect or the foregoing implementations of the second aspect, the estimated information matrices of the C channels include first probability distribution parameter matrices of the C channels and second feature matrices of the C channels, the first probability distribution parameter matrix includes first probability distribution parameters of a plurality of feature points, the second feature matrix includes second features of a plurality of feature points, and the at least one probability distribution parameter includes at least one second probability distribution parameter. The determining, based on at least one feature value of at least one decoded feature point corresponding to the target channel group and an estimated information matrix corresponding to the target channel group, at least one probability distribution parameter corresponding to the to-be-decoded feature point includes: determining, based on the at least one feature value of the at least one decoded feature point corresponding to the target channel group and a second feature matrix corresponding to the target channel group, at least one second probability distribution parameter corresponding to the to-be-decoded feature point. The determining, based on the at least one probability distribution parameter corresponding to the to-be-decoded feature point, probability distribution corresponding to the to-be-decoded feature point includes: determining, based on a first probability distribution parameter matrix corresponding to the target channel group, at least one first probability distribution parameter corresponding to the to-be-decoded feature point; and determining, based on the at least one first probability distribution parameter and the at least one second probability distribution parameter that correspond to the to-be-decoded feature point, the probability distribution corresponding to the to-be-decoded feature point.

According to any one of the second aspect or the foregoing implementations of the second aspect, the determining, based on the at least one feature value of the at least one decoded feature point corresponding to the target channel group and a second feature matrix corresponding to the target channel group, at least one second probability distribution parameter corresponding to the to-be-decoded feature point includes: determining, based on the to-be-decoded feature point, a first target region in a feature map corresponding to the target channel group, and a third target region in the second feature matrix corresponding to the target channel group; determining, based on at least one feature value of at least one decoded feature point in the first target region and at least one corresponding first probability distribution parameter, at least one difference corresponding to the at least one decoded feature point in the first target region; and performing linear weighting on a second feature of at least one feature point in the third target region and the at least one difference corresponding to the at least one decoded feature point in the first target region, to obtain the at least one second probability distribution parameter corresponding to the to-be-decoded feature point.

Any one of the second aspect and the implementations of the second aspect corresponds to any one of the first aspect and the implementations of the first aspect. For technical effect corresponding to any one of the second aspect and the implementations of the second aspect, refer to the technical effect corresponding to any one of the first aspect and the implementations of the first aspect. Details are not described herein again.

According to a third aspect, an embodiment of this application provides an encoder, configured to perform the encoding method in any one of the first aspect and the implementations of the first aspect.

Any one of the third aspect and the implementations of the third aspect corresponds to any one of the first aspect and the implementations of the first aspect. For technical effect corresponding to any one of the third aspect and the implementations of the third aspect, refer to the technical effect corresponding to any one of the first aspect and the implementations of the first aspect. Details are not described herein again.

According to a fourth aspect, an embodiment of this application provides a decoder, configured to perform the decoding method in any one of the second aspect and the implementations of the second aspect.

Any one of the fourth aspect and the implementations of the fourth aspect corresponds to any one of the second aspect and the implementations of the second aspect. For technical effect corresponding to any one of the fourth aspect and the implementations of the fourth aspect, refer to the technical effect corresponding to any one of the second aspect and the implementations of the second aspect. Details are not described herein again.

According to a fifth aspect, an embodiment of this application provides an electronic device, including a memory and a processor. The memory is coupled to the processor. The memory stores program instructions. When the program instructions are executed by the processor, the electronic device is enabled to perform the encoding method in any one of the first aspect or the possible implementations of the first aspect.

Any one of the fifth aspect and the implementations of the fifth aspect corresponds to any one of the first aspect and the implementations of the first aspect. For technical effect corresponding to any one of the fifth aspect and the implementations of the fifth aspect, refer to the technical effect corresponding to any one of the first aspect and the implementations of the first aspect. Details are not described herein again.

According to a sixth aspect, an embodiment of this application provides an electronic device, including a memory and a processor. The memory is coupled to the processor. The memory stores program instructions. When the program instructions are executed by the processor, the electronic device is enabled to perform the decoding method in any one of the second aspect or the possible implementations of the second aspect.

Any one of the sixth aspect and the implementations of the sixth aspect corresponds to any one of the second aspect and the implementations of the second aspect. For technical effect corresponding to any one of the sixth aspect and the implementations of the sixth aspect, refer to the technical effect corresponding to any one of the second aspect and the implementations of the second aspect. Details are not described herein again.

According to a seventh aspect, an embodiment of this application provides a chip, including one or more interface circuits and one or more processors. The interface circuit is configured to receive a signal from a memory of an electronic device, and send the signal to the processor. The signal includes computer instructions stored in the memory. When the processor executes the computer instructions, the electronic device is enabled to perform the encoding method in any one of the first aspect or the possible implementations of the first aspect.

Any one of the seventh aspect and the implementations of the seventh aspect corresponds to any one of the first aspect and the implementations of the first aspect. For technical effect corresponding to any one of the seventh aspect and the implementations of the seventh aspect, refer to the technical effect corresponding to any one of the first aspect and the implementations of the first aspect. Details are not described herein again.

According to an eighth aspect, an embodiment of this application provides a chip, including one or more interface circuits and one or more processors. The interface circuit is configured to receive a signal from a memory of an electronic device, and send the signal to the processor. The signal includes computer instructions stored in the memory. When the processor executes the computer instructions, the electronic device is enabled to perform the decoding method in any one of the second aspect or the possible implementations of the second aspect.

Any one of the eighth aspect and the implementations of the eighth aspect corresponds to any one of the second aspect and the implementations of the second aspect. For technical effect corresponding to any one of the eighth aspect and the implementations of the eighth aspect, refer to the technical effect corresponding to any one of the second aspect and the implementations of the second aspect. Details are not described herein again.

According to a ninth aspect, an embodiment of this application provides a computer-readable storage medium. The computer-readable storage medium stores a computer program. When the computer program is run on a computer or a processor, the computer or the processor is enabled to perform the encoding method in any one of the first aspect or the possible implementations of the first aspect.

Any one of the ninth aspect and the implementations of the ninth aspect corresponds to any one of the first aspect and the implementations of the first aspect. For technical effect corresponding to any one of the ninth aspect and the implementations of the ninth aspect, refer to the technical effect corresponding to any one of the first aspect and the implementations of the first aspect. Details are not described herein again.

According to a tenth aspect, an embodiment of this application provides a computer-readable storage medium. The computer-readable storage medium stores a computer program. When the computer program is run on a computer or a processor, the computer or the processor is enabled to perform the decoding method in any one of the second aspect or the possible implementations of the second aspect.

Any one of the tenth aspect and the implementations of the tenth aspect corresponds to any one of the second aspect and the implementations of the second aspect. For technical effect corresponding to any one of the tenth aspect and the implementations of the tenth aspect, refer to the technical effect corresponding to any one of the second aspect and the implementations of the second aspect. Details are not described herein again.

According to an eleventh aspect, an embodiment of this application provides a computer program product. The computer program product includes a software program. When the software program is executed by a computer or a processor, the computer or the processor is enabled to perform the encoding method in any one of the first aspect or the possible implementations of the first aspect.

Any one of the eleventh aspect and the implementations of the eleventh aspect corresponds to any one of the first aspect and the implementations of the first aspect. For technical effect corresponding to any one of the eleventh aspect and the implementations of the eleventh aspect, refer to the technical effect corresponding to any one of the first aspect and the implementations of the first aspect. Details are not described herein again.

According to a twelfth aspect, an embodiment of this application provides a computer program product. The computer program product includes a software program. When the software program is executed by a computer or a processor, the computer or the processor is enabled to perform the decoding method in any one of the second aspect or the possible implementations of the second aspect.

Any one of the twelfth aspect and the implementations of the twelfth aspect corresponds to any one of the second aspect and the implementations of the second aspect. For technical effect corresponding to any one of the twelfth aspect and the implementations of the twelfth aspect, refer to the technical effect corresponding to any one of the second aspect and the implementations of the second aspect. Details are not described herein again.

According to a thirteenth aspect, an embodiment of this application provides a bitstream generation method, used to generate a bitstream according to the encoding method in any one of the first aspect and the implementations of the first aspect.

According to a fourteenth aspect, an embodiment of this application provides a bitstream storage method, used to store a bitstream generated according to the bitstream generation method in any one of the thirteenth aspect and the implementations of the thirteenth aspect.

According to a fifteenth aspect, an embodiment of this application provides a bitstream transmission method, used to transmit a bitstream generated according to the bitstream generation method in any one of the thirteenth aspect and the implementations of the thirteenth aspect.

## BRIEF DESCRIPTION OF DRAWINGS

FIG. 1 is a diagram of an example of a structure of a system framework;
FIG. 2 is a diagram of an example of an encoding process;
FIG. 3a is a diagram of an example of channel groups;
FIG. 3b is a diagram of an example of channel groups;
FIG. 3c is a diagram of an example of an encoding order;
FIG. 4A and FIG. 4B are a diagram of an example of a decoding process;
FIG. 5 is a diagram of an example of an end-to-end image compression framework;
FIG. 6 is a diagram of an example of an encoding process;
FIG. 7 is a diagram of an example of a decoding process;
FIG. 8 is a diagram of an example of an encoding process;
FIG. 9 is a diagram of an example of a decoding process;
FIG. 10 is a diagram of an example of an encoding process;
FIG. 11 is a diagram of an example of a decoding process;
FIG. 12a is a diagram of an example of a process of determining a probability distribution parameter;
FIG. 12b is a diagram of an example of a process of determining a probability distribution parameter;
FIG. 12c is a diagram of an example of a process of determining a probability distribution parameter;
FIG. 12d is a diagram of an example of a process of determining a probability distribution parameter;
FIG. 13a is a diagram of an example of a process of determining a probability distribution parameter;
FIG. 13b is a diagram of an example of a process of determining a probability distribution parameter;
FIG. 14a is a diagram of an example of a process of determining a probability distribution parameter;
FIG. 14b is a diagram of an example of a process of determining a probability distribution parameter; and
FIG. 15 is a diagram of an example of a structure of an apparatus.

## DESCRIPTION OF EMBODIMENTS

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for associated objects and indicates that three relationships may exist. For example, A and/or B may indicate the following three cases: Only A exists, both A and B exist, and only B exists.

In the specification and claims of embodiments of this application, the terms "first", "second", and the like are intended to distinguish between different objects but do not indicate a particular order of the objects. For example, a first target object and a second target object are used to distinguish between different target objects, but are not used to describe a particular order of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two. For example, a plurality of processing units are two or more processing units, and a plurality of systems are two or more systems.

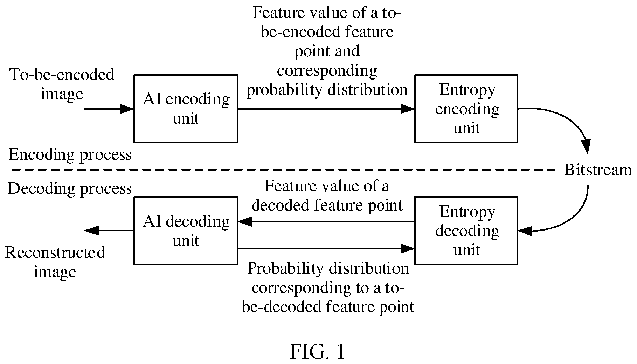

FIG. 1 is a diagram of an example of a structure of a system framework. It should be understood that a system shown in FIG. 1 is merely an example, and the system in this application may have more or fewer components than those shown in the figure, may combine two or more components, or may have different component configurations. Various components shown in FIG. 1 may be implemented in hardware including one or more signal processing and/or application-specific integrated circuits, software, or a combination of hardware and software.

Refer to FIG. 1. For example, an image encoding process may be as follows: A to-be-encoded image is input to an AI encoding unit, and is processed by the AI encoding unit, to output a feature value of a to-be-encoded feature point and corresponding probability distribution. Then, the feature value of the to-be-encoded feature point and the corresponding probability distribution are input to an entropy encoding unit. The entropy encoding unit performs entropy encoding on the feature value of the to-be-encoded feature point based on the probability distribution corresponding to the to-be-encoded feature point, to output a bitstream.

Still refer to FIG. 1. For example, an image decoding process may be as follows: After obtaining the bitstream, an entropy decoding unit may perform entropy decoding on a to-be-decoded feature point based on probability distribution that corresponds to the to-be-decoded feature point and that is predicted by an AI decoding unit based on at least one feature value of at least one decoded feature point, to output the at least one feature value of the at least one decoded feature point to the AI decoding unit. After entropy decoding on all to-be-decoded feature points is completed, the AI decoding unit performs reconstruction based on the at least one feature value corresponding to the at least one decoded feature point, to output a reconstructed image.

For example, entropy encoding is encoding without any information loss according to an entropy principle in an encoding process. Entropy encoding may include a plurality of types, for example, Shannon (Shannon) encoding, Huffman (Huffman) encoding, and arithmetic encoding (arithmetic coding). This is not limited in this application.

For example, the to-be-encoded image input to the AI encoding unit may be any one of a raw (unprocessed) image, an RGB (Red Green Blue, red green blue) image, or a YUV image ("Y" represents luminance (Luminance or Luma), and "U" and "V" respectively represent chrominance and chroma (Chrominance, Chroma)). This is not limited in this application.

For example, a compression process and a decompression process may be performed by a same electronic device, or may be performed by different electronic devices. This is not limited in this application.

For example, this application may be applied to compression and decompression of one image, or may be applied to compression and decompression of a plurality of frames of images in a video sequence. This is not limited in this application.

For example, this application may be applied to a plurality of scenarios, for example, a Huawei image (or video) cloud storage (or transmission) scenario, a video surveillance scenario, or a live broadcast scenario. This is not limited in this application.

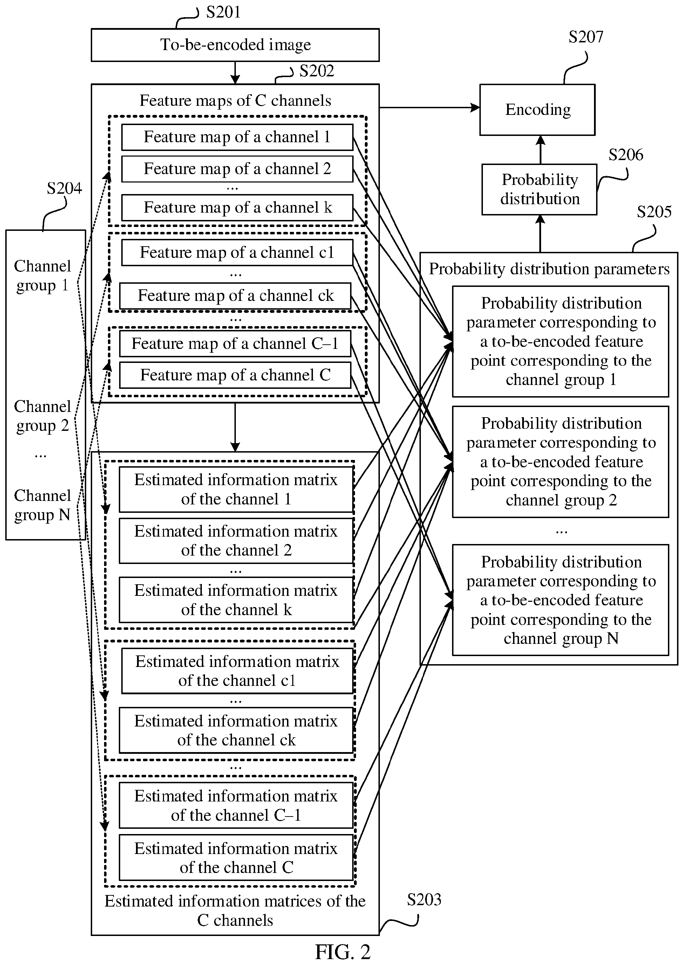

FIG. 2 is a diagram of an example of an encoding process.

S201: Obtain a to-be-encoded image.

For example, an encoder side may obtain a to-be-encoded image, and then encode the to-be-encoded image with reference to S202 to S206, to obtain a corresponding bitstream.

S202: Generate feature maps of C channels based on the to-be-encoded image, where the feature maps include feature values of a plurality of feature points.

For example, spatial transformation may be performed on the to-be-encoded image, to transform the to-be-encoded image into another space, so as to reduce time redundancy and space redundancy of the to-be-encoded image, and obtain the feature maps of the C (C is a positive integer) channels.

For example, the feature map of each channel $\in R^{H*W}$, "H" represents a height of the feature map of each channel, and "W" represents a width of the feature map of each channel. The feature map of each channel may include feature values of H*W feature points.

For example, FIG. 2 shows a feature map of a channel 1, a feature map of a channel 2, ..., a feature map of a channel k, a feature map of a channel c1, ..., a feature map of a channel ck, ..., a feature map of a channel C-1, and a feature map of a channel C in the feature maps of the C channels. Both c1 and ck are positive integers less than C.

S203: Generate estimated information matrices of the C channels based on the feature maps of the C channels.

For example, after the feature maps of the C channels are obtained, feature extraction may be performed on the feature maps of the C channels, to obtain the estimated information matrices of the C channels. For example, an estimated information matrix of each channel $\in R^{H*W}$, and may include estimated information of the H*W feature points.

For example, the estimated information may be information used to estimate a probability distribution parameter, and may include a feature and/or the probability distribution parameter. This is not limited in this application.

For example, FIG. 2 shows an estimated information matrix of the channel 1, an estimated information matrix of the channel 2, ..., an estimated information matrix of the channel k, an estimated information matrix of the channel c1, ..., an estimated information matrix of the channel ck, ..., an estimated information matrix of the channel C-1, and an estimated information matrix of the channel C in the estimated information matrices of the C channels.

S204: Group the C channels into N channel groups.

For example, the C channels may be grouped into at least N (N is an integer greater than 1) channel groups, and each channel group may include at least one channel. It is assumed that a number of channels included in one channel group is represented by k (k is a positive integer less than C), and k in all the channel groups may be the same or may be different. This is not limited in this application.

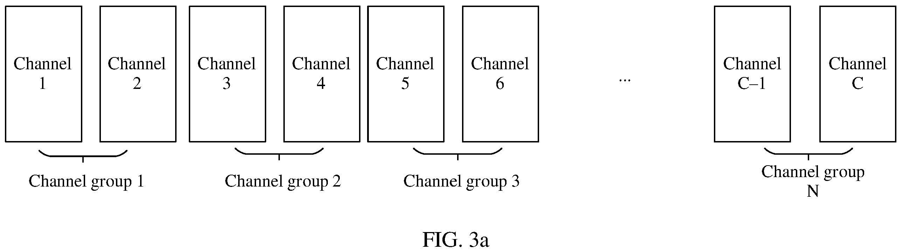

FIG. 3a is a diagram of an example of channel groups. In the embodiment in FIG. 3a, numbers of channels, k, included in all channel groups are the same.

Refer to FIG. 3a. For example, k=2. To be specific, every two of the C channels are used to form one channel group. Therefore, a number of obtained channel groups is N=C/2. It is assumed that C=192 and k=2. In this case, N=96. In other words, every two of the 192 channels may be used to form one channel group, to obtain the 96 channel groups.

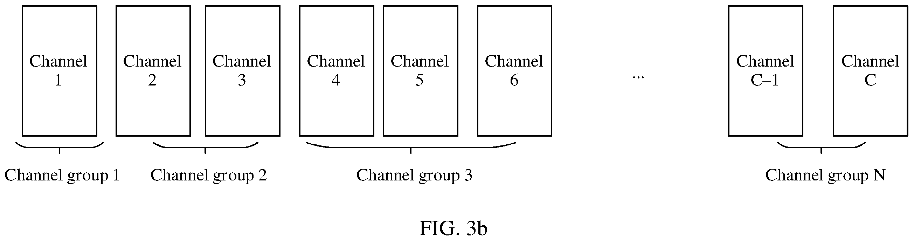

FIG. 3b is a diagram of an example of channel groups. In the embodiment in FIG. 3b, it is shown that numbers of channels, k, included in all channel groups are different.

Refer to FIG. 3b. For example, the channel 1 in the C channels may be used to form a channel group 1, the channel 2 and the channel 3 in the C channels may be used to form a channel group 2, the channel 4, the channel 5, and the channel 6 in the C channels may be used to form a channel group 3, ..., and the channel C-1 and the channel C in the C channels may be used to form a channel group N.

It should be noted that FIG. 3a and FIG. 3b are merely examples of this application, and k may alternatively be set to another value as required. This is not limited in this application.

It should be noted that different channel groups may include a same channel. For example, the channel group 1 includes the channel 1 and the channel 2, and the channel group 2 may include the channel 2 and the channel 3. This is not limited in this application.

S205: For at least one target channel group in the N channel groups, determine, based on at least one feature value of at least one encoded feature point corresponding to the target channel group and an estimated information matrix corresponding to the target channel group, at least one probability distribution parameter corresponding to a to-be-encoded feature point corresponding to the target channel group.

For example, all of the N channel groups may be sequentially determined as target channel groups, and then, for each target channel group, at least one probability distribution parameter corresponding to a to-be-encoded feature point corresponding to the target channel group may be determined based on at least one feature value of at least one encoded feature point corresponding to the target channel group and an estimated information matrix corresponding to the target channel group. In this application, one target channel group in the N channel groups is used as an example to describe a process of determining a probability distribution parameter corresponding to one to-be-encoded feature point in a feature map of a channel c in the target channel group.

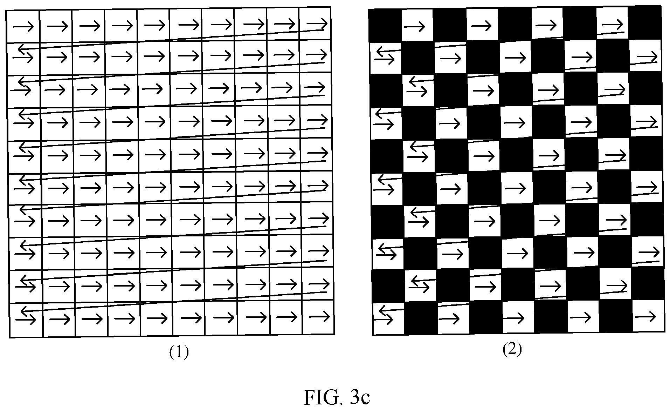

FIG. 3c is a diagram of an example of an encoding order.

(1) in FIG. 3c shows a feature map of one channel. A size of the feature map is 10*10, and each block represents one feature point. For example, the encoder side may sequentially encode all feature points in the feature map in an order shown in (1) in FIG. 3c, to be specific, sequentially encode all feature points from left to right starting from a first row, start to encode all the feature points in a second row from left to right after all the feature points in the first row are encoded, and so on, until all the feature points in the feature map are encoded.

(2) in FIG. 3c shows a feature map of one channel. A size of the feature map is 10*10, and each block represents one feature point. White blocks represent unencoded feature points, and black blocks represent encoded feature points (the encoder side first divides a feature map of each channel based on a black-and-white checkerboard, and the encoder side first encodes feature points corresponding to the black blocks, and then encodes feature points corresponding to the white blocks). In a possible implementation, in the process of encoding the feature point corresponding to the black block, a corresponding probability distribution parameter is determined based on an estimated information matrix; and in the process of encoding the feature point corresponding to the white block, a corresponding probability distribution parameter is determined based on S204 in this application. In a possible implementation, in both the process of encoding the feature point corresponding to the black block and the process of encoding the feature point corresponding to the white block, a corresponding probability distribution parameter is determined based on S204 in this application.

For example, for the feature points corresponding to the white blocks, the encoder side may sequentially encode, in an order in (2) in FIG. 3c, the feature points corresponding to all the white blocks in the feature map, to be specific, sequentially encode, from left to right starting from a first row, the feature points corresponding to all the white blocks, start to encode, from left to right, feature points corresponding to all white blocks in a second row after feature points corresponding to all white blocks in the first row are encoded, and so on, until the feature points corresponding to all the white blocks in the feature map are encoded.

For example, if the encoder side determines the corresponding probability distribution parameter based on S204 in this application in the process of encoding the feature point corresponding to the black block, an order of encoding the feature points corresponding to the black blocks is similar to the order of encoding the feature points corresponding to the white blocks. Details are not described herein again.

It should be understood that (2) in FIG. 3c is merely an example, and locations of the black blocks and the white blocks in the black-and-white checkerboard may alternatively be exchanged. This is not limited in this application.

For example, a to-be-encoded feature point may be selected from an unencoded feature point in the feature map of the channel c in the encoding order in FIG. 3c. Then, at least one encoded feature point in the feature map corresponding to the target channel group may be determined, and then weighting calculation is performed on at least one feature value of the at least one encoded feature point in the feature map corresponding to the target channel group and the estimated information matrix corresponding to the target channel group, to determine at least one probability distribution parameter corresponding to one to-be-encoded feature point in the feature map of the channel c in the target channel group. The feature map corresponding to the target channel group may be feature maps of k channels included in the target channel group. The estimated information matrix corresponding to the target channel group may be estimated information matrices of the k channels included in the target channel group. Therefore, at least one probability distribution parameter corresponding to the one to-be-encoded feature point in the feature map of the channel c may be determined. Then, the unencoded feature points in the feature map of the channel c are sequentially determined as the to-be-encoded feature points, to determine at least one probability distribution parameter corresponding to each to-be-encoded feature point in the feature map of the channel c.

Therefore, at least one probability distribution parameter corresponding to each to-be-encoded feature point in a feature map of each channel in the target channel group may be determined.

In the foregoing manner, probability distribution parameters corresponding to to-be-encoded feature points corresponding to all target channel groups may be determined, for example, at least one probability distribution parameter corresponding to a to-be-encoded feature point corresponding to the channel group 1, at least one probability distribution parameter corresponding to a to-be-encoded feature point corresponding to the channel group 2, ..., and at least one probability distribution parameter corresponding to a to-be-encoded feature point corresponding to the channel group N.

S206: Determine, based on the at least one probability distribution parameter corresponding to the to-be-encoded feature point, probability distribution corresponding to the to-be-encoded feature point.

For example, after the at least one probability distribution parameter corresponding to the to-be-encoded feature point is determined, for each to-be-encoded feature point, probability distribution corresponding to each to-be-encoded feature point may be determined based on at least one probability distribution parameter corresponding to each to-be-encoded feature point.

For example, the at least one probability distribution parameter is a Gaussian distribution parameter, and the determined probability distribution corresponding to the to-be-encoded feature point is Gaussian probability distribution.

S207: Encode the to-be-encoded feature point based on the probability distribution corresponding to the to-be-encoded feature point, to obtain a bitstream.

For example, for each to-be-encoded feature point, a feature value of each to-be-encoded feature point may be encoded based on the probability distribution corresponding to each to-be-encoded feature point, and a bitstream of the to-be-encoded image may be obtained after feature values of all feature points in the feature maps of the C channels are encoded.

For example, the encoder side may locally store the bitstream of the to-be-encoded image, or may send the bitstream of the to-be-encoded image to a decoder side. This is not limited in this application.

For example, the encoder side may generate prior information of the C channels based on the feature maps of the C channels, and then perform reconstruction based on the prior information of the C channels, to obtain the estimated information matrices of the C channels. For example, the encoder side may alternatively encode prior information of the C channels, to obtain a bitstream of the prior information of the C channels; and then may store the bitstream of the prior information or transmit the bitstream of the prior information to the decoder side, so that when the bitstream of the to-be-encoded image is subsequently decoded, an estimated information matrix may be determined based on the prior information, and then at least one probability distribution parameter corresponding to a to-be-decoded feature point is determined based on the estimated information matrix.

Compared with the conventional technology in which a probability distribution parameter is determined based on feature values of encoded feature points of all channels and estimated information matrices of all the channels, in this application, the at least one probability distribution parameter corresponding to the to-be-encoded feature point needs to be determined only based on at least one feature value of at least one encoded feature point in a feature map of a part of channels and an estimated information matrix of the part of channels. This can reduce computing power for encoding, and improve encoding efficiency.

In addition, compared with the conventional technology in which a context feature needs to be generated based on the at least one feature value of the at least one encoded feature point, and then the at least one probability distribution parameter is determined based on the context feature and the estimated information matrix, in this application, no context feature needs to be generated. This further reduces computing power for encoding, and improves encoding efficiency.

In addition, a correlation between feature maps of channels is low, to store a larger amount of information during compression. Therefore, in this application, introduction of invalid information can be reduced, and encoding performance can be improved.

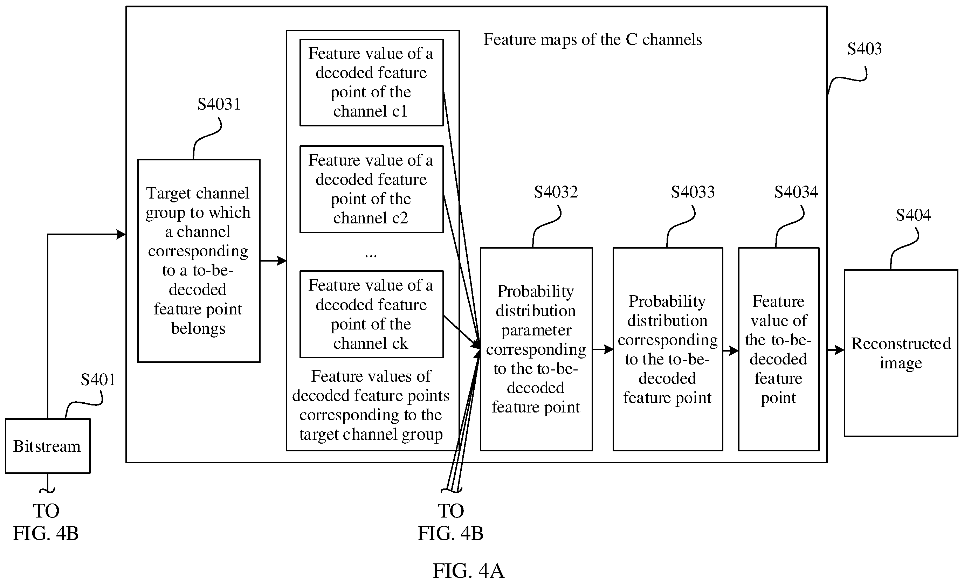

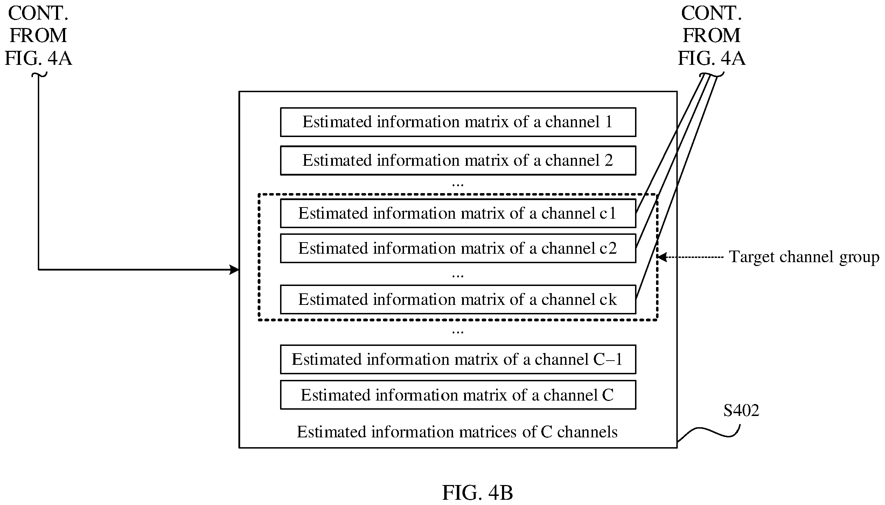

FIG. 4A and FIG. 4B are a diagram of an example of a decoding process.

S401: Receive a bitstream.

For example, the bitstream received by a decoder side may include a bitstream of an image and a bitstream that is of prior information of C channels and that corresponds to the image.

For example, the bitstream of the image may include encoded data of feature values of feature points of the C channels, and the bitstream of the prior information of the C channels may include encoded data of the prior information of the feature points of the C channels.

S402: Decode the bitstream to obtain estimated information matrices of the C channels.

For example, after the bitstream is received, the bitstream may be parsed to obtain the encoded data of the prior information of the feature points of the C channels, and then the encoded data of the prior information of the feature points of the C channels is reconstructed, to obtain the estimated information matrices of the C channels.

For example, FIG. 4A and FIG. 4B show an estimated information matrix of a channel 1, an estimated information matrix of a channel 2, ..., an estimated information matrix of a channel c1, an estimated information matrix of a channel c2, ..., an estimated information matrix of a channel ck, ..., an estimated information matrix of a channel C-1, and an estimated information matrix of a channel C in the estimated information matrices of the C channels. Both c1 and ck are positive integers less than C.

S403: Decode the bitstream to obtain the feature values of the feature points of the C channels based on the estimated information matrices of the C channels, to obtain feature maps of the C channels.

For example, in the process of parsing the bitstream, the bitstream may be further parsed to obtain the encoded data of the feature values of the feature points of the C channels, and then the encoded data of the feature values of the feature points of the C channels may be decoded based on the estimated information matrices of the C channels, to obtain the feature values of the feature points of the C channels, that is, the feature maps of the C channels. In this application, an example in which one to-be-decoded feature point of one channel is decoded is used for description.

For example, a decoding order on an encoder side is the same as an encoding order on an encoder side. For details, refer to the descriptions in the embodiment in FIG. 3c. Details are not described herein again.

For example, it may be determined that a to-be-decoded feature point is selected from an undecoded feature point corresponding to the channel in a decoding order corresponding to the encoding order in FIG. 3c. Then, a feature value of a to-be-decoded feature point may be obtained through decoding with reference to steps S4031 to S4034 below.

S4031: Determine, from N channel groups obtained by grouping the C channels, a target channel group to which a channel corresponding to the to-be-decoded feature point belongs.

For example, the decoder side may alternatively group the C channels into the N channel groups, and each channel group may include k channels. Details are similar to the foregoing manner in which the encoder side groups the channel groups. Details are not described herein again.

For example, the target channel group to which the channel corresponding to the to-be-decoded feature point belongs may be determined. The target channel group to which the channel corresponding to the to-be-decoded feature point belongs may include k channels: the channel c1, the channel c2, ..., and the channel ck.

S4032: Determine, based on at least one feature value of at least one decoded feature point corresponding to the target channel group and an estimated information matrix corresponding to the target channel group, at least one probability distribution parameter corresponding to the to-be-decoded feature point.

For example, weighting calculation is performed based on the at least one feature value of the at least one decoded feature point corresponding to the target channel group and the estimated information matrix corresponding to the target channel group, to determine the at least one probability distribution parameter corresponding to the to-be-decoded feature point. For example, the at least one decoded feature point corresponding to the target channel group may be at least one decoded feature point corresponding to the k channels included in the target channel group.

S4033: Determine, based on the at least one probability distribution parameter corresponding to the to-be-decoded feature point, probability distribution corresponding to the to-be-decoded feature point.

For example, after the at least one probability distribution parameter corresponding to the to-be-decoded feature point is determined, the probability distribution corresponding to the to-be-decoded feature point may be determined based on the at least one probability distribution parameter corresponding to the to-be-decoded feature point.

For example, the at least one probability distribution parameter is a Gaussian distribution parameter, and the determined probability distribution corresponding to the to-be-decoded feature point is Gaussian probability distribution.

S4034: Decode the to-be-decoded feature point based on the probability distribution corresponding to the to-be-decoded feature point, to obtain the feature value.

For example, encoded data of the feature value of the to-be-decoded feature point may be decoded based on the probability distribution corresponding to the to-be-decoded feature point, to obtain the feature value of the to-be-decoded feature point. In this case, the to-be-decoded feature point becomes a decoded feature point.

Therefore, to-be-decoded feature points of channels in all target channel groups may be decoded in the foregoing manner.

S404: Perform reconstruction based on the feature maps of the C channels, to output a reconstructed image.

For example, after the feature maps of the C channels are obtained, image reconstruction may be performed based on the feature maps of the C channels, to obtain the reconstructed image.

Compared with the conventional technology in which at least one probability distribution parameter is determined based on feature values of decoded feature points of all channels and estimated information matrices of all the channels, in this application, the at least one probability distribution parameter corresponding to the to-be-decoded feature point needs to be determined only based on at least one feature value of at least one decoded feature point in a feature map of a part of channels and an estimated information matrix of the part of channels. This can reduce computing power for decoding, and improve decoding efficiency.

In addition, compared with the conventional technology in which a context feature needs to be generated based on the at least one feature value of the at least one decoded feature point, and then the at least one probability distribution parameter is determined based on the context feature and the estimated information matrix, in this application, no context feature needs to be generated. This further reduces computing power for decoding, and improves decoding efficiency.

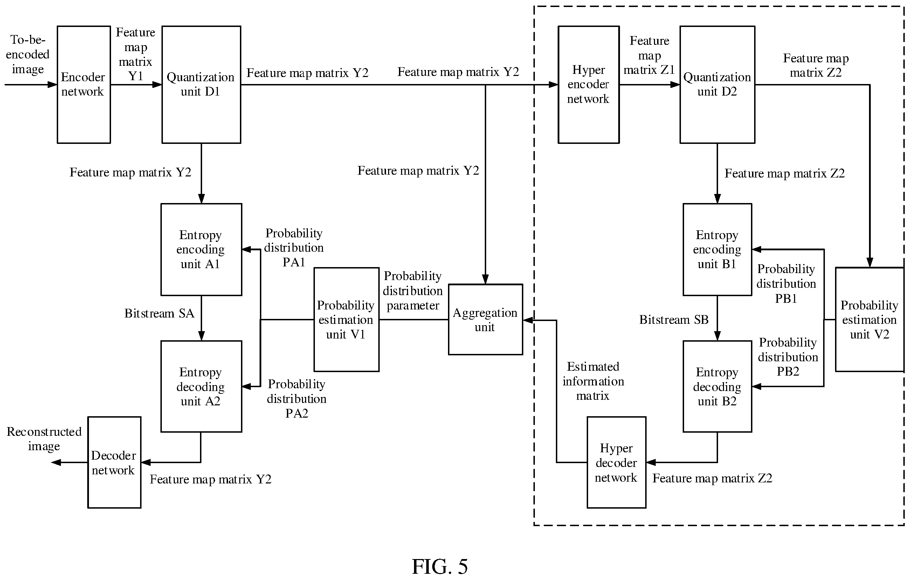

FIG. 5 is a diagram of an example of an end-to-end image compression framework.

Refer to FIG. 5. For example, an encoder network, a quantization unit D1, an aggregation unit, a hyper encoder network, a quantization unit D2, a hyper decoder network, a probability estimation unit V1, and a probability estimation unit V2 belong to the AI encoding unit in FIG. 1. For example, a decoder network, the aggregation unit, the hyper decoder network, the probability estimation unit V1, and the probability estimation unit V2 belong to the AI decoding unit in FIG. 1.

For example, an entropy encoding unit A1 and an entropy encoding unit B1 belong to the entropy encoding unit in FIG. 1.

For example, an entropy decoding unit A2 and an entropy decoding unit B2 belong to the entropy decoding unit in FIG. 1.

For example, the AI encoding unit and the AI decoding unit may perform joint training, so that each network and unit in the AI encoding unit and the AI decoding unit learn of a corresponding parameter. For example, the aggregation unit, the hyper decoder network, the probability estimation unit V1, and the probability estimation unit V2 in the AI encoding unit, and the aggregation unit, the hyper decoder network, the probability estimation unit V1, and the probability estimation unit V2 in the AI decoding unit may be shared.

For example, the encoder network may be configured to perform spatial transformation on a to-be-encoded image, to transform the to-be-encoded image to another space. For example, the encoder network may be a convolutional neural network.

For example, the hyper encoder network may be configured to extract a feature. For example, the hyper encoder network may be a convolutional neural network.

For example, a quantization unit (including a quantization unit D1 and a quantization unit D2) may be configured to perform quantization processing.

For example, the aggregation unit may be configured to determine at least one probability distribution parameter of a to-be-encoded/to-be-decoded feature point.

For example, a probability estimation unit (including the probability estimation unit V1 and the probability estimation unit V2) may be configured to estimate a probability and output probability distribution. Optionally, the probability estimation unit V1 may be a discrete probability estimation unit such as a multiplication model, and the probability estimation unit V2 may be a discrete probability estimation unit such as an entropy estimation model.

For example, the entropy encoding unit A1 may be configured to perform encoding based on probability distribution PA1 determined by the probability estimation unit V1, to reduce statistical redundancy of an output feature.

For example, the entropy encoding unit B1 may be configured to perform encoding based on probability distribution PB1 determined by the probability estimation unit V2, to reduce statistical redundancy of an output feature.

For example, the entropy decoding unit A2 may be configured to perform decoding based on probability distribution PA2 determined by the probability estimation unit V1.

For example, the entropy decoding unit B2 may be configured to perform decoding based on probability distribution PB2 determined by the probability estimation unit V2.

For example, the decoder network may be configured to perform inverse spatial transformation on information obtained through entropy decoding, and output a reconstructed image. For example, the decoder network may be a convolutional neural network.

For example, the hyper decoder network may be configured to reconstruct the feature extracted by the hyper encoder network, and output an estimated information matrix. For example, the hyper decoder network may be a convolutional neural network.

Still refer to FIG. 5. An encoding process may be as follows.

For example, the to-be-encoded image is input into the encoder network, and the encoder network transforms the to-be-encoded image to another space, to output a feature map matrix Y1. The feature map matrix Y1 is input to the quantization unit D1, and the quantization unit D1 performs quantization processing on the feature map matrix Y1, to output a feature map matrix Y2 (the feature map matrix Y2 includes the feature maps of the C channels in the foregoing embodiment), where the feature map matrix $Y2 \in R^{C*H*W}$.

For example, the quantization unit D1 may perform quantization processing on a feature value of each feature point in a feature map of each channel in the feature map matrix Y1 based on a preset quantization step, to obtain the feature map matrix Y2.

For example, after the feature map matrix Y2 is obtained, in one aspect, the feature map matrix Y2 is input to the hyper encoder network, and the hyper encoder network performs feature extraction on the feature map matrix Y2, to obtain a feature map matrix Z1, and then inputs the feature map matrix Z1 to the quantization unit D2. The quantization unit D2 performs quantization processing on the feature map matrix Z1, and then outputs a feature map matrix Z2.

In a possible implementation, the feature map matrix Z2 is input to the probability estimation unit V2, and is processed by the probability estimation unit V2, to output probability distribution PB1 of each feature point in the feature map matrix Z2 to the entropy encoding unit B1. In addition, the feature map matrix Z2 is input to the entropy encoding unit B1. The entropy encoding unit B1 encodes the feature map matrix Z2 based on the probability distribution PB1, and outputs a bitstream SB to the entropy decoding unit B2. Then, the probability estimation unit V2 may predict probability distribution PB2 of a to-be-decoded feature point in the bitstream SB, and input the probability distribution PB2 to the entropy decoding unit B2. Then, the entropy decoding unit B2 may decode the to-be-decoded feature point in the bitstream SB based on the probability distribution PB2, and output the feature map matrix Z2 to the hyper decoder network. After obtaining the feature map matrix Z2, the hyper decoder network may reconstruct the feature map matrix Z2 to obtain estimated information matrices of the C channels, and input the estimated information matrices of the C channels to the aggregation unit.

In a possible implementation, the feature map matrix Z2 may be directly input to the hyper decoder network, and the hyper decoder network reconstructs the feature map matrix Z2 to obtain estimated information matrices of the C channels, and inputs the estimated information matrices of the C channels to the aggregation unit. It should be understood that a manner of determining the estimated information matrices of the C channels in the encoding process is not limited in this application.

For example, after the feature map matrix Y2 is obtained, in another aspect, the feature map matrix Y2 may be input to the aggregation unit, and the aggregation unit determines, based on at least one feature value of at least one encoded feature point corresponding to a target channel group including k channels, and an estimated information matrix corresponding to the target channel group, at least one probability distribution parameter corresponding to a to-be-encoded feature point corresponding to the target channel group. For this process, refer to the foregoing description. Details are not described herein again.

For example, after obtaining the at least one probability distribution parameter corresponding to the to-be-encoded feature point, the aggregation unit may input the at least one probability distribution parameter corresponding to the to-be-encoded feature point to the probability estimation unit V1, the probability estimation unit V1 determines, based on the at least one probability distribution parameter corresponding to the to-be-encoded feature point, probability distribution PA1 corresponding to the to-be-encoded feature point, and then, the probability estimation unit V1 may input the probability distribution PA1 corresponding to the to-be-encoded feature point to the entropy encoding unit A1.

For example, after the feature map matrix Y2 is obtained, in still another aspect, the feature map matrix Y2 may be input into the entropy encoding unit A1, and the entropy encoding unit A1 encodes a feature value of a to-be-encoded feature point in the feature map matrix Y2 based on the probability distribution PA1 corresponding to the to-be-encoded feature point, to obtain a bitstream SA. Then, encoding of the to-be-encoded image is completed.

It should be noted that, after encoding of the to-be-encoded image is completed, both the bitstream SA obtained by encoding the feature map matrix Y2 and the bitstream SB obtained by encoding the feature map matrix Z2 may be sent to a decoder side.

Still refer to FIG. 5. A decoding process may be as follows:

For example, after receiving the bitstream SA and the bitstream SB, the decoder side may allocate the bitstream SA to the entropy decoding unit A2 for decoding, and allocate the bitstream SB to the entropy decoding unit B2 for decoding.

For example, the probability estimation unit V2 may predict the probability distribution PB2 of the to-be-decoded feature point in the bitstream SB, and input the probability distribution PB2 to the entropy decoding unit B2. Then, the entropy decoding unit B2 may decode the to-be-decoded feature point in the bitstream SB based on the probability distribution PB2, and output the feature map matrix Z2 to the hyper decoder network. After obtaining the feature map matrix Z2, the hyper decoder network may reconstruct the feature map matrix Z2 to obtain the estimated information matrices of the C channels, and input the estimated information matrices of the C channels to the aggregation unit.

For example, the bitstream SA includes encoded data of a feature value of each feature point in the feature map matrix Y2, and the entropy decoding unit A2 decodes the encoded data of the feature value of each feature point in the bitstream SA, to obtain the feature value corresponding to each feature point, so as to obtain the feature map matrix Y2.

For example, for one to-be-decoded feature point, the entropy decoding unit A2 may input at least one feature value corresponding to at least one decoded feature point to the aggregation unit, and the aggregation unit determines a target channel group to which a channel corresponding to a to-be-decoded feature point belongs, and determines, based on at least one feature value of at least one decoded feature point corresponding to the target channel group and an estimated information matrix corresponding to the target channel group, at least one probability distribution parameter corresponding to the to-be-decoded feature point. For details, refer to the foregoing description. Details are not described herein again. Then, the at least one probability distribution parameter corresponding to the to-be-decoded feature point is output to the probability estimation unit V1. Then, the probability estimation unit V1 performs probability estimation based on the at least one probability distribution parameter corresponding to the to-be-decoded feature point, predicts probability distribution PA2 corresponding to the to-be-decoded feature point, and inputs the probability distribution PA2 corresponding to the to-be-decoded feature point to the entropy decoding unit A2. Then, the entropy encoding unit A2 may decode encoded data of a feature value of the to-be-decoded feature point based on the probability distribution PA2 corresponding to the to-be-decoded feature point, to obtain the feature value. In this case, the foregoing steps are repeated. The entropy decoding unit A2 may decode the bitstream SA, and output the feature map matrix Y2 to the decoder network, and the decoder network performs inverse spatial transformation on the feature map matrix Y2, to obtain the reconstructed image.

For example, the entropy encoding unit A1 may perform parallel encoding or serial encoding on to-be-encoded feature points of different target channel groups. This is not limited in this application. Correspondingly, the entropy decoding unit A2 may perform parallel decoding or serial decoding on to-be-decoded feature points of the different target channel groups. This is not limited in this application.

It should be noted that, in the encoding process, the feature map matrix Y1 may alternatively be input to the hyper encoder network, and the feature map matrix Z2 is obtained via the hyper encoder network and the quantization unit D2. This is not limited in this application.

It should be noted that a network or a unit in a right dashed-line box in FIG. 5 may alternatively be another network or another unit, and may be specifically set based on a requirement. This is not limited in this application.

It should be noted that a network and a unit that are configured to generate another estimated information matrix of the at least one probability distribution parameter may be further included in the AI encoding unit, the AI decoding unit, the entropy encoding unit, and the entropy decoding unit in this application. Then the another estimated information matrix is input to the aggregation unit. The aggregation unit determines the at least one probability distribution parameter of the to-be-encoded/to-be-decoded feature point based on a feature value of an encoded/decoded feature point corresponding to the target channel group including the k channels, the estimated information matrix corresponding to the target channel group, and the another estimated information matrix. This is not limited in this application.

For example, the AI encoding unit and the AI decoding unit (except the aggregation unit and the probability estimation unit V1) may be disposed in an NPU (Neural network Processing Unit, embedded neural network processing unit) or a GPU (Graphics Processing Unit, graphics processing unit). For example, the entropy encoding unit, the entropy decoding unit, the aggregation unit, and the probability estimation unit V1 may be disposed in a CPU (Central Processing Unit, central processing unit). Therefore, compared with the conventional technology in which an aggregation unit and a probability estimation unit V1 are deployed in a GPU, in this application, in the decoding process, each time the CPU obtains a feature value of one decoded feature point through decoding, the feature value is directly stored in a memory of the CPU, and the aggregation unit and the probability estimation unit V1 in the CPU determine the at least one probability distribution parameter of the to-be-decoded feature point, thereby, in the decoding process, avoiding frequent communication between the CPU and the GPU, and improving decoding efficiency.

In a possible implementation, the estimated information matrices that are of the C channels and that are output by the hyper decoder network in FIG. 5 include first feature matrices of the C channels and second feature matrices of the C channels. The first feature matrices of the C channels may be used to determine first probability distribution parameters, and the second feature matrices of the C channels may be used to determine second probability distribution parameters.

The first feature matrix may include first features of H*W feature points, and the second feature matrix may include second features of H*W feature points. In this case, the process of determining the at least one probability distribution parameter of the to-be-encoded feature point may be as follows.

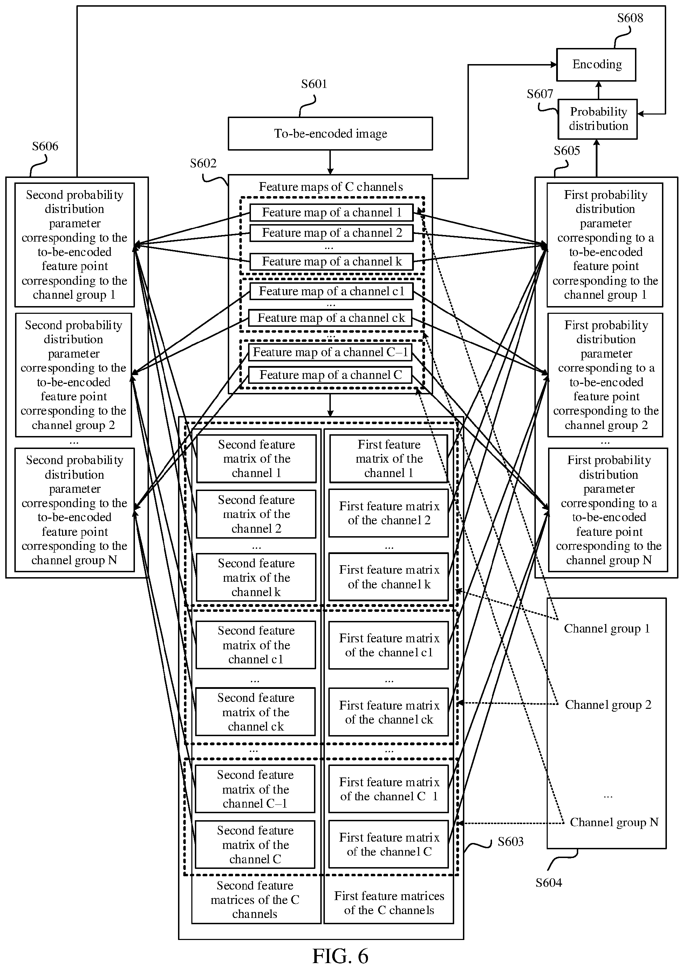

FIG. 6 is a diagram of an example of an encoding process.

S601: Obtain a to-be-encoded image.

S602: Generate feature maps of C channels based on the to-be-encoded image, where the feature maps include feature values of a plurality of feature points, and C is a positive integer.

S603: Generate estimated information matrices of the C channels based on the feature maps of the C channels, where the estimated information matrix includes estimated information of a plurality of feature points.

S604: Group the C channels into N channel groups.

For example, for S601 to S604, refer to the descriptions of S201 to S204.

The estimated information matrices of the C channels include first feature matrices of the C channels and second feature matrices of the C channels. The first feature matrices of the C channels may be used to determine first probability distribution parameters, and the second feature matrices of the C channels may be used to determine second probability distribution parameters. The first feature matrix may include first features of H*W feature points, and the second feature matrix may include second features of H*W feature points.

S605: Determine, based on at least one feature value of at least one encoded feature point corresponding to a target channel group, and a first feature matrix corresponding to the target channel group, at least one first probability distribution parameter corresponding to a to-be-encoded feature point corresponding to the target channel group.

For example, for S605, refer to the description of S205 above, to determine the at least one first probability distribution parameter of the to-be-encoded feature point corresponding to the target channel group. Details are not described herein again.

S606: Determine, based on the at least one feature value of the at least one encoded feature point corresponding to the target channel group and a second feature matrix corresponding to the target channel group, at least one second probability distribution parameter corresponding to the to-be-encoded feature point corresponding to the target channel group.

For example, for S606, refer to the description of S205 above, to determine the at least one second probability distribution parameter of the to-be-encoded feature point corresponding to the target channel group. Details are not described herein again.

For example, at least one probability distribution parameter of the to-be-encoded feature point corresponding to the target channel group may include the first probability distribution parameter of the to-be-encoded feature point corresponding to the target channel group and the at least one second probability distribution parameter of the to-be-encoded feature point corresponding to the target channel group.

In a possible implementation, the first probability distribution parameter is a mean (mean), and the second probability distribution parameter is a variance (scale).

In a possible implementation, the first probability distribution parameter is a variance (scale), and the second probability distribution parameter is a mean (mean).

S607: Determine, based on the at least one first probability distribution parameter and the at least one second probability distribution parameter that correspond to the to-be-encoded feature point, probability distribution corresponding to the to-be-encoded feature point.

S608: Encode the to-be-encoded feature point based on the probability distribution corresponding to the to-be-encoded feature point, to obtain a bitstream.

For example, for S607 and S608, refer to the descriptions of S206 and S207 above. Details are not described herein again.

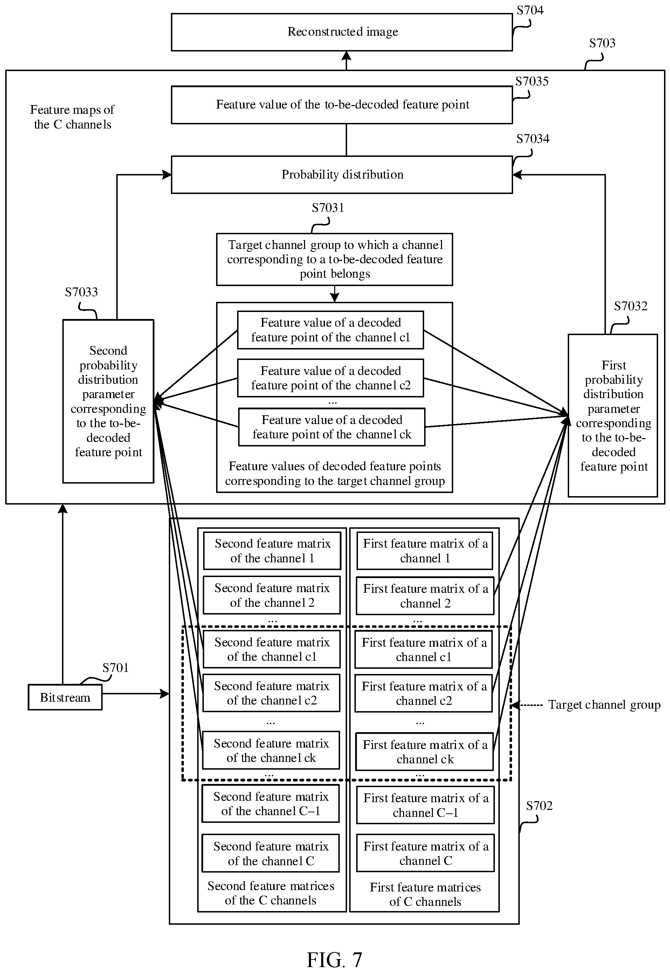

FIG. 7 is a diagram of an example of a decoding process. The decoding process in the embodiment in FIG. 7 corresponds to the encoding process in the embodiment in FIG. 6.

S701: Receive a bitstream.

For example, the bitstream received by a decoder side may include a bitstream of an image and a bitstream that is of prior information of C channels and that corresponds to the image.

For example, the bitstream of the image may include encoded data of feature values of feature points of the C channels, and the bitstream of the prior information of the C channels may include encoded data of the prior information of the C channels.

S702: Decode the bitstream to obtain estimated information matrices of the C channels.

For example, after the bitstream is received, the bitstream may be parsed to obtain the encoded data of the prior information of the C channels. Then, entropy decoding and hyper decoding are performed on the encoded data of the prior information of the C channels, to obtain first feature matrices of the C channels and second feature matrices of the C channels.

S703: Decode the bitstream to obtain the feature values of the feature points of the C channels based on the estimated information matrices of the C channels, to obtain feature maps of the C channels.

For example, for S703, refer to the descriptions of S403 above. Details are not described herein again.

For example, it may be determined that a to-be-decoded feature point is determined from an undecoded feature point in a decoding order corresponding to the encoding order in FIG. 3c. Then, a feature value of the to-be-decoded feature point may be obtained through decoding with reference to steps 7031 to 7035 below.

S7031: Determine, from N channel groups obtained by grouping the C channels, a target channel group to which a channel corresponding to the to-be-decoded feature point belongs.

S7032: Determine, based on at least one feature value of at least one decoded feature point corresponding to the target channel group, and a first feature matrix corresponding to the target channel group, at least one first probability distribution parameter corresponding to the to-be-decoded feature point.

S7033: Determine, based on the at least one feature value of the at least one decoded feature point corresponding to the target channel group and a second feature matrix corresponding to the target channel group, at least one second probability distribution parameter corresponding to the to-be-decoded feature point.

S7034: Determine, based on the at least one first probability distribution parameter and the at least one second probability distribution parameter that correspond to the to-be-decoded feature point, probability distribution corresponding to the to-be-decoded feature point.

S7035: Decode the to-be-decoded feature point based on the probability distribution corresponding to the to-be-decoded feature point, to obtain the feature value.

For example, for S7031 to S7035, refer to the descriptions of S4031 to S4034 above. Details are not described herein again.

S704: Perform reconstruction based on the feature maps of the C channels, to output a reconstructed image.

For example, for S704, refer to the descriptions of S404 above. Details are not described herein again.

In a possible implementation, estimated information matrices that are of C channels and that are output by a hyper decoder network in FIG. 5 include first feature matrices of the C channels and second probability distribution parameter matrices of the C channels. The first feature matrices of the C channels may be used to determine first probability distribution parameters, and the first feature matrix may include first features of H*W feature points. The second probability distribution parameter matrix may include second probability distribution parameters of H*W feature points. In this case, a process of determining at least one probability distribution parameter of a to-be-encoded feature point may be as follows.

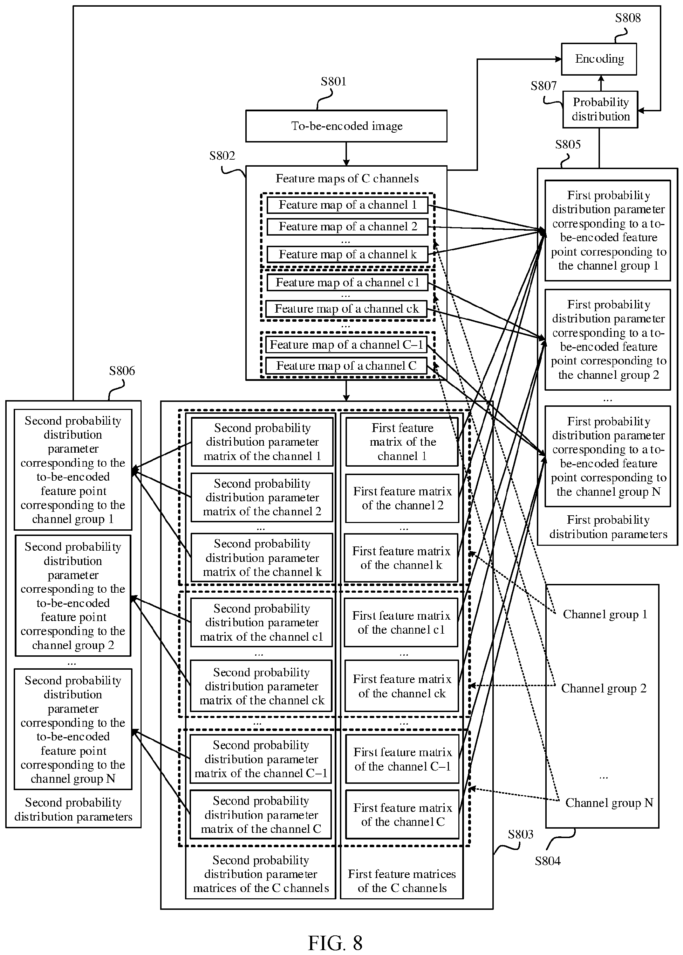

FIG. 8 is a diagram of an example of an encoding process.

S801: Obtain a to-be-encoded image.

S802: Generate feature maps of C channels based on the to-be-encoded image, where the feature maps include feature values of a plurality of feature points, and C is a positive integer.

S803: Generate estimated information matrices of the C channels based on the feature maps of the C channels, where the estimated information matrix includes estimated information of a plurality of feature points.

S804: Group the C channels into N channel groups.

For example, for S801 to S804, refer to the descriptions of S201 to S204.

The estimated information matrices of the C channels include first feature matrices of the C channels and second probability distribution parameter matrices of the C channels. The first feature matrices of the C channels may be used to determine first probability distribution parameters, and the first feature matrix may include first features of H*W feature points. The second probability distribution parameter matrix may include second probability distribution parameters of H*W feature points.

S805: Determine, based on at least one feature value of at least one encoded feature point corresponding to a target channel group, and a first feature matrix corresponding to the target channel group, at least one first probability distribution parameter corresponding to a to-be-encoded feature point corresponding to the target channel group.

For example, for S805, refer to the description of S205 above, to determine the at least one first probability distribution parameter of the to-be-encoded feature point corresponding to the target channel group. Details are not described herein again.

In a possible implementation, the first probability distribution parameter is a mean (mean), and the second probability distribution parameter is a variance (scale).

In a possible implementation, the first probability distribution parameter is a variance (scale), and the second probability distribution parameter is a mean (mean).

S806: Determine, based on a second probability distribution parameter matrix corresponding to the target channel group, at least one second probability distribution parameter of the to-be-encoded feature point corresponding to the target channel group.

For example, one to-be-encoded feature point of a channel c (c is a positive integer less than or equal to C) in the target channel group is used as an example for description. For example, a second probability distribution parameter matrix of the channel c may be determined from the second probability distribution parameter matrices of the C channels.

Then, the at least one second probability distribution parameter corresponding to the to-be-encoded feature point is determined from the second probability distribution parameter matrix of the channel c based on a location of the to-be-encoded feature point in a feature map of the channel c.

S807: Determine, based on the at least one first probability distribution parameter and the at least one second probability distribution parameter that correspond to the to-be-encoded feature point, probability distribution corresponding to the to-be-encoded feature point.

S808: Encode the to-be-encoded feature point based on the probability distribution corresponding to the to-be-encoded feature point, to obtain a bitstream.

For example, for S807 and S808, refer to the descriptions of S206 and S207 above. Details are not described herein again.

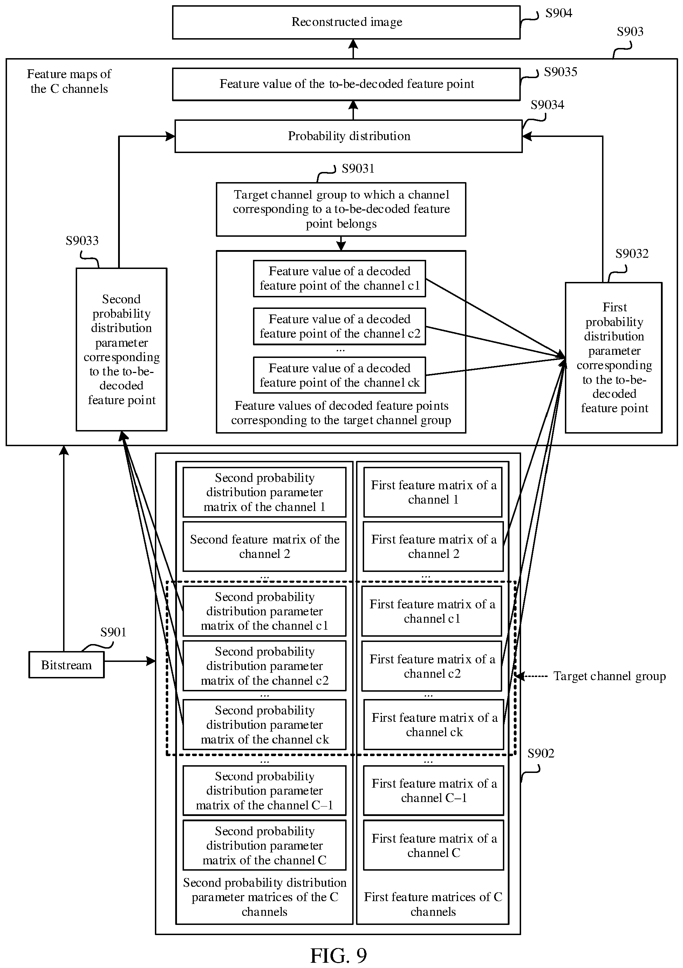

FIG. 9 is a diagram of an example of a decoding process. The decoding process in the embodiment in FIG. 9 corresponds to the encoding process in the embodiment in FIG. 8.

S901: Receive a bitstream.

For example, for S901, refer to the descriptions of S701 above. Details are not described herein again.

S902: Decode the bitstream to obtain estimated information matrices of C channels.

For example, after the bitstream is received, the bitstream may be parsed to obtain encoded data of prior information of the C channels. Then, entropy decoding and hyper decoding are performed on the encoded data of the prior information of the C channels, to obtain first feature matrices of the C channels and second probability distribution parameter matrices of the C channels.

S903: Decode the bitstream to obtain the feature values of the feature points of the C channels based on the estimated information matrices of the C channels, to obtain feature maps of the C channels.

For example, for S903, refer to the descriptions of S403 above. Details are not described herein again.

For example, it may be determined that a to-be-decoded feature point is determined from an undecoded feature point in a decoding order corresponding to the encoding order in FIG. 3c. Then, a feature value of the to-be-decoded feature point may be obtained through decoding with reference to steps S9031 to S9034 below.

S9031: Determine, from N channel groups obtained by grouping the C channels, a target channel group to which a channel corresponding to the to-be-decoded feature point belongs.

S9032: Determine, based on at least one feature value of at least one decoded feature point corresponding to the target channel group, and a first feature matrix corresponding to the target channel group, at least one first probability distribution parameter corresponding to the to-be-decoded feature point.

S9033: Determine, based on a second probability distribution parameter matrix corresponding to the target channel group, at least one second probability distribution parameter of the to-be-decoded feature point.

For example, it is assumed that the channel corresponding to the to-be-decoded feature point is a channel c. In this case, a second probability distribution parameter matrix of the channel c may be determined from the second probability distribution parameter matrices of the C channels. Then, the at least one second probability distribution parameter corresponding to the to-be-decoded feature point is determined from the second probability distribution parameter matrix of the channel c based on a location of the to-be-decoded feature point.

S9034: Determine, based on the at least one first probability distribution parameter and the at least one second probability distribution parameter that correspond to the to-be-decoded feature point, probability distribution corresponding to the to-be-decoded feature point.

S9035: Decode the to-be-decoded feature point based on the probability distribution corresponding to the to-be-decoded feature point, to obtain the feature value.

For example, for S9031 to S9035, refer to the descriptions of S4031 to S4034 above. Details are not described herein again.

S904: Perform image reconstruction based on the feature maps of the C channels, to output a reconstructed image.

For example, for S904, refer to the descriptions of S404 above. Details are not described herein again.

In a possible implementation, estimated information matrices that are of C channels and that are output by a hyper decoder network in FIG. 5 include first probability distribution parameter matrices of the C channels and second feature matrices of the C channels. The second feature matrices of the C channels may be used to determine second probability distribution parameters, and the second feature matrix may include second features of H*W feature points. The first probability distribution parameter matrix may include first probability distribution parameters of H*W feature points. In this case, a process of determining at least one probability distribution parameter of a to-be-encoded feature point may be as follows.

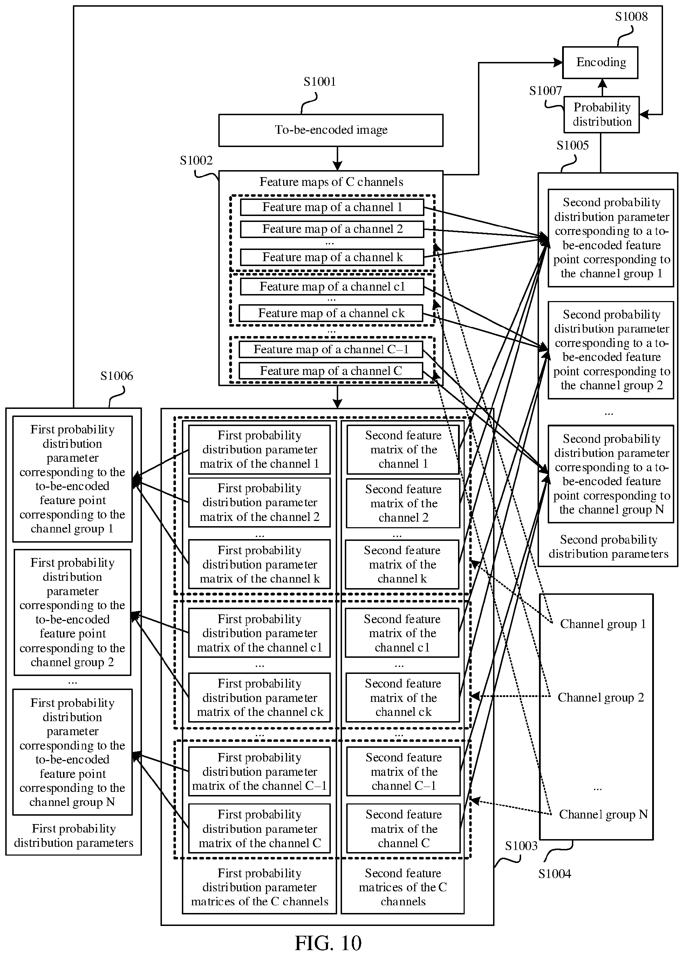

FIG. 10 is a diagram of an example of an encoding process.

S1001: Obtain a to-be-encoded image.

S1002: Generate feature maps of C channels based on the to-be-encoded image, where the feature maps include feature values of a plurality of feature points, and C is a positive integer.

S1003: Generate estimated information matrices of the C channels based on the feature maps of the C channels, where the estimated information matrix includes estimated information of a plurality of feature points.

S1004: Group the C channels into N channel groups.

For example, for S1001 to S1004, refer to the descriptions of S201 to S204.

The estimated information matrices of the C channels include first probability distribution parameter matrices of the C channels and second feature matrices of the C channels. The second feature matrices of the C channels may be used to determine second probability distribution parameters, and the second feature matrix may include second features of H*W feature points. The first probability distribution parameter matrix may include first probability distribution parameters of H*W feature points.

S1005: Determine, based on at least one feature value of at least one encoded feature point corresponding to a target channel group and a second feature matrix corresponding to the target channel group, at least one second probability distribution parameter corresponding to a to-be-encoded feature point corresponding to the target channel group.

For example, for S1005, refer to the description of S205 above, to determine the at least one second probability distribution parameter of the to-be-encoded feature point corresponding to the target channel group. Details are not described herein again.

In a possible implementation, the first probability distribution parameter is a mean (mean), and the second probability distribution parameter is a variance (scale).

In a possible implementation, the first probability distribution parameter is a variance (scale), and the second probability distribution parameter is a mean (mean).

S1006: Determine, based on a first probability distribution parameter matrix corresponding to the target channel group, at least one first probability distribution parameter of the to-be-encoded feature point corresponding to the target channel group.

For example, one to-be-encoded feature point of a channel c in the target channel group is used as an example for description. For example, a first probability distribution parameter matrix of the channel c may be determined from the first probability distribution parameter matrices of the C channels. Then, the at least one first probability distribution parameter corresponding to the to-be-encoded feature point is determined from the first probability distribution parameter matrix of the channel c based on a location of the to-be-encoded feature point in a feature map of the channel c.

S1007: Determine, based on the at least one first probability distribution parameter and the at least one second probability distribution parameter that correspond to the to-be-encoded feature point, probability distribution corresponding to the to-be-encoded feature point.

S1008: Encode the to-be-encoded feature point based on the probability distribution corresponding to the to-be-encoded feature point, to obtain a bitstream.

For example, for S1007 and S1008, refer to the descriptions of S206 and S207 above. Details are not described herein again.

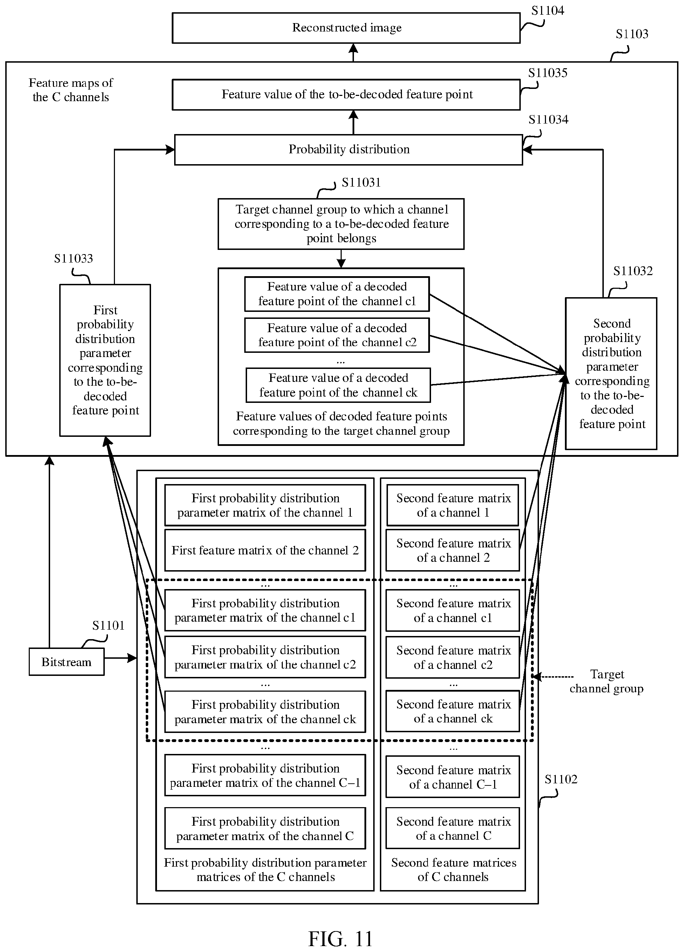

FIG. 11 is a diagram of an example of a decoding process. The decoding process in the embodiment in FIG. 11 corresponds to the encoding process in the embodiment in FIG. 10.

S1101: Receive a bitstream.

For example, for S1101, refer to the descriptions of S701 above. Details are not described herein again.

S1102: Decode the bitstream to obtain estimated information matrices of C channels.

For example, after the bitstream is received, the bitstream may be parsed to obtain encoded data of prior information of the C channels. Then, entropy decoding and hyper decoding are performed on the encoded data of the prior information of the C channels, to obtain first probability distribution parameter matrices of the C channels and second feature matrices of the C channels.

S1103: Decode the bitstream to obtain feature values of feature points of the C channels based on the estimated information matrices of the C channels, to obtain feature maps of the C channels.

For example, for S1103, refer to the descriptions of S403 above. Details are not described herein again.

For example, it may be determined that a to-be-decoded feature point is determined from an undecoded feature point in a decoding order corresponding to the encoding order in FIG. 3c. Then, a feature value of the to-be-decoded feature point may be obtained through decoding with reference to steps S11031 to S11034 below.

S11031: Determine, from N channel groups obtained by grouping the C channels, a target channel group to which a channel corresponding to the to-be-decoded feature point belongs, where the channel group includes k channels.

S11032: Determine, based on at least one feature value of at least one decoded feature point corresponding to the target channel group and a second feature matrix corresponding to the target channel group, at least one second probability distribution parameter corresponding to the to-be-decoded feature point.

S11033: Determine, based on a first probability distribution parameter matrix corresponding to the target channel group, at least one first probability distribution parameter of a to-be-encoded feature point.

For example, it is assumed that the channel corresponding to the to-be-decoded feature point is a channel c (c is a positive integer less than or equal to C). In this case, a first probability distribution parameter matrix of the channel c may be determined from the first probability distribution parameter matrices of the C channels. Then, the at least one first probability distribution parameter corresponding to the to-be-decoded feature point is determined from the first probability distribution parameter matrix of the channel c based on a spatial location of the to-be-decoded feature point.

S11034: Determine, based on the at least one first probability distribution parameter and the at least one second probability distribution parameter that correspond to the to-be-decoded feature point, probability distribution corresponding to the to-be-decoded feature point.

S11035: Decode the to-be-decoded feature point based on the probability distribution corresponding to the to-be-decoded feature point, to obtain the feature value.

For example, for S11031 to S11035, refer to the descriptions of S4031 to S4034 above. Details are not described herein again.

S1104: Perform image reconstruction based on the feature maps of the C channels, to output a reconstructed image.

For example, for S1104, refer to the descriptions of S404 above. Details are not described herein again.

The following describes, by using an example, how an aggregation unit determines at least one probability distribution parameter corresponding to a to-be-encoded feature point corresponding to a target channel group. Descriptions are provided by using an example in which a first probability distribution parameter is a mean (mean) and a second probability distribution parameter is a variance (scale).

For example, linear weighting may be performed on at least one feature value of at least one encoded feature point corresponding to a target channel group including k channels, and an estimated information matrix corresponding to the target channel group, to determine at least one probability distribution parameter corresponding to a to-be-encoded feature point corresponding to the target channel group. Therefore, a calculation amount for determining the probability distribution parameter may be reduced from original tens of thousands of multiply-accumulate calculations to at least several multiply-accumulate calculations and at most hundreds of multiply-accumulate calculations. This greatly reduces the calculation amount.

For example, a size of a linear weighting window may be preset, for example, ks1*ks2. Then, linear weighting is performed on at least one feature value of at least one encoded feature point that is in the linear weighting window and that is in a feature map corresponding to a target channel group, and estimated information of a feature point corresponding to a part of locations that is in the linear weighting window and that is in an estimated information matrix corresponding to the target channel group, to determine at least one probability distribution parameter corresponding to a to-be-encoded feature point corresponding to the target channel group. ks1 and ks2 are integers greater than 1, and ks1 and ks2 may be equal or unequal. This is not limited in this application. Therefore, the at least one probability distribution parameter corresponding to the to-be-encoded feature point is determined based on a feature value and estimated information of a feature point around the to-be-encoded feature point, so that a calculation amount for the probability distribution parameter can be reduced while accuracy of the determined probability distribution parameter is ensured.

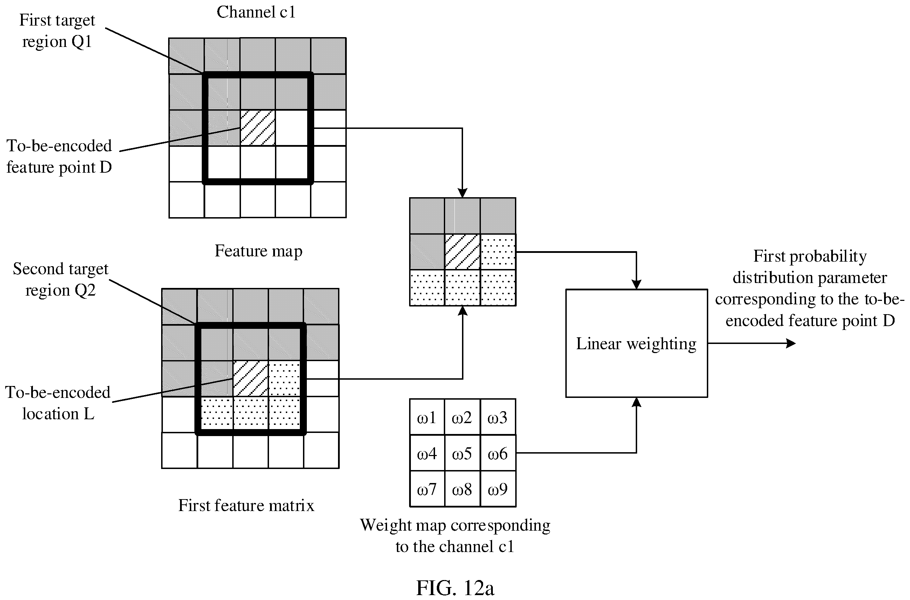

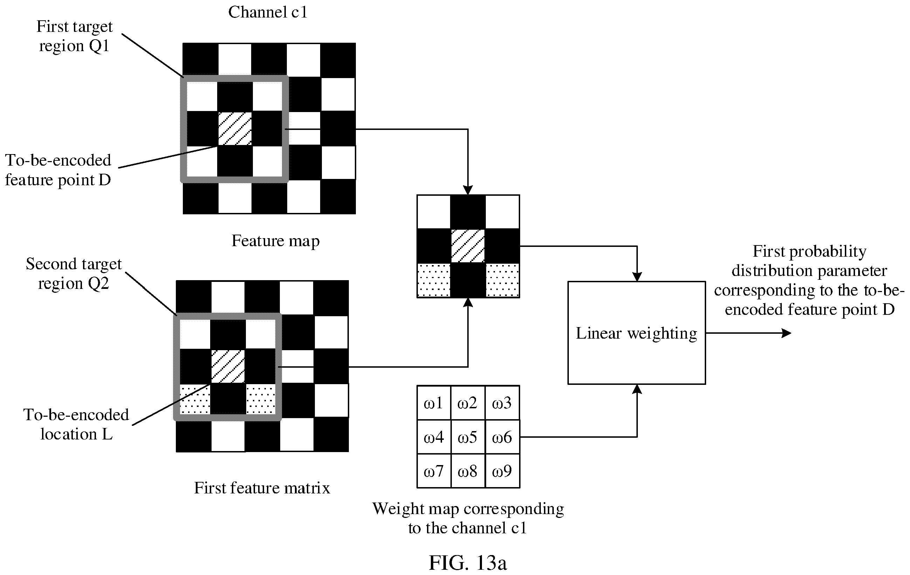

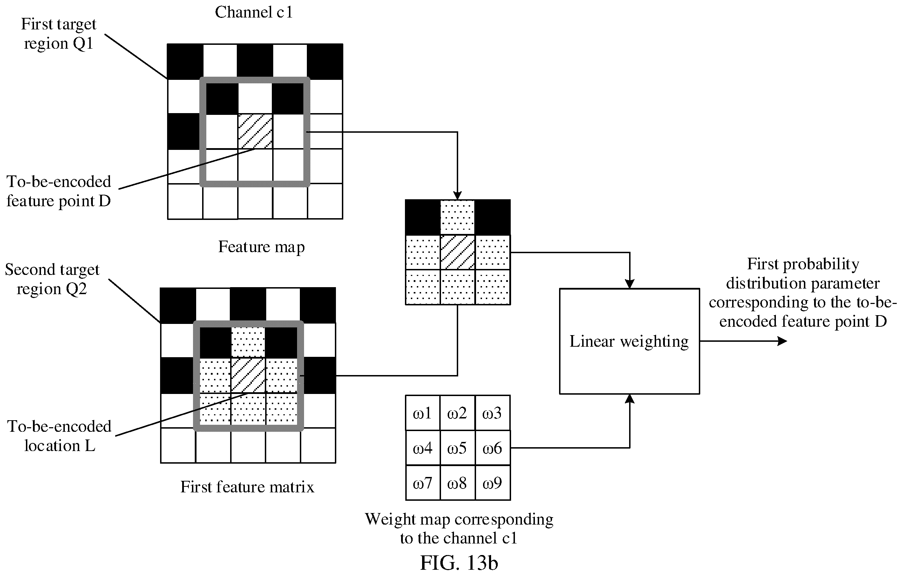

For example, the following embodiments in FIG. 12a to FIG. 12d and the following embodiments in FIG. 13a and FIG. 13b describe a process in which linear weighting is performed on at least one feature value of at least one encoded feature point corresponding to a target channel group including k channels, and a first feature matrix corresponding to the target channel group, to determine a first probability distribution parameter corresponding to a to-be-encoded feature point corresponding to the target channel group.

FIG. 12a is a diagram of an example of a process of determining a probability distribution parameter. In the embodiment in FIG. 12a, a number of channels, k, included in a target channel group is equal to 1, ks1=ks3=3, and an encoding order on an encoder side is shown in (1) in FIG. 3c. It is assumed that the target channel group includes a first channel (referred to as a channel c1 below). In a feature map of the channel c1, a gray block represents an encoded feature point, a white block represents an unencoded feature point, and a block filled with oblique lines represents a to-be-encoded feature point D. In a first feature matrix of the channel c1, a gray block represents an encoded location, a white block represents an unencoded location, and a block filled with oblique lines represents a to-be-encoded location L. The encoded location is a location of the encoded feature point, the unencoded location is a location of the unencoded feature point, and the to-be-encoded location L is a location of the to-be-encoded feature point D.

Refer to FIG. 12a. For example, a first target region Q1 that is in the feature map of the channel c1 and that uses the to-be-encoded feature point D as a center may be determined based on a size of a linear weighting window. A second target region Q2 that is in the first feature matrix of the channel c1 and that uses the to-be-encoded location L as a center is determined based on the size of the linear weighting window. Sizes of the first target region Q1 and the second target region Q2 are the same, and are both ks1*ks2.

Refer to FIG. 12a. For example, an encoded feature point in the first target region Q1 may be determined as a feature point, for linear weighting calculation, in the feature map, namely, a feature point corresponding to a gray block in the first target region Q1 in FIG. 12a. It is assumed that the location of the to-be-encoded feature point D is (c1, w, h) (c1 is an integer from 1 to C, w is an integer from 1 to W, and h is an integer from 1 to H). In this case, locations of feature points, for linear weighting calculation, in the feature map of the channel c1 include (c1, w-1, h), (c1, w-1, h-1), (c1, w, h-1), and (c1, w+1, h-1).

For example, a first target location, for linear weighting calculation, in the first feature matrix of the channel c1 may be determined based on a location other than an encoded location in the second target region Q2. In a possible implementation, the to-be-encoded location L and at least one other unencoded location (referred to as a first unencoded location below) in the second target region Q2 may be determined as first target locations. The first unencoded location is a location other than the to-be-encoded location L in all unencoded locations in the second target region Q2.

Refer to FIG. 12a. In a possible implementation, locations other than encoded locations in the second target region Q2 (namely, the to-be-encoded location L and all first unencoded locations in the second target region Q2) may be determined as first target locations, namely, locations that correspond to the block filled with the oblique lines and blocks filled with dots and that are in the second target region Q2 in FIG. 12a.

It is assumed that the location of the to-be-encoded feature point D is (c1, w, h), and the locations of the feature points, for linear weighting calculation, in the feature map of the channel c1 include (c1, w-1, h), (c1, w-1, h-1), (c1, w, h-1), and (c1, w+1, h-1). In this case, the first target locations include (c1, w, h), (c1, w+1, h), (c1, w-1, h+1), (c1, w, h+1), and (c1, w+1, h+1).

For example, in a training process, the aggregation unit learns of a weight matrix (namely, a preset weight matrix) that corresponds to each channel and that is used for linear weighting. The preset weight matrix may include weight maps of k channels, and a size of the weight map is the same as the size of the linear weighting window, for example, ks1*ks2. In the embodiment in FIG. 12a, a preset weight matrix corresponding to the channel c1 includes a weight map of one channel, and the weight map corresponding to the channel c1 includes nine weights: $\omega 1, \omega 2, \omega 3, \omega 4, \omega 5, \omega 6, \omega 7, \omega 8,$ and $\omega 9$.

For example, linear weighting may be performed, based on the weight map corresponding to the channel c1, on a feature value of the encoded feature point in the first target region Q1 and a first feature of a feature point corresponding to the first target location in the second target region Q2, to obtain at least one first probability distribution parameter corresponding to the to-be-encoded feature point D.

It is assumed that the location of the to-be-encoded feature point D is (c1, w, h), the feature values of the encoded feature points in the first target region Q1 are represented as: $y[c1][w-1][h]$, $y[c1][w-1][h-1]$, $y[c1][w][h-1]$, and $y[c1][w+1][h-1]$, and the first features of the feature points corresponding to the first target locations in the second target region Q2 are represented as $\varphi[c1][w][h]$, $\varphi[c1][w+1][h]$, $\varphi[c1][w-1][h+1]$, $\varphi[c1][w][h+1]$, and $\varphi[c1][w+1][h+1]$. In this case, the at least one first probability distribution parameter corresponding to the to-be-encoded feature point D in the feature map of the channel $c1 = \omega 1*y[c1][w-1][h] + \omega 2*y[c1][w-1][h-1] + \omega 3*y[c1][w][h-1] + \omega 4*y[c1][w+1][h-1] + \omega 5*\varphi[c1][w][h] + \omega 6*\varphi[c1][w+1][h] + \omega 7*\varphi[c1][w-1][h+1] + \omega 8*\varphi[c1][w][h+1] + \omega 9*\varphi[c1][w+1][h+1]$.

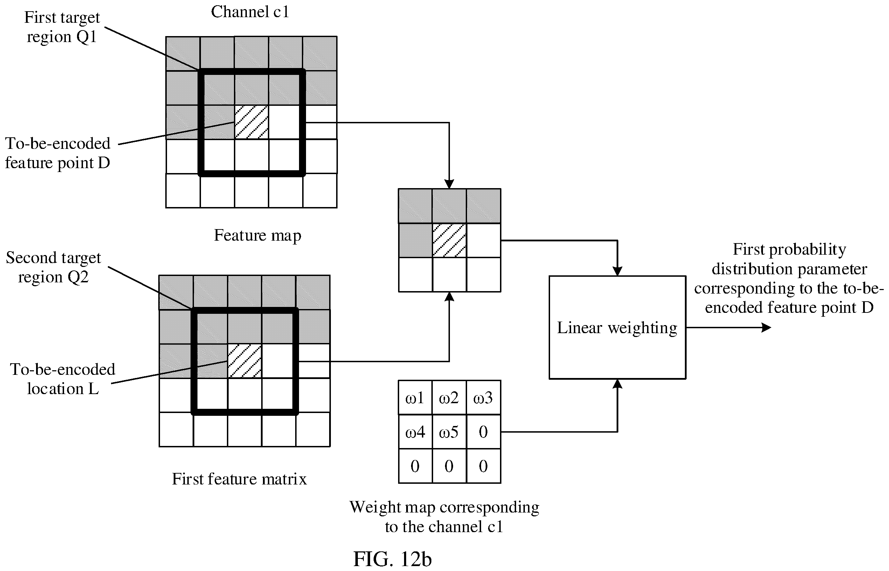

FIG. 12b is a diagram of an example of a process of determining a probability distribution parameter. In the embodiment in FIG. 12b, a number of channels, k, included in a target channel group is equal to 1, ks1=ks3=3, and an encoding order on an encoder side is shown in (1) in FIG. 3c. It is assumed that the target channel group includes a first channel (referred to as a channel c1 below). In a feature map of the channel c1, a gray block represents an encoded feature point, a white block represents an unencoded feature point, and a block filled with oblique lines represents a to-be-encoded feature point D. In a first feature matrix of the channel c1, a gray block represents an encoded location, a white block represents an unencoded location, and a block filled with oblique lines represents a to-be-encoded location L. The encoded location is a location of the encoded feature point, the unencoded location is a location of the unencoded feature point, and the to-be-encoded location L is a location of the to-be-encoded feature point D.

For example, a difference between FIG. 12b and FIG. 12a lies in that a manner of determining, based on a location other than an encoded location in a second target region Q2, a first target location, for linear weighting calculation, in the first feature matrix in FIG. 12b is different from that in FIG. 12a.

Refer to FIG. 12b. In a possible implementation, the to-be-encoded location L in the second target region Q2 may be determined as the first target location. It is assumed that the location of the to-be-encoded feature point D is (c1, w, h), and locations of feature points, for linear weighting calculation, in the feature map of the channel c1 include (c1, w-1, h), (c1, w-1, h-1), (c1, w, h-1), and (c1, w+1, h-1). In this case, the first target location is (c1, w, h).

In this case, in a weight map corresponding to the channel c1, $\omega 6, \omega 7, \omega 8,$ and $\omega 9$ are all equal to 0. In this case, at least one first probability distribution parameter corresponding to the to-be-encoded feature point D in the feature map of the channel $c1 = +\omega 1*y[c1][w-1][h] + \omega 2*y[c1][w-1][h-1] + \omega 3*y[c1][w][h-1] + \omega 4*y[c1][w+1][h-1] + \omega 5*\varphi[c1][w][h]$

A test set including a plurality of images with different resolutions is used below for testing, to compare encoding performance of encoding based on the embodiment in FIG. 12a with encoding performance of encoding based on the embodiment in FIG. 12b.

For example, 16 to-be-encoded images with different resolutions are used for testing, to obtain a rate gain obtained by comparing encoding based on the embodiment in FIG. 12a with encoding in the conventional technology (BD-rate, where a larger negative value of the BD-rate indicates higher encoding performance corresponding to encoding based on the embodiment in FIG. 12a), and a BD-rate obtained by comparing encoding based on the embodiment in FIG. 12b with encoding in the conventional technology. Details may be shown in Table 1:

Table 1

| Serial number | Encoding based on the embodiment in FIG. 12a | | | Encoding based on the embodiment in FIG. 12b | | |
| --- | --- | --- | --- | --- | --- | --- |
| | Y | U | V | Y | U | V |
| 1 | -1.88% | -19.50% | -7.49% | -1.09% | -4.60% | -15.66% |
| 2 | -2.30% | -1.50% | -25.02% | -1.60% | -8.93% | -9.68% |
| 3 | -2.85% | -2.03% | 3.80% | -1.89% | -12.51% | 3.90% |
| 4 | -1.38% | -2.59% | -13.21% | -1.32% | -5.49% | -3.73% |
| 5 | -4.69% | 2.09% | 3.33% | -4.46% | 2.92% | 2.35% |
| 6 | -2.88% | -20.30% | -11.45% | -1.96% | -12.87% | -9.42% |
| 7 | -8.69% | -8.75% | -24.71% | -8.55% | -25.89% | -16.47% |
| 8 | -4.27% | -21.03% | -49.03% | -3.43% | -28.34% | -40.78% |
| 9 | -1.81% | -12.30% | -3.62% | -1.09% | -1.77% | -7.05% |
| 10 | -3.56% | -20.61% | -20.77% | -3.45% | -7.78% | -17.42% |
| 11 | -1.34% | -8.93% | 2.69% | -1.08% | -7.73% | 4.75% |
| 12 | -5.44% | -35.31% | -16.52% | -5.05% | -18.30% | -17.77% |
| 13 | -1.67% | 0.44% | 2.74% | -1.28% | -2.43% | 0.07% |
| 14 | -5.15% | -20.26% | -23.40% | -3.66% | -17.21% | -18.60% |
| 15 | -4.44% | -16.25% | -19.73% | -3.56% | -19.32% | -17.29% |
| 16 | -3.64% | -28.04% | -37.27% | -3.11% | -29.63% | -38.51% |
| AVG | -3.50% | -13.43% | -14.98% | -2.91% | -12.49% | -12.58% |

Refer to Table 1. Encoding performance of encoding based on the embodiment in FIG. 12a is better than encoding performance of encoding based on the embodiment in FIG. 12b on three channels of Y, U, and V. In other words, in a case of same encoding quality, a bit rate corresponding to encoding based on the embodiment in FIG. 12a is less than a bit rate corresponding to encoding based on the embodiment in FIG. 12b.

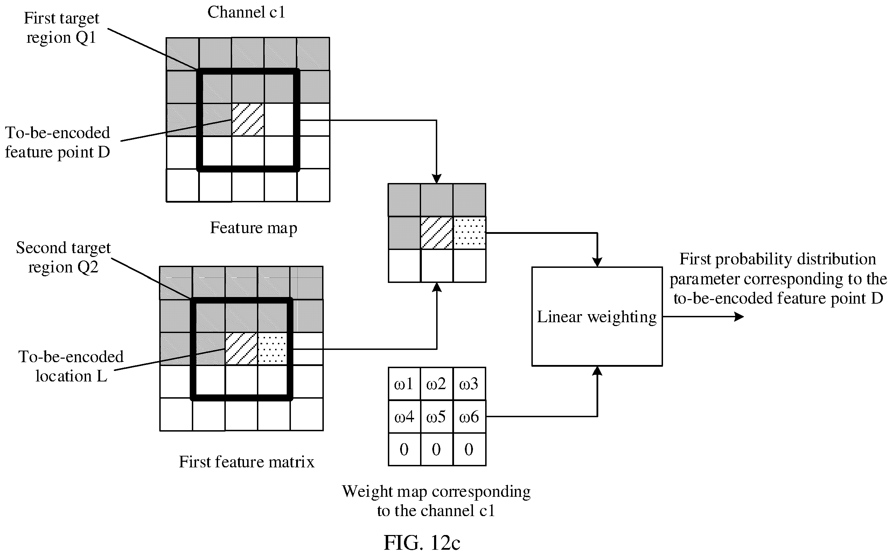

FIG. 12c is a diagram of an example of a process of determining a probability distribution parameter. In the embodiment in FIG. 12c, a number of channels, k, included in a target channel group is equal to 1, ks1=ks3=3, and an encoding order on an encoder side is shown in (1) in FIG. 3c. It is assumed that the target channel group includes a first channel (referred to as a channel c1 below). In a feature map of the channel c1, a gray block represents an encoded feature point, a white block represents an unencoded feature point, and a block filled with oblique lines represents a to-be-encoded feature point D. In a first feature matrix of the channel c1, a gray block represents an encoded location, a white block represents an unencoded location, and a block filled with oblique lines represents a to-be-encoded location L. The encoded location is a location of the encoded feature point, the unencoded location is a location of the unencoded feature point, and the to-be-encoded location L is a location of the to-be-encoded feature point D.

For example, a difference between FIG. 12c and FIG. 12a lies in that a manner of determining, based on a location other than an encoded location in a second target region Q2, a first target location, for linear weighting calculation, in the first feature matrix in FIG. 12c is different from that in FIG. 12a.

Refer to FIG. 12c. For example, the to-be-encoded location L and one first unencoded location in the second target region Q2 are determined as first target locations. It is assumed that the location of the to-be-encoded feature point D is (c1, w, h), and locations of feature points, for linear weighting calculation, in the feature map of the channel c1 include (c1, w-1, h), (c1, w-1, h-1), (c1, w, h-1), and (c1, w+1, h-1). In this case, the first target locations are (c1, w, h) and (c1, w+1, h).

In this case, in a weight map corresponding to the channel c1, $\omega 7$, $\omega 8$, and $\omega 9$ are all equal to 0. In this case, at least one first probability distribution parameter corresponding to the to-be-encoded feature point D in the feature map of the channel c1 = $\omega 1 * y[c1][w-1][h] + \omega 2 * y[c1][w-1][h-1] + \omega 3 * y[c1][w][h-1] + \omega 4 * \varphi[c1][w+1][h-1] + \omega 5 * \varphi[c1][w][h] + \omega 6 * \varphi[c1][w+1][h]$

It should be understood that, it is assumed that the location of the to-be-encoded feature point D is (c1, w, h), and the locations of the feature points, for linear weighting calculation, in the feature map include (c1, w-1, h), (c1, w-1, h-1), (c1, w, h-1), and (c1, w+1, h-1). In this case, in a possible implementation, the first target locations may be (c1, w, h), (c1, w+1, h), and (c1, w-1, h+1), in a possible implementation, the first target locations may be (c1, w, h), (c1, w+1, h), (c1, w-1, h+1), and (c1, w, h+1), in a possible implementation, the first target locations may be (c1, w, h) and (c1, w-1, h+1), in a possible implementation, the first target locations may be (c1, w, h) and (c1, w, h+1), and the like. This is not limited in this application.

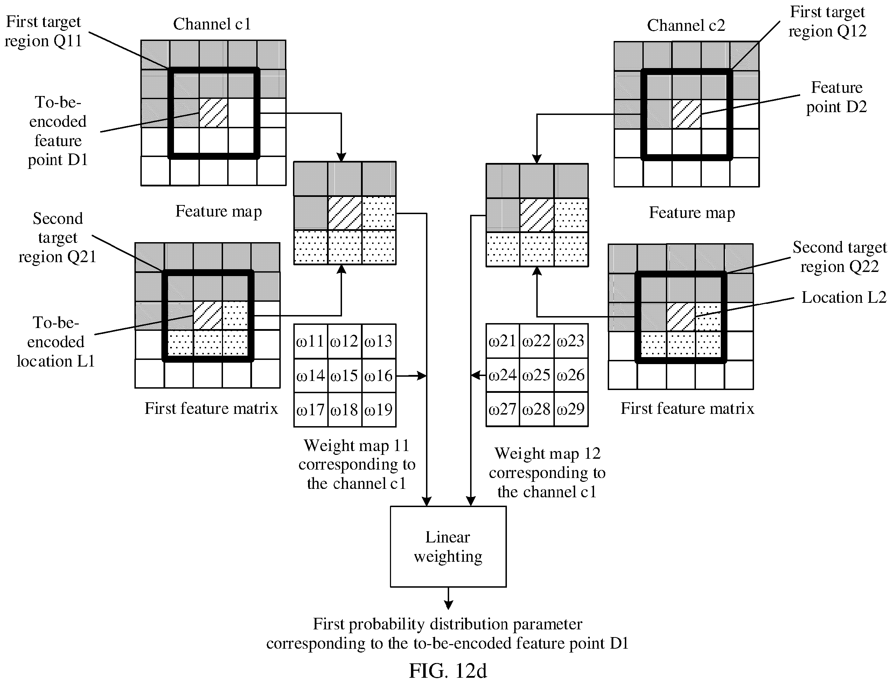

FIG. 12d is a diagram of an example of a process of determining a probability distribution parameter. In the embodiment in FIG. 12d, a number of channels, k, included in a target channel group is equal to 2, the target channel group includes two channels: a first channel (referred to as a channel c1 below) and a second channel (referred to as a channel c2 below), ks1=ks3=3, and an encoding order on an encoder side is shown in (1) in FIG. 3c.

In a feature map of the channel c1 and a feature map of the channel c2, a gray block represents an encoded feature point, and a white block represents an unencoded feature point. In the feature map of the channel c1, a block filled with oblique lines represents a to-be-encoded feature point D1. In the feature map of the channel c2, a block filled with oblique lines indicates a feature point D2 corresponding to a location of the to-be-encoded feature point D1.

In a first feature matrix of the channel c1 and a first feature matrix of the channel c2, a gray block represents an encoded location, and a white block represents an unencoded location. A block that is filled with oblique lines and that is in the first feature matrix of the channel c1 represents a to-be-encoded location L1, and a block that is filled with oblique lines and that is in the first feature matrix of the channel c2 represents a location L2. The encoded location is a location of the encoded feature point, the unencoded location is a location of the unencoded feature point, the to-be-encoded location L1 is a location of the to-be-encoded feature point D1, and the location L2 is a location corresponding to the to-be-encoded location L1 (namely, a location of the feature point D2).

Refer to FIG. 12d. For example, a first target region Q11 that is in the feature map of the channel c1 and that uses the to-be-encoded feature point D1 as a center may be determined based on a size of a linear weighting window, and a first target region Q12 that is in the feature map of the channel c2 and that uses the feature point corresponding to the location of the to-be-encoded feature point D1 as a center is determined based on the size of the linear weighting window. It is assumed that the location of the to-be-encoded feature point D1 in the feature map of the channel c1 is (c1, w, h). In this case, the feature point D2 whose location is (c2, w, h) in the feature map of the channel c2 is the feature point corresponding to the location of the to-be-encoded feature point D1.

Refer to FIG. 12d. For example, a second target region Q21 that is in the first feature matrix of the channel c1 and that uses the to-be-encoded location L1 as a center may be determined based on the size of the linear weighting window, and a second target region Q22 that is in the first feature matrix of the channel c2 and that uses the location corresponding to the to-be-encoded location L1 (namely, the location L2) as a center is determined based on the size of the linear weighting window.

Sizes of the first target region Q11, the first target region Q12, the second target region Q21, and the second target region Q22 are the same, and are all ks1*ks2.

Refer to FIG. 12d. For example, an encoded feature point in the first target region Q11 in the feature map of the channel c1 may be determined as a feature point, for linear weighting calculation, in the feature map of the channel c1, namely, a feature point corresponding to a gray block in the first target region Q11 in FIG. 12d. It is assumed that the location of the to-be-encoded feature point D1 is (c1, w, h). In this case, locations of feature points, for linear weighting calculation, in the feature map of the channel c1 include (c1, w-1, h), (c1, w-1, h-1), (c1, w, h-1), and (c1, w+1, h-1).

Refer to FIG. 12d. For example, an encoded feature point in the first target region Q12 in the feature map of the channel c2 may be determined as a feature point, for linear weighting calculation, in the feature map of the channel c2, namely, a feature point corresponding to a gray block in the first target region Q12 in FIG. 12d. It is assumed that the location of the to-be-encoded feature point D1 is (c1, w, h). In this case, the location of the feature point D2 is (c2, w, h), and locations of feature points, for linear weighting calculation, in the feature map of the channel c2 include (c2, w-1, h), (c2, w-1, h-1), (c2, w, h-1), and (c2, w+1, h-1).

For example, a first target location, for linear weighting calculation, in the first feature matrix of the channel c1 may be determined based on a location other than an encoded location in the second target region Q21 in the first feature matrix of the channel c1. In a possible implementation, the to-be-encoded location L1 and at least one first unencoded location in the second target region Q21 may be determined as first target locations. The first unencoded location is a location other than the to-be-encoded location in all unencoded locations in the second target region Q21.

Refer to FIG. 12d. Locations other than encoded locations in the second target region Q21 in the first feature matrix of the channel c1 (namely, the to-be-encoded location L1 and all first unencoded locations in the second target region Q21) may be determined as first target locations. It is assumed that the location of the to-be-encoded feature point D1 is (c1, w, h), and the locations of the feature points, for linear weighting calculation, in the first feature matrix of the channel c1 include (c1, w-1, h), (c1, w-1, h-1), (c1, w, h-1), and (c1, w+1, h-1). In this case, the first target locations include (c1, w, h), (c1, w+1, h), (c1, w-1, h+1), (c1, w, h+1), and (c1, w+1, h+1).

For example, a first target location, for linear weighting calculation, in the first feature matrix of the channel c2 may be determined based on a location other than an encoded location in the second target region Q22 in the first feature matrix of the channel c2. In a possible implementation, the location L2 corresponding to the to-be-encoded location and at least one other unencoded location (referred to as a second unencoded location below) in the second target region Q22 may be determined as first target locations. The second unencoded location is a location other than the location L2 in all unencoded locations in the second target region Q22.

Refer to FIG. 12d. Locations other than encoded locations in the second target region Q22 in the first feature matrix of the channel c2 (namely, the location L2 that corresponds to the to-be-encoded location and that is in the second target region Q22, and all second unencoded locations in the second target region Q22) may be determined as first target locations. It is assumed that the location of the to-be-encoded feature point D1 is (c1, w, h), and the locations of the feature points, for linear weighting calculation, in the first feature matrix of the channel c2 include (c2, w-1, h), (c2, w-1, h-1), (c2, w, h-1), and (c2, w+1, h-1). In this case, the first target locations include (c2, w, h), (c2, w+1, h), (c2, w-1, h+1), (c2, w, h+1), and (c2, w+1, h+1).

For example, a preset weight matrix corresponding to the channel c1 may be determined, and the preset weight matrix may include a weight map 11 and a weight map 12, as shown in FIG. 12d. A size of the weight map 11 is 3*3, and the weight map 11 includes nine weights: $\omega 11$, $\omega 12$, $\omega 13$, $\omega 14$, $\omega 15$, $\omega 16$, $\omega 17$, $\omega 18$, and $\omega 19$. A size of the weight map 12 is 3*3, and the weight map 12 includes nine weights: $\omega 21$, $\omega 22$, $\omega 23$, $\omega 24$, $\omega 25$, $\omega 26$, $\omega 27$, $\omega 28$, and $\omega 29$.

For example, linear weighting may be performed, based on the weight map 11 corresponding to the channel c1, on feature values of the encoded feature points in the first target region Q11 in the feature map of the channel c1 and first features of feature points corresponding to the first target locations in the second target region Q21 in the first feature matrix of the channel c1; and linear weighting may be performed, based on the weight map 12 corresponding to the channel c1, on feature values of the encoded feature points in the first target region Q12 in the feature map of the channel c2 and first features of feature points corresponding to the first target locations in the second target region Q22 in the first feature matrix of the channel c2, to obtain at least one first probability distribution parameter corresponding to the to-be-encoded feature point D1 in the feature map of the channel c1.

It is assumed that the feature values of the encoded feature points in the first target region Q11 in the feature map of the channel c1 are represented as y[c1][w-1][h], y[c1][w-1][h-1], y[c1][w][h-1], and y[c1][w+1][h-1], the first features of the feature points corresponding to the first target locations in the second target region Q21 in the first feature matrix of the channel c1 are represented as cp[c1][w][h], $\varphi$[c1][w+1][h], $\varphi$[c1][w-1][h+1], $\varphi$[c1][w][h+1], and $\varphi$[c1][w+1][h+1], the feature values of the encoded feature points in the first target region Q12 in the feature map of the channel c2 are represented as y[c2][w-1][h], y[c2][w-1][h-1], y[c2][w][h-1], and y[c2][w+1][h-1], and the first features of the feature points corresponding to the first target locations in the second target region Q22 in the first feature matrix of the channel c2 are represented as cp[c2][w][h], cp[c2][w+1][h], cp[c2][w-1][h+1], cp[c2][w][h+1], and $\varphi$[c2][w+1][h+1]. In this case, the at least one first probability distribution parameter corresponding to the to-be-encoded feature point D1 in the feature map of the channel c1= $\omega 11 * y[c1][w-1][h] + \omega 12 * y[c]1[w-1][h-1] + \omega 13 * y[c1][w][h-1] + \omega 14 * y[c1][w+1][h-1] + \omega 15 * \varphi[c1][w][h] + \omega 16 * \varphi[c]1[w+1][h] + \omega 17 * \varphi[c]1[w-1][h+1] + \omega 18 * \varphi[c1][w][h+1] + \omega 19 * \varphi[c1][w+1][h+1] + \omega 21 * y[c2][w-1][h] + \omega 22 * y[c2][w-1][h-1] + \omega 23 * y[c2][w][h-1] + \omega 24 * y[c2][w+1][h-1] + \omega 25 * \varphi[c2][w][h] + \omega 26 * \varphi[c2][w+1][h] + \omega 27 * \varphi[c2][w-1][h+1] + \omega 28 * \varphi[c2][w][h+1] + \omega 29 * \varphi[c2][w+1][h+1]$.

It should be noted that, when the to-be-encoded feature point is the feature point D2 in the channel c2, a preset weight matrix corresponding to the channel c2 may be determined. Then, linear weighting is performed, based on the preset weight matrix corresponding to the channel c2, on feature values of encoded feature points in a first target region in a feature map corresponding to the target channel group, and first features of feature points corresponding to first target locations in a second target region in a first feature matrix corresponding to the target channel group, to determine at least one first probability distribution parameter corresponding to the feature point D2. The preset weight matrix corresponding to the channel c2 is different from the preset weight matrix corresponding to the channel c1.

It should be noted that, when the to-be-encoded location L1 in the second target region Q21 is determined as a first target location for the channel c1, and the location L2 in the second target region Q22 is determined as a first target location for the channel c2, for a manner of determining at least one first probability distribution parameter corresponding to the to-be-encoded feature point D1, refer to the descriptions in the embodiment in FIG. 12b on the basis of FIG. 12d. Details are not described herein again. When a part of first unencoded locations and the to-be-encoded location L1 in the second target region Q21 are determined as first target locations for the channel c1, and the location L2 and a part of second unencoded locations in the second target region Q22 are determined as first target locations for the channel c2, for a manner of determining at least one first probability distribution parameter corresponding to the to-be-encoded feature point D1, refer to the descriptions in the embodiment in FIG. 12c on the basis of FIG. 12d. Details are not described herein again.

It should be noted that, when the number of channels, k, included in the target channel group is greater than 2, at least one first probability distribution parameter corresponding to a to-be-encoded feature point may alternatively be determined with reference to the embodiment in FIG. 12d. Details are not described herein again.

FIG. 13a is a diagram of an example of a process of determining a probability distribution parameter. In the embodiment in FIG. 13a, a number of channels, k, included in a target channel group is equal to 1, ks1=ks3=3, and an encoding order on an encoder side is shown in (2) in FIG. 3c (the encoder side determines a corresponding probability distribution parameter based on an estimated information matrix in a process of encoding a feature point corresponding to a black block, and determines a corresponding probability distribution parameter based on S204 in this application in a process of encoding a feature point corresponding to a white block). It is assumed that the target channel group includes a first channel (referred to as a channel c1 below). In a feature map of the channel c1, a block filled with oblique lines represents a to-be-encoded feature point D, and the to-be-encoded feature point D is a feature point in a white checkerboard. In a first feature matrix of the channel c1, a block filled with oblique lines represents a to-be-encoded location L. The to-be-encoded location L is a location of the to-be-encoded feature point D.

Refer to FIG. 13a. For example, a first target region Q1 that is in the feature map of the channel c1 and that uses the to-be-encoded feature point D as a center may be determined based on a size of a linear weighting window, and a second target region Q2 that is in the first feature matrix of the channel c1 and that uses the to-be-encoded location L as a center is determined based on the size of the linear weighting window. Sizes of the first target region Q1 and the second target region Q2 are the same, and are both ks1*ks2.

Refer to FIG. 13a. For example, an encoded feature point in the first target region Q1 may be determined as a feature point, for linear weighting calculation, in the feature map, namely, a feature point corresponding to a black block in the first target region Q1 in FIG. 13a, and feature points at an upper left side and an upper right side of the to-be-encoded feature point D in the first target region Q1. It is assumed that the location of the to-be-encoded feature point D is (c1, w, h). In this case, locations of feature points, for linear weighting calculation, in the feature map of the channel c1 include (c1, w-1, h-1), (c1, w, h-1), (c1, w+1, h-1), (c1, w-1, h), (c1, w, h+1), and (c1, w+1, h).

For example, a first target location, for linear weighting calculation, in the first feature matrix of the channel c1 may be determined based on a location other than an encoded location in the second target region Q2 in the first feature matrix of the channel c1. Refer to FIG. 13a. Locations other than encoded locations in the second target region Q2 in the first feature matrix of the channel c1 may be determined as first target locations, namely, the block filled with the oblique lines and blocks filled with dots in the second target region Q2 in FIG. 13a. It is assumed that the location of the to-be-encoded feature point D is (c1, w, h), and the locations of the feature points, for linear weighting calculation, in the feature map of the channel c1 include (c1, w-1, h-1), (c1, w, h-1), (c1, w+1, h-1), (c1, w-1, h), (c1, w, h+1), and (c1, w+1, h). In this case, the first target locations include (c1, w, h), (c1, w-1, h+1), and (c1, w+1, h+1).

For example, a preset weight matrix corresponding to the channel c1 may be determined. The preset weight matrix includes a weight map. A size of the weight map is the same as the size of the linear weighting window, and the weight map includes weights of ks1*ks2 feature points, as shown in FIG. 13a. The size of the weight map is 3*3, and the weight map includes nine weights: $\omega1$, $\omega2$, $\omega3$, $\omega4$, $\omega5$, $\omega6$, $\omega7$, $\omega8$, and $\omega9$.

For example, linear weighting may be performed, based on the weight map corresponding to the channel c1, on a feature value of the encoded feature point in the first target region Q1 in the feature map of the channel c1 and a first feature of a feature point corresponding to the first target location in the second target region Q2 in the first feature matrix of the channel c1, to obtain at least one first probability distribution parameter corresponding to the to-be-encoded feature point D in the feature map of the channel c1.

It is assumed that the feature values of the encoded feature points in the first target region Q1 in the feature map of the channel c1 are represented as y[c1][w-1][h-1], y[c1][w][h-1], y[c1][w+1][h-1], y[c1][w-1][h], y[c1][w][h+1], and y[c1][w+1][h], and the first features of the feature points corresponding to the first target locations in the second target region Q2 in the first feature matrix of the channel c1 are represented as φ[c1][w][h], φ[c1][w-1][h+1], and φ[c1][w+1][h+1]. In this case, the at least one first probability distribution parameter corresponding to the to-be-encoded feature point D in the feature map of the channel c1 = $\omega1$*y[c1][w-1][h-1]+$\omega2$*y[c1][w][h-1]+$\omega3$*y[c1][w+1][h-1] +$\omega4$*y[c1][w-1][h]+$\omega5$*φ[c1][w][h] +$\omega6$*y[c1][w+1][h] +$\omega7$*φ[c1][w-1][h+1]+$\omega8$*y[c][w][h+1]+$\omega9$*φ[c1][w+1][h+1].

It should be noted that, when the to-be-encoded location L in the second target region Q2 in the first feature matrix of the channel c1 is determined as a first target location, for a manner of determining at least one first probability distribution parameter corresponding to the to-be-encoded feature point D in the feature map of the channel c1, refer to the descriptions in the embodiment in FIG. 12b on the basis of the embodiment in FIG. 13a. Details are not described herein again. When a part of first unencoded locations and the to-be-encoded location L in the second target region Q2 in the first feature matrix of the channel c1 are determined as first target locations, for a manner of determining at least one first probability distribution parameter corresponding to the to-be-encoded feature point D in the feature map of the channel c1, refer to the descriptions in the embodiment in FIG. 12c on the basis of the embodiment in FIG. 13a. Details are not described herein again.

It should be noted that, when a number of channels, k, included in a target channel group is greater than 1, at least one first probability distribution parameter corresponding to at least one to-be-encoded feature point D may be determined with reference to the descriptions in the embodiment in FIG. 12d on the basis of FIG. 13a. Details are not described herein again.

FIG. 13b is a diagram of an example of a process of determining a probability distribution parameter. In the embodiment in FIG. 13b, a number of channels, k, included in a target channel group is equal to 1, ks1=ks3=3, and an encoding order on an encoder side is shown in (2) in FIG. 3c (the encoder side determines a corresponding probability distribution parameter based on S204 in this application in both a process of encoding a feature point corresponding to a black block and a process of encoding a feature point corresponding to a white block). It is assumed that channels included in the target channel group include a first channel (referred to as a channel c1 below). In a feature map of the channel c1, a block filled with oblique lines represents a to-be-encoded feature point D, and the to-be-encoded feature point D is a feature point in a black checkerboard. In a first feature matrix of the channel c1, a block filled with oblique lines represents a to-be-encoded location L. The to-be-encoded location L is a location of the to-be-encoded feature point D.

Refer to FIG. 13b. For example, a first target region Q1 that is in the feature map of the channel c1 and that uses the to-be-encoded feature point D as a center may be determined based on a size of a linear weighting window, and a second target region Q2 that is in the first feature matrix of the channel c1 and that uses the to-be-encoded location L as a center is determined based on the size of the linear weighting window. Sizes of the first target region Q1 and the second target region Q2 are the same, and are both ks1*ks2.

Refer to FIG. 13b. For example, an encoded feature point in the first target region Q1 may be determined as a feature point, for linear weighting calculation in the feature map, namely, a feature point corresponding to a black block in the first target region Q1 in FIG. 13b. It is assumed that the location of the to-be-encoded feature point D is (c1, w, h). In this case, locations of feature points, for linear weighting calculation, in the feature map of the channel c1 include (c1, w-1, h-1) and (c1, w+1, h+1).

For example, a first target location, for linear weighting calculation, in the first feature matrix of the channel c1 may be determined based on a location other than an encoded location in the second target region Q2. The encoded location is a location of an encoded feature point.

Refer to FIG. 13b. Locations other than encoded locations in the second target region Q2 in the first feature matrix of the channel c1 may be determined as first target locations, namely, locations that correspond to the block filled with the oblique lines and blocks filled with dots and that are in the second target region Q2 in FIG. 13b. It is assumed that the location of the to-be-encoded feature point D is (c1, w, h), and the locations of the feature points, for linear weighting calculation, in the feature map of the channel c1 include (c1, w-1, h-1) and (c1, w+1, h-1). In this case, the first target locations include (c1, w, h), (c1, w, h-1), (c1, w-1, h), (c1, w+1, h) (c1, w, h+1), (c1, w-1, h+1), and (c1, w+1, h+1).

For example, a preset weight matrix corresponding to the channel c1 may be determined. The preset weight matrix includes a weight map. A size of the weight map is the same as the size of the linear weighting window, and the weight map includes weights of ks1*ks2 feature points, as shown in FIG. 13b. The size of the weight map is 3*3, and the weight map includes nine weights: $\omega 1$, $\omega 2$, $\omega 3$, $\omega 4$, $\omega 5$, $\omega 6$, $\omega 7$, $\omega 8$, and $\omega 9$.

For example, linear weighting may be performed, based on the weight map corresponding to the channel c1, on a feature value of the encoded feature point in the first target region Q1 in the feature map of the channel c1 and a first feature of a feature point corresponding to the first target location in the second target region Q2 in the first feature matrix of the channel c1, to obtain at least one first probability distribution parameter corresponding to the to-be-encoded feature point D in the feature map of the channel c1.

It is assumed that the feature values of the encoded feature points in the first target region Q1 in the feature map of the channel c1 are represented as y[c1][w-1][h-1] and y[c1][w+1][h-1], and the first features of the feature points corresponding to the first target locations in the second target region Q2 in the first feature matrix of the channel c1 are represented as $\varphi$[c1][w][h], $\varphi$[c1][w][h-1], $\varphi$[c1][w-1][h], $\varphi$[c1][w+1][h], $\varphi$[c1][w][h+1], $\varphi$[c1][w-1][h+1], and $\varphi$[c1][w+1][h+1]. In this case, the at least one first probability distribution parameter corresponding to the to-be-encoded feature point D in the feature map of the channel c1 = $\omega 1*y[c1][w-1][h-1]+\omega 2*y[c1][w+1][h-1]+\omega 3*\varphi[c1][w][h] +\omega 4*\varphi[c1][w][h-1]+\omega 5*\varphi[c1][w-1][h]+\omega 6*\varphi[c1][w+1][h] +\omega 7*\varphi[c1][w][h+1]+\omega 8*\varphi[c1][w-1][h+1]+\omega 9*\varphi[c1][w+1][h+1]$.

It should be noted that, when the to-be-encoded location L in the second target region Q2 in the first feature matrix of the channel c1 is determined as a first target location, for a manner of determining at least one first probability distribution parameter corresponding to the to-be-encoded feature point D in the feature map of the channel c1, refer to the descriptions in the embodiment in FIG. 12b on the basis of the embodiment in FIG. 13b. Details are not described herein again. When a part of first unencoded locations and the to-be-encoded location L in the second target region Q2 in the first feature matrix of the channel c1 are determined as first target locations, for a manner of determining at least one first probability distribution parameter corresponding to the to-be-encoded feature point D in the feature map of the channel c1, refer to the descriptions in the embodiment in FIG. 12c on the basis of the embodiment in FIG. 13b. Details are not described herein again.

It should be noted that, when a number of channels, k, included in a target channel group is greater than 1, at least one first probability distribution parameter corresponding to a to-be-encoded feature point D may be determined with reference to the descriptions in the embodiment in FIG. 12d on the basis of FIG. 13b. Details are not described herein again.

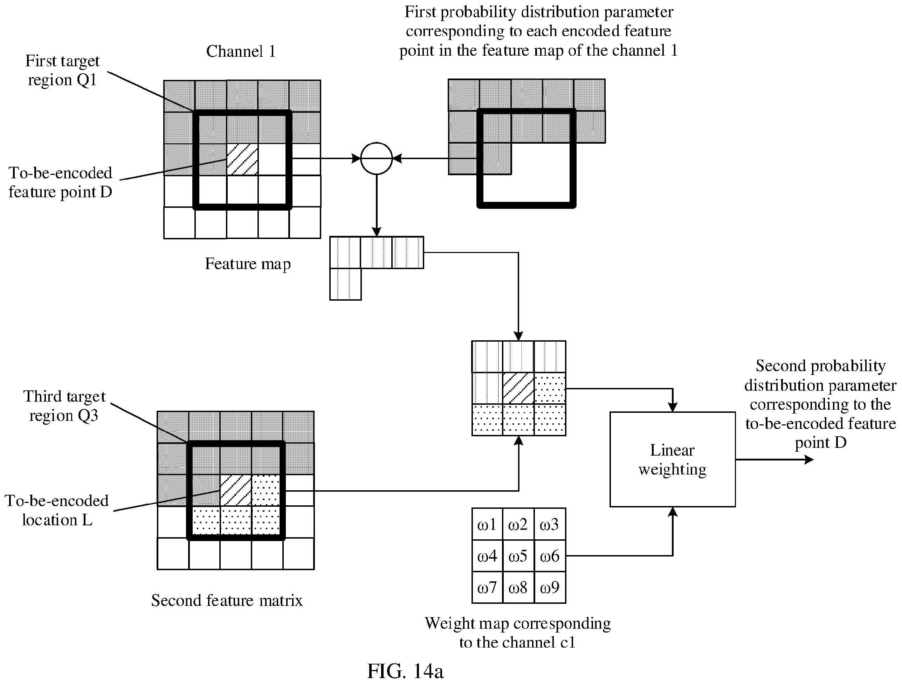

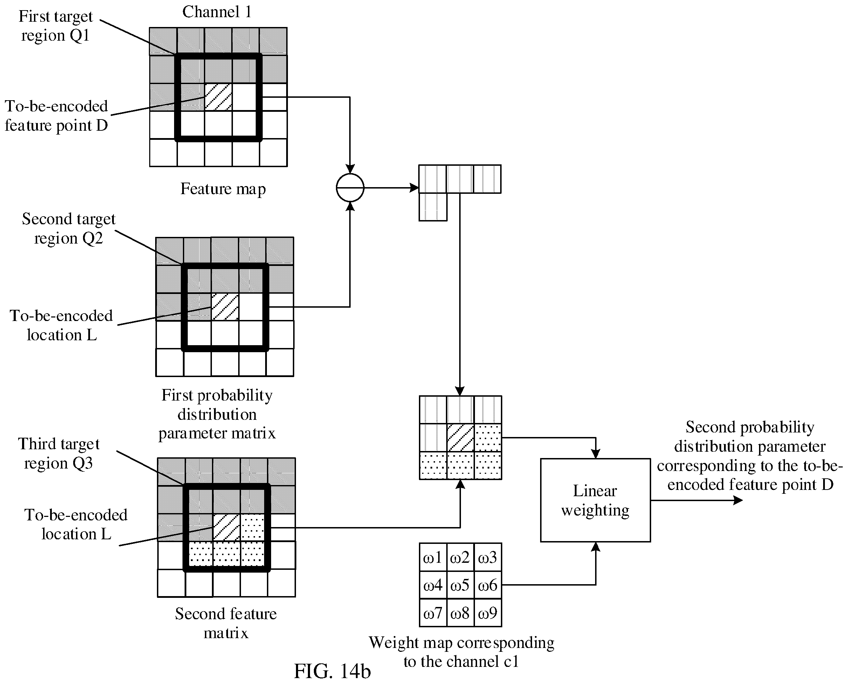

For example, the following embodiments in FIG. 14a and FIG. 14b describe a process in which linear weighting is performed on at least one feature value of at least one encoded feature point corresponding to a target channel group including k channels, and a second feature matrix corresponding to the target channel group, to determine at least one second probability distribution parameter corresponding to a to-be-encoded feature point corresponding to the target channel group.

FIG. 14a is a diagram of an example of a process of determining a probability distribution parameter. The embodiment in FIG. 14a describes a process of determining a second probability distribution parameter when second feature matrices that are of C channels and that are output by a hyper decoder network include first feature matrices of the C channels and second feature matrices of the C channels.

In the embodiment in FIG. 14a, a number of channels, k, included in a target channel group is equal to 1, ks1=ks3=3, and an encoding order on an encoder side is shown in (1) in FIG. 3c. It is assumed that the target channel group includes a first channel (referred to as a channel c1 below). In a feature map of the channel c1, a gray block represents an encoded feature point, a white block represents an unencoded feature point, and a block filled with oblique lines represents a to-be-encoded feature point D. In a second feature matrix of the channel c1, a gray block represents an encoded location, a white block represents an unencoded location, and a block filled with oblique lines represents a to-be-encoded location L. The encoded location is a location of the encoded feature point, the unencoded location is a location of the unencoded feature point, and the to-be-encoded location L is a location of the to-be-encoded feature point D.

Refer to FIG. 14a. For example, a first target region Q1 that is in the feature map of the channel c1 and that uses the to-be-encoded feature point D as a center may be determined based on a size of a linear weighting window, and a third target region Q3 that is in the second feature matrix of the channel c1 and that uses the to-be-encoded location L as a center is determined based on the size of the linear weighting window. Sizes of the first target region Q1 and the third target region Q3 are the same, and are both ks1*ks2.

Refer to FIG. 14a. For example, an encoded feature point in the first target region Q1 may be determined as a feature point, for linear weighting calculation, in the feature map, namely, a feature point corresponding to a gray block in the first target region Q1 in FIG. 14a. It is assumed that the location of the to-be-encoded feature point D is (c1, w, h). In this case, locations of feature points, for linear weighting calculation, in the feature map of the channel c1 include (c1, w-1, h), (c1, w-1, h-1), (c1, w, h-1), and (c1, w+1, h-1).

For example, a second target location, for linear weighting calculation, in the second feature matrix of the channel c1 may be determined based on a location other than an encoded location in the third target region Q3 in the second feature matrix of the channel c1. In a possible implementation, the to-be-encoded location L and at least one first unencoded location in the third target region Q3 in the second feature matrix of the channel c1 may be determined as second target locations. The first unencoded location is a location other than the to-be-encoded location L in all unencoded locations in the third target region Q3 in the second feature matrix of the channel c1.

Refer to FIG. 14a. In a possible implementation, locations other than encoded locations in the third target region Q3 in the second feature matrix of the channel c1 (namely, the to-be-encoded location L and all first unencoded locations in the third target region Q3 in the second feature matrix of the channel c1) may be determined as second target locations, namely, locations that correspond to the block filled with the oblique lines and blocks filled with dots and that are in the third target region Q3 in FIG. 14a.

It is assumed that the location of the to-be-encoded feature point D is (c1, w, h), and the locations of the feature points, for linear weighting calculation, in the feature map of the channel c1 include (c1, w-1, h), (c1, w-1, h-1), (c1, w, h-1), and (c1, w+1, h-1). In this case, the second target locations include (c1, w, h), (c1, w+1, h), (c1, w-1, h+1), (c1, w, h+1), and (c1, w+1, h+1).

For example, at least one difference corresponding to the at least one encoded feature point in the first target region Q1 in the feature map of the channel c1 may be first determined based on at least one feature value of the at least one encoded feature point in the first target region Q1 in the feature map of the channel c1 and at least one corresponding first probability distribution parameter, as shown in a block filled with vertical stripes in FIG. 14a (the at least one first probability distribution parameter corresponding to the at least one encoded feature point may be first determined in the manner described in the embodiments in FIG. 12a to FIG. 12d and the embodiments in FIG. 13a and FIG. 13b).

It is assumed that the location of the to-be-encoded feature point D is (c1, w, h), feature values of encoded feature points in the first target region Q1 in the feature map of the channel c1 are represented as y[c1][w-1][h], y[c1][w-1][h-1], y[c1][w][h-1], and y[c1][w+1][h-1], and first probability distribution parameters corresponding to the encoded feature points in the first target region Q1 in the feature map of the channel c1 are represented as m[c1][w-1][h], m[c1][w-1][h-1], m[c1][w][h-1], and m[c1][w+1][h-1]. A difference corresponding to the encoded feature point whose location is (c1, w-1, h) is represented by Diff[c1][w-1][h], a difference corresponding to the encoded feature point whose location is (c1, w-1, h-1) is represented by Diff[c1][w-1][h-1], a difference corresponding to the encoded feature point whose location is (c1, w, h-1) is represented by Diff[c1][w][h-1], and a difference corresponding to the encoded feature point whose location is (c1, w+1, h-1) is represented by Diff[c1][w+1][h-1].

In a possible implementation, the difference may be a difference between the at least one feature value of the at least one encoded feature point and the at least one corresponding first probability distribution parameter.

$$Diff\big[c1\big]\big[w-1\big]\big[h\big] = y\big[c1\big]\big[w-1\big]\big[h\big] - m\big[c1\big]\big[w-1\big]\big[h\big]$$

$$Diff\left[c1\right]\left[w-1\right]\left[h-1\right] = y\left[c1\right]\left[w-1\right]\left[h-1\right] - m\left[c1\right]\left[w-1\right]\left[h-1\right]$$

$$Diff\left[c1\right]\left[w\right]\left[h-1\right] = y\left[c1\right]\left[w\right]\left[h-1\right] - m\left[c1\right]\left[w\right]\left[h-1\right]$$

$$Diff\left[c1\right]\left[w+1\right]\left[h-1\right] = y\left[c1\right]\left[w+1\right]\left[h-1\right] - m\left[c1\right]\left[w+1\right]\left[h-1\right]$$

In a possible implementation, the difference may be an absolute value of a difference between the at least one feature value of the at least one encoded feature point and the at least one corresponding first probability distribution parameter. Diff[c1][w-1][h] is used as an example, that is,

$$Diff\left[c1\right]\left[w-1\right]\left[h\right] = \text{abs}\left(y\left[c1\right]\left[w-1\right]\left[h\right] - m\left[c1\right]\left[w-1\right]\left[h\right]\right)$$

Herein, abs represents obtaining an absolute value.

In a possible implementation, the difference may be a square of a difference between the at least one feature value of the at least one encoded feature point and the at least one corresponding first probability distribution parameter. Diff[c1][w-1][h] is used as an example, that is,

$$Diff\left[c1\right]\left[w-1\right]\left[h\right] = \left(y\left[c1\right]\left[w-1\right]\left[h\right] - m\left[c1\right]\left[w-1\right]\left[h\right]\right)^2$$

For example, in a training process, an aggregation unit learns of a weight matrix (namely, a preset weight matrix) that corresponds to each channel and that is used for linear weighting. The preset weight matrix may include weight maps of k channels, and a size of the weight map is the same as the size of the linear weighting window, for example, ks1*ks2. In the embodiment in FIG. 12a, a preset weight matrix of the channel c1 includes a weight map of one channel, and the weight map corresponding to the channel c1 includes nine weights: $\omega1, \omega2, \omega3, \omega4, \omega5, \omega6, \omega7, \omega8,$ and $\omega9$.

For example, linear weighting may be performed, based on the weight map corresponding to the channel c1, on the at least one difference corresponding to the at least one encoded feature point in the first target region Q1 in the feature map of the channel c1, and a second feature of a feature point corresponding to the second target location in the third target region Q3 in the second feature matrix of the channel c1, to obtain at least one second probability distribution parameter corresponding to the to-be-encoded feature point D in the feature map of the channel c1.

Based on the description above, it is assumed that second features of feature points corresponding to the second target locations in the third target region Q3 in the second feature matrix of the channel c1 are represented as φ[c1][w][h], φ[c1][w+1][h], φ[c1][w-1][h+1], φ[c1][w][h+1], and φ[c1][w+1][h+1]. In this case, at least one second probability distribution parameter corresponding to the to-be-encoded feature point D in the feature map of the channel

c1=

$$\omega1 * Diff\left[c1\right]\left[w-1\right]\left[h\right] + \omega2 * Diff\left[c1\right]\left[w-1\right]\left[h-1\right] + \omega3 * Diff\left[c1\right]\left[w\right]\left[h-1\right]$$

$$+\omega4 * Diff\left[c1\right]\left[w+1\right]\left[h-1\right] + \omega5 * \varphi\left[c1\right]\left[w\right]\left[h\right] + \omega6 * \varphi\left[c1\right]\left[w+1\right]\left[h\right]$$

$$+\omega7 * \varphi\left[c1\right]\left[w-1\right]\left[h+1\right] + \omega8 * \varphi\left[c1\right]\left[w\right]\left[h+1\right] + \omega9 * \varphi\left[c1\right]\left[w+1\right]\left[h+1\right]$$

It should be noted that, when the to-be-encoded location L in the third target region Q3 in the second feature matrix of the channel c1 is determined as a second target location, for a manner of determining at least one second probability distribution parameter corresponding to the to-be-encoded feature point D in the feature map of the channel c1, refer to the descriptions in the embodiment in FIG. 12b on the basis of the embodiment in FIG. 14a. Details are not described herein again. When a part of first unencoded locations and the to-be-encoded location L in the third target region Q3 in the second feature matrix of the channel c1 are determined as second target locations, for a manner of determining at least one second probability distribution parameter corresponding to the to-be-encoded feature point D in the feature map of the channel c1, refer to the descriptions in the embodiment in FIG. 12c on the basis of the embodiment in FIG. 14a. Details are not described herein again.

It should be noted that, when the encoder side performs encoding in the order shown in (2) in FIG. 3, at least one second probability distribution parameter corresponding to the to-be-encoded feature point D in the feature map of the channel c1 may be determined with reference to the descriptions in the embodiments in FIG. 13a and FIG. 13b on the basis of the embodiment in FIG. 14a. Details are not described herein again.

It should be noted that, when a number of channels, k, included in a target channel group is greater than 1, at least one second probability distribution parameter corresponding to a to-be-encoded feature point D may be determined with reference to the descriptions in the embodiment in FIG. 12d on the basis of FIG. 14a. Details are not described herein again.

FIG. 14b is a diagram of an example of a process of determining a probability distribution parameter. The embodiment in FIG. 14b describes a process of determining a second probability distribution parameter when second feature matrices of C channels include first probability distribution parameter matrices of the C channels and second feature matrices of the C channels.

In the embodiment in FIG. 14b, a number of channels, k, included in a target channel group is equal to 1, ks1=ks3=3, and an encoding order on an encoder side is shown in (1) in FIG. 3c. It is assumed that the target channel group includes a first channel (referred to as a channel c1 below). In a feature map of the channel c1, a gray block represents an encoded feature point, a white block represents an unencoded feature point, and a block filled with oblique lines represents a to-be-encoded feature point D.

In the embodiment in FIG. 14b, in a first feature matrix of the channel c1 and a second feature matrix of the channel c1, a gray block represents an encoded location, a white block represents an unencoded location, and a block filled with oblique lines represents a to-be-encoded location L. The encoded location is a location of the encoded feature point, the unencoded location is a location of the unencoded feature point, and the to-be-encoded location L is a location of the to-be-encoded feature point D.

Refer to FIG. 14b. For example, a first target region Q1 that is in the feature map of the channel c1 and that uses the to-be-encoded feature point D as a center may be determined based on a size of a linear weighting window, a second target region Q2 that is in the first probability distribution parameter matrix of the channel c1 and that uses the to-be-encoded location L as a center is determined based on the size of the linear weighting window, and a third target region Q3 that is in the second feature matrix of the channel c1 and that uses the to-be-encoded location L as a center is determined based on the size of the linear weighting window. Sizes of the first target region Q1, the second target region Q2, and the third target region Q3 are the same, and are all ks1*ks2.

Refer to FIG. 14b. For example, an encoded feature point in the first target region Q1 may be determined as a feature point, for linear weighting calculation, in the feature map, namely, a feature point corresponding to a gray block in the first target region Q1 in FIG. 14b. It is assumed that the location of the to-be-encoded feature point D is (c1, w, h). In this case, locations of feature points, for linear weighting calculation, in the feature map of the channel c1 include (c1, w-1, h), (c1, w-1, h-1), (c1, w, h-1), and (c1, w+1, h-1).

Refer to FIG. 14b. For example, an encoded location in the second target region Q2 may be determined, namely, a location corresponding to a gray block in the second target region Q2 in FIG. 14b. It is assumed that the to-be-encoded location L is (c1, w, h). In this case, encoded locations in the second target region Q2 in the first probability distribution parameter matrix of the channel c1 are (c1, w-1, h), (c1, w-1, h-1), (c1, w, h-1), and (c1, w+1, h-1).

For example, at least one difference corresponding to the at least one encoded feature point in the first target region Q1 in the feature map of the channel c1 may be first determined based on at least one feature value of the at least one encoded feature point in the first target region Q1 and at least one first probability distribution parameter of a feature point corresponding to the encoded location in the second target region Q2, as shown in a block filled with vertical stripes in FIG. 14b. For a manner of determining the at least one difference corresponding to the at least one encoded feature point in the first target region Q1 in the feature map of the channel c1, refer to the descriptions in the embodiment in FIG. 14a. Details are not described herein again.

For example, a second target location, for linear weighting calculation, in the second feature matrix of the channel c1 may be determined based on a location other than an encoded location in the third target region Q3 in the second feature matrix of the channel c1. In a possible implementation, the to-be-encoded location L and at least one first unencoded location in the third target region Q3 in the second feature matrix of the channel c1 may be determined as second target locations. The first unencoded location is a location other than the to-be-encoded location L in all unencoded locations in the third target region Q3 in the second feature matrix of the channel c1.

Refer to FIG. 14b. In a possible implementation, locations other than the encoded locations in the third target region Q3 in the second feature matrix of the channel c1 (namely, the to-be-encoded location L and all first unencoded locations in the third target region Q3 in the second feature matrix of the channel c1) may be determined as second target locations, namely, locations that correspond to the block filled with the oblique lines and blocks filled with dots and that are in the third target region Q3 in FIG. 14b.

It is assumed that the location of the to-be-encoded feature point D is (c1, w, h), and the locations of the feature points, for linear weighting calculation, in the feature map of the channel c1 include (c1, w-1, h), (c1, w-1, h-1), (c1, w, h-1), and (c1, w+1, h-1). In this case, the second target locations include (c1, w, h), (c1, w+1, h), (c1, w-1, h+1), (c1, w, h+1), and (c1, w+1, h+1).

For example, in a training process, an aggregation unit learns of a weight matrix (namely, a preset weight matrix) that corresponds to each channel and that is used for linear weighting. The preset weight matrix may include weight maps of k channels, and a size of the weight map is the same as the size of the linear weighting window, for example, ks1*ks2. In the embodiment in FIG. 12a, a preset weight matrix of the channel c1 includes a weight map of one channel, and the weight map corresponding to the channel c1 includes nine weights: $\omega1, \omega2, \omega3, \omega4, \omega5, \omega6, \omega7, \omega8,$ and $\omega9$.

For example, linear weighting may be performed, based on the weight map corresponding to the channel c1, on the at least one difference corresponding to the at least one encoded feature point in the first target region Q1 in the feature map of the channel c1, and a second feature of a feature point corresponding to the second target location in the third target region Q3 in the second feature matrix of the channel c1, to obtain at least one second probability distribution parameter corresponding to the to-be-encoded feature point D in the feature map of the channel c1.

Based on the description above, it is assumed that a difference corresponding to the encoded feature point whose location is (c1, w-1, h) is represented by Diff[c1][w-1][h], a difference corresponding to the encoded feature point whose location is (c1, w-1, h-1) is represented by Diff[c1][w-1][h-1], a difference corresponding to the encoded feature point whose location is (c1, w, h-1) is represented by Diff[c1][w][h-1], and a difference corresponding to the encoded feature point whose location is (c1, w+1, h-1) is represented by Diff[c1][w+1][h-1]. Second features of feature points corresponding to the second target locations in the third target region Q3 in the second feature matrix of the channel c1 are represented as φ[c1][w][h], φ[c1][w+1][h], φ[c1][w-1][h+1], φ[c1][w][h+1], and φ[c1][w+1][h+1]. In this case, at least one second probability distribution parameter corresponding to the to-be-encoded feature point D in the feature map of the channel c1 = $\omega1*Diff[c1][w-1][h]+\omega2*Diff[c1][w-1][h-1]+\omega3*Diff[c1][w][h-1]+\omega4*Diff[c1][w+1][h-1]+\omega5*\varphi[c1][w][h]+\omega6*\varphi[c1][w+1][h]+\omega7*\varphi[c1][w-1][h+1]+\omega8*\varphi[c1][w][h+1]+\omega9*\varphi[c1][w+1][h+1]$

It should be noted that, when the to-be-encoded location L in the third target region Q3 in the second feature matrix of the channel c1 is determined as a second target location, for a manner of determining at least one second probability distribution parameter corresponding to the to-be-encoded feature point D in the feature map of the channel c1, refer to the descriptions in the embodiment in FIG. 12b on the basis of the embodiment in FIG. 14b. Details are not described herein again. When a part of first unencoded locations and the to-be-encoded location L in the third target region Q3 in the second feature matrix of the channel c1 are determined as second target locations, for a manner of determining at least one second probability distribution parameter corresponding to the to-be-encoded feature point D in the feature map of the channel c1, refer to the descriptions in the embodiment in FIG. 12c on the basis of the embodiment in FIG. 14b. Details are not described herein again.

It should be noted that, when the encoder side performs encoding in the order shown in (2) in FIG. 3, at least one second probability distribution parameter corresponding to the to-be-encoded feature point D in the feature map of the channel c1 may be determined with reference to the descriptions in the embodiments in FIG. 13a and FIG. 13b on the basis of the embodiment in FIG. 14b. Details are not described herein again.

It should be noted that, when a number of channels, k, included in a target channel group is greater than 1, at least one second probability distribution parameter corresponding to a to-be-encoded feature point D may be determined with reference to the descriptions in the embodiment in FIG. 12d on the basis of FIG. 14b. Details are not described herein again.

It should be understood that, when the encoder side performs encoding in another encoding order, a location of an encoded feature point in a feature map, a first target location in a first feature matrix, and a second target location in a second feature matrix may be different from the locations shown in the embodiments in FIG. 12a to FIG. 12d, the embodiments in FIG. 13a and FIG. 13b, and the embodiments in FIG. 14a and FIG. 14b. The location of the encoded feature point in the feature map, the first target location in the first feature matrix, and the second target location in the second feature matrix are not limited in this application.

It should be noted that, if a probability distribution model used by the probability estimation unit V1 in the embodiment in FIG. 5 is a Gaussian distribution model with a mean of 0, in other words, a probability distribution parameter includes only a second probability distribution parameter (that is, a variance (scale)), an estimated information matrix output by a hyper decoder network may include only a second feature matrix. In this case, the second probability distribution parameter (that is, the variance (scale)) may be determined in the manners described in the embodiments in FIG. 12a to FIG. 12d and the embodiments in FIG. 13a and FIG. 13b.

It should be understood that a manner in which a decoder side determines at least one probability distribution parameter of a to-be-decoded feature point corresponds to a manner in which an encoder side determines at least one probability distribution parameter of a to-be-encoded feature point. For details, refer to the descriptions in the embodiments in FIG. 12a to FIG. 12d, the descriptions in the embodiments in FIG. 13a and FIG. 13b, and the descriptions in the embodiments in FIG. 14a and FIG. 14b. Details are not described herein again.

For example, this application further provides a bitstream generation method, to generate a bitstream according to the encoding method in the foregoing embodiment.

For example, this application further provides a bitstream transmission method, to transmit a bitstream generated according to the bitstream generation method in the foregoing embodiment.

For example, this application further provides a bitstream storage method, to store a bitstream generated according to the bitstream generation method in the foregoing embodiment.

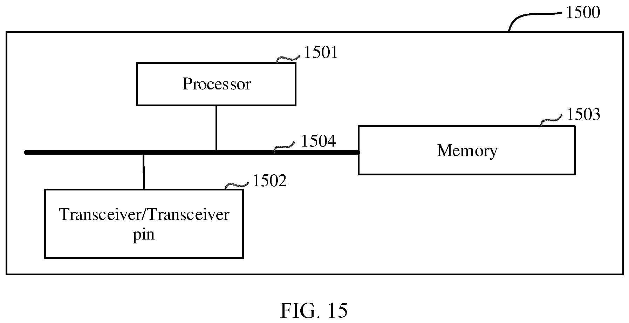

In an example, FIG. 15 is a block diagram of an apparatus 1500 according to an embodiment of this application. The apparatus 1500 may include a processor 1501 and a transceiver/transceiver pin 1502, and optionally, further include a memory 1503.

Components of the apparatus 1500 are coupled together through a bus 1504. In addition to a data bus, the bus 1504 further includes a power bus, a control bus, and a status signal bus. However, for clarity of description, various buses in the figure are referred to as the bus 1504.

Optionally, the memory 1503 may be configured to store instructions in the foregoing method embodiments. The processor 1501 may be configured to: execute the instructions in the memory 1503, control a receive pin to receive a signal, and control a transmit pin to send a signal.

The apparatus 1500 may be the electronic device or a chip of the electronic device in the foregoing method embodiments.

All related content of the steps in the foregoing method embodiments may be cited in function descriptions of corresponding functional modules. Details are not described herein again.

An embodiment further provides a computer-readable storage medium. The computer-readable storage medium stores computer instructions. When the computer instructions are run on an electronic device, the electronic device is enabled to perform the foregoing related method steps, to implement the encoding and decoding methods in the foregoing embodiments.

An embodiment further provides a computer program product. When the computer program product runs on a computer, the computer is enabled to perform the foregoing related steps, to implement the encoding and decoding methods in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the encoding and decoding methods in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effect of the corresponding method provided above. Details are not described herein again.

Based on descriptions about the foregoing implementations, a person skilled in the art may understand that, for a purpose of convenient and brief description, division into the foregoing functional modules is used as an example for illustration. In actual application, the foregoing functions may be allocated to different functional modules to be implemented based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electric form, a mechanical form, or another form.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content of embodiments of this application and any content of a same embodiment may be freely combined. Any combination of the foregoing content shall fall within the scope of this application.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code such as a USB flash drive, a removable hard disk drive, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

Methods or algorithm steps described in combination with the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk drive, a removable hard disk drive, a compact disc read-only memory (CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by the software, the foregoing functions may be stored in a computer-readable medium or transmitted as one or more instructions or code in the computer-readable medium. The computer-readable medium includes a computer-readable storage medium and a communication medium, where the communication medium includes any medium that enables a computer program to be transmitted from one place to another place. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

**Claims**

1. An encoding method, wherein the method comprises:

   obtaining a to-be-encoded image;
   generating feature maps of C channels based on the to-be-encoded image, wherein the feature maps comprise feature values of a plurality of feature points, and C is a positive integer;
   generating estimated information matrices of the C channels based on the feature maps of the C channels;
   grouping the C channels into N channel groups, wherein N is an integer greater than 1, each channel group comprises k channels, the numbers of channels, k, comprised in any two channel groups are the same or different, and k is a positive integer;
   for at least one target channel group in the N channel groups, determining, based on at least one feature value of at least one encoded feature point corresponding to the target channel group and an estimated information matrix corresponding to the target channel group, at least one probability distribution parameter corresponding to a to-be-encoded feature point corresponding to the target channel group;
   determining, based on the at least one probability distribution parameter corresponding to the to-be-encoded feature point, probability distribution corresponding to the to-be-encoded feature point; and
   encoding the to-be-encoded feature point based on the probability distribution corresponding to the to-be-encoded feature point.

2. The method according to claim 1, wherein the determining, based on at least one feature value of at least one encoded feature point corresponding to the target channel group and an estimated information matrix corresponding to the target channel group, at least one probability distribution parameter corresponding to a to-be-encoded feature point corresponding to the target channel group comprises:

performing linear weighting on the at least one feature value of the at least one encoded feature point corresponding to the target channel group and the estimated information matrix corresponding to the target channel group, to determine the at least one probability distribution parameter corresponding to the to-be-encoded feature point corresponding to the target channel group.

3. The method according to claim 2, wherein the estimated information matrix comprises estimated information of a plurality of feature points; and the performing linear weighting on the at least one feature value of the at least one encoded feature point corresponding to the target channel group and the estimated information matrix corresponding to the target channel group, to determine the at least one probability distribution parameter corresponding to the to-be-encoded feature point corresponding to the target channel group comprises:

determining, based on the to-be-encoded feature point, a first target region in a feature map corresponding to the target channel group and a second target region in the estimated information matrix corresponding to the target channel group; and
performing linear weighting on at least one feature value of at least one encoded feature point in the first target region and estimated information of at least one feature point in the second target region, to obtain the at least one probability distribution parameter corresponding to the to-be-encoded feature point corresponding to the target channel group.

4. The method according to claim 3, wherein when k is greater than 1, the determining, based on the to-be-encoded feature point, a first target region in a feature map corresponding to the target channel group and a second target region in the estimated information matrix corresponding to the target channel group comprises:

determining, as first target regions, a region of a preset size that is centered on the to-be-encoded feature point in a feature map of a first channel and a region of a preset size that is centered on a feature point corresponding to a location of the to-be-encoded feature point in a feature map of a second channel, wherein the first channel corresponds to the to-be-encoded feature point, and the second channel is a channel other than the first channel in the target channel group; and
determining, as second target regions, a region of a preset size that is centered on a to-be-encoded location in an estimated information matrix of the first channel and a region of a preset size that is centered on a location corresponding to the to-be-encoded location in an estimated information matrix of the second channel, wherein the to-be-encoded location is the location of the to-be-encoded feature point.

5. The method according to claim 3 or 4, wherein the performing linear weighting on at least one feature value of at least one encoded feature point in the first target region and estimated information of at least one feature point in the second target region, to obtain the at least one probability distribution parameter corresponding to the to-be-encoded feature point corresponding to the target channel group comprises:

determining a first target location based on a location other than an encoded location in the second target region, wherein the encoded location is at least one location of the at least one encoded feature point; and
performing linear weighting on the at least one feature value of the at least one encoded feature point in the first target region and estimated information of a feature point corresponding to the first target location, to obtain the at least one probability distribution parameter corresponding to the to-be-encoded feature point corresponding to the target channel group.

6. The method according to claim 5, wherein when k is greater than 1, the determining a first target location based on a location other than an encoded location in the second target region comprises:

determining, as first target locations, the to-be-encoded location and at least one other unencoded location in the second target region in the estimated information matrix of the first channel, and the location corresponding to the to-be-encoded location and at least one other unencoded location in the second target region in the estimated information matrix of the second channel, wherein
the first channel corresponds to the to-be-encoded feature point, and the second channel is the channel other than the first channel in the target channel group.

7. The method according to claim 5, wherein when k is greater than 1, the determining a first target location based on a location other than an encoded location in the second target region comprises:

determining, as first target locations, the to-be-encoded location in the second target region in the estimated information matrix of the first channel and the location corresponding to the to-be-encoded location in the second target region in the estimated information matrix of the second channel, wherein the first channel corresponds to the to-be-encoded feature point, and the second channel is the channel other than the first channel in the target channel group.

8. The method according to any one of claims 5 to 7, wherein the performing linear weighting on the at least one feature value of the at least one encoded feature point in the first target region and estimated information of a feature point corresponding to the first target location, to obtain the at least one probability distribution parameter corresponding to the to-be-encoded feature point corresponding to the target channel group comprises:

   obtaining a preset weight matrix corresponding to the first channel corresponding to the to-be-encoded feature point, wherein the preset weight matrix comprises weight maps of the k channels; and
   performing, based on the weight maps of the k channels, linear weighting on the at least one feature value of the at least one encoded feature point in the first target region and the estimated information of the feature point corresponding to the first target location, to obtain the at least one probability distribution parameter corresponding to the to-be-encoded feature point corresponding to the target channel group.

9. The method according to claim 1, wherein the estimated information matrices of the C channels comprise first feature matrices of the C channels and second feature matrices of the C channels, the first feature matrix comprises first features of a plurality of feature points, the second feature matrix comprises second features of a plurality of feature points, and the probability distribution parameter comprises at least one first probability distribution parameter and at least one second probability distribution parameter; and
the determining, based on at least one feature value of at least one encoded feature point corresponding to the target channel group and an estimated information matrix corresponding to the target channel group, at least one probability distribution parameter corresponding to a to-be-encoded feature point corresponding to the target channel group comprises:

   determining, based on the at least one feature value of the at least one encoded feature point corresponding to the target channel group and a first feature matrix corresponding to the target channel group, at least one first probability distribution parameter corresponding to the to-be-encoded feature point corresponding to the target channel group; and
   determining, based on the at least one feature value of the at least one encoded feature point corresponding to the target channel group and a second feature matrix corresponding to the target channel group, at least one second probability distribution parameter corresponding to the to-be-encoded feature point corresponding to the target channel group.

10. The method according to claim 1, wherein the estimated information matrices of the C channels comprise first feature matrices of the C channels and second probability distribution parameter matrices of the C channels, the first feature matrix comprises first features of a plurality of feature points, the second probability distribution parameter matrix comprises second probability distribution parameters of a plurality of feature points, and the at least one probability distribution parameter comprises at least one first probability distribution parameter;
the determining, based on at least one feature value of at least one encoded feature point corresponding to the target channel group and an estimated information matrix corresponding to the target channel group, at least one probability distribution parameter corresponding to a to-be-encoded feature point corresponding to the target channel group comprises:

   determining, based on the at least one feature value of the at least one encoded feature point corresponding to the target channel group and a first feature matrix corresponding to the target channel group, at least one first probability distribution parameter corresponding to the to-be-encoded feature point corresponding to the target channel group; and
   the determining, based on the at least one probability distribution parameter corresponding to the to-be-encoded feature point, probability distribution corresponding to the to-be-encoded feature point comprises:

      determining, based on a second probability distribution parameter matrix corresponding to the target channel group, a second probability distribution parameter corresponding to the to-be-encoded feature point corresponding to the target channel group; and
      determining, based on the at least one first probability distribution parameter and the at least one second probability distribution parameter that correspond to the to-be-encoded feature point, the probability distribution corresponding to the to-be-encoded feature point.

11. The method according to claim 1, wherein the estimated information matrices of the C channels comprise first probability distribution parameter matrices of the C channels and second feature matrices of the C channels, the first probability distribution parameter matrix comprises first probability distribution parameters of a plurality of feature points, the second feature matrix comprises second features of a plurality of feature points, and the at least one probability distribution parameter comprises at least one second probability distribution parameter;

the determining, based on at least one feature value of at least one encoded feature point corresponding to the target channel group and an estimated information matrix corresponding to the target channel group, at least one probability distribution parameter corresponding to a to-be-encoded feature point corresponding to the target channel group comprises:

determining, based on the at least one feature value of the at least one encoded feature point corresponding to the target channel group and a second feature matrix corresponding to the target channel group, at least one second probability distribution parameter corresponding to the to-be-encoded feature point corresponding to the target channel group; and

the determining, based on the at least one probability distribution parameter corresponding to the to-be-encoded feature point, probability distribution corresponding to the to-be-encoded feature point comprises:

determining, based on a first probability distribution parameter matrix corresponding to the target channel group, at least one first probability distribution parameter corresponding to the to-be-encoded feature point corresponding to the target channel group; and

determining, based on the at least one first probability distribution parameter and the at least one second probability distribution parameter that correspond to the to-be-encoded feature point, the probability distribution corresponding to the to-be-encoded feature point.

12. The method according to claim 9 or 11, wherein the determining, based on the at least one feature value of the at least one encoded feature point corresponding to the target channel group and a second feature matrix corresponding to the target channel group, at least one second probability distribution parameter corresponding to the to-be-encoded feature point corresponding to the target channel group comprises:

determining, based on the to-be-encoded feature point, a first target region in a feature map corresponding to the target channel group and a third target region in the second feature matrix corresponding to the target channel group;

determining, based on at least one feature value of at least one encoded feature point in the first target region and at least one corresponding first probability distribution parameter, at least one difference corresponding to the at least one encoded feature point in the first target region; and

performing linear weighting on a second feature of at least one feature point in the third target region and the at least one difference corresponding to the at least one encoded feature point in the first target region, to obtain the at least one second probability distribution parameter corresponding to the to-be-encoded feature point corresponding to the target channel group.

13. A bitstream generation method, configured to generate a bitstream according to the encoding method according to any one of claims 1 to 12.

14. A bitstream storage method, configured to store a bitstream generated according to the bitstream generation method according to claim 13.

15. A bitstream transmission method, configured to transmit a bitstream generated according to the bitstream generation method according to claim 13.

16. A decoding method, wherein the method comprises:

receiving a bitstream;
decoding the bitstream to obtain estimated information matrices of C channels, wherein C is a positive integer;
decoding the bitstream to obtain feature values of feature points of the C channels based on the estimated information matrices of the C channels, to obtain feature maps of the C channels; for a to-be-decoded feature point, determining, from N channel groups obtained by grouping the C channels, a target channel group to which a channel corresponding to the to-be-decoded feature point belongs, wherein each channel group comprises k channels, the numbers of channels, k, comprised in any two channel groups are the same or different, k is a positive integer, and N is an integer greater than 1; determining, based on at least one feature value of at least one decoded feature point corresponding to the target channel group and an estimated information matrix corresponding to the target channel group, at least one probability distribution parameter corresponding to the to-be-decoded feature point; determining, based on the at least one probability distribution parameter corresponding to the to-be-decoded feature point, probability distribution corresponding to the to-be-decoded feature point; and decoding the to-be-decoded feature point based on the probability distribution corresponding to the to-be-decoded feature point, to obtain a feature value; and

performing reconstruction based on the feature maps of the C channels, to output a reconstructed image.

17. The method according to claim 16, wherein the determining, based on at least one feature value of at least one decoded feature point corresponding to the target channel group and an estimated information matrix corresponding to the target channel group, at least one probability distribution parameter corresponding to the to-be-decoded feature point comprises:

performing linear weighting on the at least one feature value of the at least one decoded feature point corresponding to the target channel group and the estimated information matrix corresponding to the target channel group, to determine the at least one probability distribution parameter corresponding to the to-be-decoded feature point.

18. The method according to claim 17, wherein the estimated information matrix comprises estimated information of a plurality of feature points; and the performing linear weighting on the at least one feature value of the at least one decoded feature point corresponding to the target channel group and the estimated information matrix corresponding to the target channel group, to determine the at least one probability distribution parameter corresponding to the to-be-decoded feature point comprises:

determining, based on the to-be-decoded feature point, a first target region in a feature map corresponding to the target channel group and a second target region in the estimated information matrix corresponding to the target channel group; and

performing linear weighting on at least one feature value of at least one decoded feature point in the first target region and estimated information of at least one feature point in the second target region, to obtain the at least one probability distribution parameter corresponding to the to-be-decoded feature point.

19. The method according to claim 18, wherein when k is greater than 1, the determining, based on the to-be-decoded feature point, a first target region in a feature map corresponding to the target channel group and a second target region in the estimated information matrix corresponding to the target channel group comprises:

determining, as first target regions, a region of a preset size that is centered on the to-be-decoded feature point in a feature map of a first channel and a region of a preset size that is centered on a feature point corresponding to a location of the to-be-decoded feature point in a feature map of a second channel, wherein the first channel corresponds to the to-be-decoded feature point, and the second channel is a channel other than the first channel in the target channel group; and

determining, as second target regions, a region of a preset size that is centered on the to-be-decoded location in an estimated information matrix of the first channel and a region of a preset size that is centered on a location corresponding to the to-be-decoded location in an estimated information matrix of the second channel, wherein the to-be-decoded location is the location of the to-be-decoded feature point.

20. The method according to claim 18 or 19, wherein the performing linear weighting on at least one feature value of at least one decoded feature point in the first target region and estimated information of at least one feature point in the second target region, to obtain the at least one probability distribution parameter corresponding to the to-be-decoded feature point comprises:

determining a first target location based on a location other than a decoded location in the second target region, wherein the decoded location is at least one location of the at least one decoded feature point; and

performing linear weighting on the at least one feature value of the at least one decoded feature point in the first target region and estimated information of a feature point corresponding to the first target location, to obtain the at least one probability distribution parameter corresponding to the to-be-decoded feature point.

21. The method according to claim 20, wherein when k is greater than 1, the determining a first target location based on a location other than a decoded location in the second target region comprises:

    determining, as first target locations, the to-be-decoded location and at least one other undecoded location in the second target region in the estimated information matrix of the first channel and the location corresponding to the to-be-decoded location and at least one other undecoded location in the second target region in the estimated information matrix of the second channel, wherein
the first channel corresponds to the to-be-decoded feature point, and the second channel is the channel other than the first channel in the target channel group.

22. The method according to claim 20, wherein when k is greater than 1, the determining a first target location based on a location other than a decoded location in the second target region comprises:

    determining, as first target locations, the to-be-decoded location in the second target region in the estimated information matrix of the first channel and the location corresponding to the to-be-decoded location in the second target region in the estimated information matrix of the second channel, wherein
the first channel corresponds to the to-be-decoded feature point, and the second channel is the channel other than the first channel in the target channel group.

23. The method according to any one of claims 20 to 22, wherein the performing linear weighting on the at least one feature value of the at least one decoded feature point in the first target region and estimated information of a feature point corresponding to the first target location, to obtain the at least one probability distribution parameter corresponding to the to-be-decoded feature point comprises:

    obtaining a preset weight matrix corresponding to the first channel corresponding to the to-be-decoded feature point, wherein the preset weight matrix comprises weight maps of the k channels; and
performing, based on the weight maps of the k channels, linear weighting on the at least one feature value of the at least one decoded feature point in the first target region and the estimated information of the feature point corresponding to the first target location, to obtain the at least one probability distribution parameter corresponding to the to-be-decoded feature point.

24. The method according to claim 16, wherein the estimated information matrices of the C channels comprise first feature matrices of the C channels and second feature matrices of the C channels, the first feature matrix comprises first features of a plurality of feature points, the second feature matrix comprises second features of a plurality of feature points, and the at least one probability distribution parameter comprises at least one first probability distribution parameter and at least one second probability distribution parameter; and
the determining, based on at least one feature value of at least one decoded feature point corresponding to the target channel group and an estimated information matrix corresponding to the target channel group, at least one probability distribution parameter corresponding to the to-be-decoded feature point comprises:

    determining, based on the at least one feature value of the at least one decoded feature point corresponding to the target channel group and a first feature matrix corresponding to the target channel group, at least one first probability distribution parameter corresponding to the to-be-decoded feature point; and
determining, based on the at least one feature value of the at least one decoded feature point corresponding to the target channel group and a second feature matrix corresponding to the target channel group, at least one second probability distribution parameter corresponding to the to-be-decoded feature point.

25. The method according to claim 16, wherein the estimated information matrices of the C channels comprise first feature matrices of the C channels and second probability distribution parameter matrices of the C channels, the first feature matrix comprises first features of a plurality of feature points, the second probability distribution parameter matrix comprises second probability distribution parameters of a plurality of feature points, and the at least one probability distribution parameter comprises at least one first probability distribution parameter;
the determining, based on at least one feature value of at least one decoded feature point corresponding to the target channel group and an estimated information matrix corresponding to the target channel group, at least one probability distribution parameter corresponding to the to-be-decoded feature point comprises:

    determining, based on the at least one feature value of the at least one decoded feature point corresponding to the target channel group and a first feature matrix corresponding to the target channel group, at least one first probability distribution parameter corresponding to the to-be-decoded feature point; and

the determining, based on the at least one probability distribution parameter corresponding to the to-be-decoded feature point, probability distribution corresponding to the to-be-decoded feature point comprises:

determining, based on a second probability distribution parameter matrix corresponding to the target channel group, at least one second probability distribution parameter of the to-be-decoded feature point; and

determining, based on the at least one first probability distribution parameter and the at least one second probability distribution parameter that correspond to the to-be-decoded feature point, the probability distribution corresponding to the to-be-decoded feature point.

26. The method according to claim 16, wherein the estimated information matrices of the C channels comprise first probability distribution parameter matrices of the C channels and second feature matrices of the C channels, the first probability distribution parameter matrix comprises first probability distribution parameters of a plurality of feature points, the second feature matrix comprises second features of a plurality of feature points, and the at least one probability distribution parameter comprises at least one second probability distribution parameter;

the determining, based on at least one feature value of at least one decoded feature point corresponding to the target channel group and an estimated information matrix corresponding to the target channel group, at least one probability distribution parameter corresponding to the to-be-decoded feature point comprises:

determining, based on the at least one feature value of the at least one decoded feature point corresponding to the target channel group and a second feature matrix corresponding to the target channel group, at least one second probability distribution parameter corresponding to the to-be-decoded feature point; and

the determining, based on the at least one probability distribution parameter corresponding to the to-be-decoded feature point, probability distribution corresponding to the to-be-decoded feature point comprises:

determining, based on a first probability distribution parameter matrix corresponding to the target channel group, at least one first probability distribution parameter corresponding to the to-be-decoded feature point; and

determining, based on the at least one first probability distribution parameter and the at least one second probability distribution parameter that correspond to the to-be-decoded feature point, the probability distribution corresponding to the to-be-decoded feature point.

27. The method according to claim 24 or 26, wherein the determining, based on the at least one feature value of the at least one decoded feature point corresponding to the target channel group and a second feature matrix corresponding to the target channel group, at least one second probability distribution parameter corresponding to the to-be-decoded feature point comprises:

determining, based on the to-be-decoded feature point, a first target region in a feature map corresponding to the target channel group and a third target region in the second feature matrix corresponding to the target channel group;

determining, based on at least one feature value of at least one decoded feature point in the first target region and a corresponding first probability distribution parameter, at least one difference corresponding to the at least one decoded feature point in the first target region; and

performing linear weighting on a second feature of at least one feature point in the third target region and the at least one difference corresponding to the at least one decoded feature point in the first target region, to obtain the at least one second probability distribution parameter corresponding to the to-be-decoded feature point.

28. An encoder, configured to perform the encoding method according to any one of claims 1 to 12.

29. A decoder, configured to perform the decoding method according to any one of claims 16 to 27.

30. An electronic device, comprising:

a memory and a processor, wherein the memory is coupled to the processor, and

the memory stores program instructions, and when the program instructions are executed by the processor, the electronic device is enabled to perform the method according to any one of claims 1 to 27.

31. A chip, comprising one or more interface circuits and one or more processors, wherein the interface circuit is configured to: receive a signal from a memory of an electronic device, and send the signal to the processor; the signal comprises computer instructions stored in the memory; and when the processor executes the computer instructions, the electronic device is enabled to perform the method according to any one of claims 1 to 27.

32. A computer-readable storage medium, wherein the computer-readable storage medium stores a computer program, and when the computer program is run on a computer or a processor, the computer or the processor is enabled to perform the method according to any one of claims 1 to 27.

33. A computer program product, wherein the computer program product comprises a software program, and when the software program is executed by a computer or a processor, steps of the method according to any one of claims 1 to 27 are performed.

FIG. 1

S201

To-be-encoded image

S202

Feature maps of C channels

Feature map of a channel 1

Feature map of a channel 2

...

Feature map of a channel k

Feature map of a channel c1

...

Feature map of a channel ck

...

Feature map of a channel C–1

Feature map of a channel C

S204

Channel group 1

Channel group 2

...

Channel group N

Estimated information matrix of the channel 1

Estimated information matrix of the channel 2

...

Estimated information matrix of the channel k

Estimated information matrix of the channel c1

...

Estimated information matrix of the channel ck

...

Estimated information matrix of the channel C–1

Estimated information matrix of the channel C

Estimated information matrices of the C channels

S203

S207

Encoding

S206

Probability distribution

S205

Probability distribution parameters

Probability distribution parameter corresponding to a to-be-encoded feature point corresponding to the channel group 1

Probability distribution parameter corresponding to a to-be-encoded feature point corresponding to the channel group 2

...

Probability distribution parameter corresponding to a to-be-encoded feature point corresponding to the channel group N

FIG. 2

| Channel C−1 | Channel C |
|---|---|

Channel group N

...

| Channel 1 | Channel 2 | Channel 3 | Channel 4 | Channel 5 | Channel 6 |
|---|---|---|---|---|---|

Channel group 1   Channel group 2   Channel group 3

FIG. 3a

| Channel C−1 | Channel C |
|---|---|

Channel group N

...

| Channel 4 | Channel 5 | Channel 6 |
|---|---|---|

Channel group 3

| Channel 2 | Channel 3 |
|---|---|

Channel group 2

| Channel 1 |
|---|

Channel group 1

FIG. 3b

(1)

(2)

FIG. 3c

Feature maps of the C channels

S403

S4031

Target channel group to which a channel corresponding to a to-be-decoded feature point belongs

Feature value of a decoded feature point of the channel c1

Feature value of a decoded feature point of the channel c2

...

Feature value of a decoded feature point of the channel ck

Feature values of decoded feature points corresponding to the target channel group

S4032

Probability distribution parameter corresponding to the to-be-decoded feature point

S4033

Probability distribution corresponding to the to-be-decoded feature point

S4034

Feature value of the to-be-decoded feature point

S404

Reconstructed image

S401

Bitstream

TO
FIG. 4B

TO
FIG. 4B

FIG. 4A

CONT.
FROM
FIG. 4A

CONT.
FROM
FIG. 4A

| |
|---|
| Estimated information matrix of a channel 1 |
| Estimated information matrix of a channel 2 |
| ... |
| Estimated information matrix of a channel c1 |
| Estimated information matrix of a channel c2 |
| ... |
| Estimated information matrix of a channel ck |

... ← Target channel group

| |
|---|
| Estimated information matrix of a channel C–1 |
| Estimated information matrix of a channel C |

Estimated information matrices of C channels

S402

FIG. 4B

FIG. 5

EP 4 538 978 A1

S608

Encoding

S601

S607

Probability
distribution

To-be-encoded image

S606

S602

S605

Second probability
distribution
parameter
corresponding to the
to-be-encoded
feature point
corresponding to the
channel group 1

Feature maps of C channels

Feature map of a channel 1

Feature map of a channel 2

...

Feature map of a channel k

Feature map of a channel c1

...

Feature map of a channel ck

...

Feature map of a channel C–1

Feature map of a channel C

First probability
distribution
parameter
corresponding to a
to-be-encoded
feature point
corresponding to the
channel group 1

Second probability
distribution
parameter
corresponding to the
to-be-encoded
feature point
corresponding to the
channel group 2

First probability
distribution
parameter
corresponding to a
to-be-encoded
feature point
corresponding to the
channel group 2

...

...

Second probability
distribution
parameter
corresponding to the
to-be-encoded
feature point
corresponding to the
channel group N

Second feature
matrix of the
channel 1

First feature
matrix of the
channel 1

First probability
distribution
parameter
corresponding to a
to-be-encoded
feature point
corresponding to the
channel group N

Second feature
matrix of the
channel 2

First feature matrix
of the channel 2

...

...

Second feature
matrix of the
channel k

First feature matrix
of the channel k

Second feature
matrix of the
channel c1

First feature matrix
of the channel c1

Channel group 1

...

...

Second feature
matrix of the
channel ck

First feature matrix
of the channel ck

Channel group 2

...

...

Second feature
matrix of the
channel C–1

First feature matrix
of the channel C–1

...

Second feature
matrix of the
channel C

First feature matrix
of the channel C

Channel group N

S603

Second feature
matrices of the C
channels

First feature matrices
of the C channels

S604

FIG. 6

FIG. 7

FIG. 8

FIG. 9

S1008

Encoding

S1001

S1007

Probability
distribution

To-be-encoded image

S1002

S1005

Feature maps of C channels

Second probability
distribution parameter
corresponding to a to-
be-encoded feature
point corresponding to
the channel group 1

Feature map of a channel 1

Feature map of a channel 2

...

Feature map of a channel k

Feature map of a channel c1

Second probability
distribution parameter
corresponding to a to-
be-encoded feature
point corresponding to
the channel group 2

...

Feature map of a channel ck

...

Feature map of a channel C-1

Feature map of a channel C

S1006

Second probability
distribution parameter
corresponding to a to-
be-encoded feature
point corresponding to
the channel group N

First probability
distribution
parameter
corresponding to the
to-be-encoded
feature point
corresponding to the
channel group 1

First probability
distribution parameter
matrix of the channel 1

Second feature
matrix of the
channel 1

Second probability
distribution parameters

First probability
distribution parameter
matrix of the channel 2

Second feature
matrix of the
channel 2

...

...

First probability
distribution
parameter
corresponding to the
to-be-encoded
feature point
corresponding to the
channel group 2

First probability
distribution parameter
matrix of the channel k

Second feature
matrix of the
channel k

First probability
distribution parameter
matrix of the channel c1

Second feature
matrix of the
channel c1

Channel group 1

...

...

...

First probability
distribution parameter
matrix of the channel ck

Second feature
matrix of the
channel ck

Channel group 2

First probability
distribution
parameter
corresponding to the
to-be-encoded
feature point
corresponding to the
channel group N

...

...

First probability
distribution parameter
matrix of the channel C-1

Second feature
matrix of the
channel C-1

...

First probability
distribution parameter
matrix of the channel C

Second feature
matrix of the
channel C

Channel group N

First probability
distribution parameters

First probability
distribution parameter
matrices of the C channels

Second feature
matrices of the C
channels

S1003

S1004

FIG. 10

Reconstructed image — S1104

S1103

Feature maps of the C channels

Feature value of the to-be-decoded feature point — S11035

Probability distribution — S11034

Target channel group to which a channel corresponding to a to-be-decoded feature point belongs — S11031

S11033

First probability distribution parameter corresponding to the to-be-decoded feature point

Feature value of a decoded feature point of the channel c1

Feature value of a decoded feature point of the channel c2

...

Feature value of a decoded feature point of the channel ck

Feature values of decoded feature points corresponding to the target channel group

S11032

Second probability distribution parameter corresponding to the to-be-decoded feature point

First probability distribution parameter matrix of the channel 1

Second feature matrix of a channel 1

First feature matrix of the channel 2

Second feature matrix of a channel 2

...

...

First probability distribution parameter matrix of the channel c1

Second feature matrix of a channel c1

S1101

Bitstream

First probability distribution parameter matrix of the channel c2

Second feature matrix of a channel c2

...

...

First probability distribution parameter matrix of the channel ck

Second feature matrix of a channel ck

Target channel group

...

...

First probability distribution parameter matrix of the channel C−1

Second feature matrix of a channel C−1

S1102

First probability distribution parameter matrix of the channel C

Second feature matrix of a channel C

First probability distribution parameter matrices of the C channels

Second feature matrices of C channels

FIG. 11

First target region Q1

To-be-encoded feature point D

Channel c1

Feature map

Second target region Q2

To-be-encoded location L

First feature matrix

| ω1 | ω2 | ω3 |
|----|----|----|
| ω4 | ω5 | ω6 |
| ω7 | ω8 | ω9 |

Weight map corresponding to the channel c1

Linear weighting

First probability distribution parameter corresponding to the to-be-encoded feature point D

FIG. 12a

EP 4 538 978 A1

EP 4 538 978 A1

Channel c1

First target
region Q1

To-be-encoded
feature point D

Feature map

Second target
region Q2

To-be-encoded
location L

First feature matrix

| ω1 | ω2 | ω3 |
|----|----|----|
| ω4 | ω5 | 0  |
| 0  | 0  | 0  |

Weight map corresponding
to the channel c1

Linear weighting

First probability
distribution parameter
corresponding to the to-be-
encoded feature point D

FIG. 12b

FIG. 12c

FIG. 12d

FIG. 13a

Channel c1

First target region Q1

To-be-encoded feature point D

Feature map

Second target region Q2

To-be-encoded location L

First feature matrix

| ω1 | ω2 | ω3 |
|----|----|----|
| ω4 | ω5 | ω6 |
| ω7 | ω8 | ω9 |

Weight map corresponding to the channel c1

Linear weighting

First probability distribution parameter corresponding to the to-be-encoded feature point D

FIG. 13b

EP 4 538 978 A1

FIG. 14a

EP 4 538 978 A1

EP 4 538 978 A1

First target
region Q1

Channel 1

To-be-encoded
feature point D

Feature map

Second target
region Q2

To-be-encoded
location L

First probability
distribution
parameter matrix

Third target
region Q3

To-be-encoded
location L

Second feature
matrix

| ω1 | ω2 | ω3 |
| ω4 | ω5 | ω6 |
| ω7 | ω8 | ω9 |

Weight map corresponding
to the channel c1

Linear
weighting

Second probability
distribution parameter
corresponding to the to-be-
encoded feature point D

FIG. 14b

1500

1501

Processor

1503

1504

Memory

1502

Transceiver/Transceiver
pin

FIG. 15

# INTERNATIONAL SEARCH REPORT

| International application No. |
|---|
| **PCT/CN2023/095601** |

| A. | CLASSIFICATION OF SUBJECT MATTER |
|---|---|

G06T 9/00(2006.01)i

According to International Patent Classification (IPC) or to both national classification and IPC

| B. | FIELDS SEARCHED |
|---|---|

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 人工智能, 图像, 压缩, 编码, 解码, 通道, 概率, 分布, 函数, 参数, 线性, 加权, 权值, 权重, 区域, 尺寸; AI, image, compress, code, encode, decode, channel, probability, distribution, function, parameter, linear, weight+, area, region, size

| C. | DOCUMENTS CONSIDERED TO BE RELEVANT |
|---|---|

| Category* | Citation of document, with indication, where appropriate, of the relevant passages | Relevant to claim No. |
|---|---|---|
| E | CN 116170596 A (HUAWEI TECHNOLOGIES CO., LTD.) 26 May 2023 (2023-05-26) description, paragraphs 70-318, and figures 1-12 | 1, 13-16, 28-33 |
| A | CN 113095333 A (BEIJING UNIVERSITY OF POSTS AND TELECOMMUNICATIONS) 09 July 2021 (2021-07-09) entire document | 1-33 |
| A | CN 111641832 A (HANGZHOU HIKVISION DIGITAL TECHNOLOGY CO., LTD.) 08 September 2020 (2020-09-08) entire document | 1-33 |
| A | CN 112329761 A (BEIJING YIZHEN XUESI EDUCATION TECHNOLOGY CO., LTD.) 05 February 2021 (2021-02-05) entire document | 1-33 |
| A | US 8666179 B2 (NTT DOCOMO INC.) 04 March 2014 (2014-03-04) entire document | 1-33 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 July 2023** | **09 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095601**

| Patent document cited in search report | | | Publication date (day/month/year) | Patent family member(s) | | | Publication date (day/month/year) |
|---|---|---|---|---|---|---|---|
| CN | 116170596 | A | 26 May 2023 | None | | | |
| CN | 113095333 | A | 09 July 2021 | CN | 113095333 | B | 05 August 2022 |
| CN | 111641832 | A | 08 September 2020 | CN | 111641832 | B | 25 March 2022 |
| CN | 112329761 | A | 05 February 2021 | None | | | |
| US | 8666179 | B2 | 04 March 2014 | US | 2012045141 | A1 | 23 February 2012 |
| | | | | JP | 2010251946 | A | 04 November 2010 |
| | | | | JP | 5258664 | B2 | 07 August 2013 |
| | | | | EP | 2421267 | A1 | 22 February 2012 |
| | | | | EP | 2421267 | A4 | 28 January 2015 |
| | | | | WO | 2010119757 | A1 | 21 October 2010 |
| | | | | TW | 201043039 | A | 01 December 2010 |
| | | | | TWI | 521890 | B | 11 February 2016 |
| | | | | CN | 102396229 | A | 28 March 2012 |
| | | | | CN | 102396229 | B | 16 July 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210796212X